(19) **Europäisches Patentamt / European Patent Office / Office européen des brevets**

(11) **EP 4 545 290 A1**

(12) **EUROPEAN PATENT APPLICATION**
published in accordance with Art. 153(4) EPC

(43) Date of publication:
**30.04.2025 Bulletin 2025/18**

(21) Application number: **23819898.0**

(22) Date of filing: **08.06.2023**

(51) International Patent Classification (IPC):
*B32B 7/023* (2019.01)        *B29C 45/14* (2006.01)
*B29C 51/08* (2006.01)        *B32B 3/30* (2006.01)
*B32B 27/00* (2006.01)        *B60R 13/00* (2006.01)
*G02B 3/08* (2006.01)         *G02B 5/02* (2006.01)
*G02B 5/10* (2006.01)         *G02B 5/32* (2006.01)

(52) Cooperative Patent Classification (CPC):
**B29C 45/14; B29C 51/08; B32B 3/30; B32B 7/023;
B32B 27/00; B60R 13/00; G02B 3/08; G02B 5/02;
G02B 5/10; G02B 5/32**

(86) International application number:
**PCT/JP2023/021434**

(87) International publication number:
**WO 2023/238918 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.06.2022 JP 2022093267
30.06.2022 JP 2022106566
31.08.2022 JP 2022138774**

(71) Applicant: **Dai Nippon Printing Co., Ltd.
Tokyo 162-8001 (JP)**

(72) Inventors:
• **YODA, Shinya
Tokyo 162-8001 (JP)**
• **KOYAMA, Keisuke
Tokyo 162-8001 (JP)**

(74) Representative: **Müller-Boré & Partner
Patentanwälte PartG mbB
Friedenheimer Brücke 21
80639 München (DE)**

(54) **DECORATIVE LAMINATE, TRANSFER SHEET, DECORATIVE MEMBER, AND MOBILE BODY**

(57)    A decorative layered body 10 includes a unit optical element 13. In an outer region 13b of the unit optical element 13, the total light reflectance and the diffuse light reflectance measured from a surface 11 side of the decorative layered body 10 according to JIS Z 8722:2009 are referred to as outer total light reflectance ($R_{SCI}(O)$) and outer diffuse light reflectance ($R_{SCE}(O)$), respectively. Then the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy: $R_{SCI}(O) \leq 45\%$; $R_{SCE}(O) \leq 40\%$; and $1.1 \leq R_{SCI}(O) / R_{SCE}(O) \leq 18$.

[FIG. 3]

**Description**

Technical Field

The present disclosure relates to a decorative layered body, a transfer sheet, a decorative member, and a mobile body.

Background Art

Decorative members and decorative layered bodies for decorating interior and exterior products (such as instrument panels) of automobiles, household electrical appliances, houses, etc. are a known art (see, for example, JP6774387B2). PTL 1 discloses a decorative glass panel including a glass substrate having a curved surface on at least part of one side and a decorative layered body formed on the one side of the glass substrate. The decorative layered body includes a relief pattern layer having a relief pattern on its upper surface and a vapor-deposited metal layer formed on the upper surface of the relief pattern layer.

The above decorative members and decorative layered bodies are required to have good design characteristics, particularly good design characteristics with a sense of three-dimensionality. With a decorative member having a sense of three-dimensionality, rich design expression with a sense of luxury is available.

One known decorative sheet includes a vapor-deposited metal layer, as disclosed in JP2011-056675A. In the decorative sheet including the vapor-deposited metal layer, light entering from the front side of the decorative sheet is reflected with high intensity from the vapor-deposited metal layer, and the design characteristics of the decorative sheet are thereby improved.

However, when the decorative sheet including the vapor-deposited metal layer is formed into an intended shape, the vapor-deposited metal layer may crack as the decorative sheet is stretched and therefore whiten or delaminate. The whitened or delaminated vapor-deposited metal layer cannot reflect light as desired. In other words, the decorative sheet including the vapor-deposited metal layer has a problem in terms of formability.

A first disclosure has been made in consideration of the above problem, and it is an object of the first disclosure to improve the design characteristics of a decorative layered body or a decorative member.

A second disclosure has been made in consideration of the above problem, and it is an object of the second disclosure to improve the formability of a decorative layered body.

Disclosure of Invention

<First disclosure>

It is an object of the first disclosure to improve the design characteristics of a decorative layered body or a decorative member.

A decorative layered body of the first disclosure is a decorative layered body including a profiled layer having a profiled surface on which a relief structure is formed,

wherein the decorative layered body includes at least one unit optical element that reflects, refracts, and/or diffracts incident light according to the relief structure,
wherein, in the at least one unit optical element, the profiled surface includes a plurality of inclined surfaces arranged in a direction toward a reference line extending in a normal direction normal to the decorative layered body and inclined toward the reference line and a plurality of connection surfaces connecting adjacent ones of the inclined surfaces,
wherein an angle of each of the inclined surfaces with respect to the normal direction is larger than angles, with respect to the normal direction, of corresponding ones of the connection surfaces that are connected to the each of the inclined surfaces,
wherein each of the at least one unit optical element includes a central region that is a region including the reference line and an outer region that is located between the central region and an edge portion of the each of the at least one unit optical element in a direction in which the inclined surfaces and the connection surfaces are arranged,
wherein a total light reflectance and a diffuse light reflectance measured from a side of one surface of the decorative layered body according to JIS Z 8722:2009 in the outer region are referred to as outer total light reflectance ($R_{SCI}(O)$) and outer diffuse light reflectance ($R_{SCE}(O)$), respectively, and wherein the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \le 45\%,$$

$$R_{SCE}(O) \le 40\%,$$

and

$$1.1 \le R_{SCI}(O) \, / \, R_{SCE}(O) \le 18.$$

In the decorative layered body of the first disclosure,

the profiled layer may have a lens structure;
the inclined surfaces may be lens surfaces; and the connection surfaces may be rising surfaces.

In the decorative layered body of the first disclosure,
the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) may satisfy the following formulas:

$$R_{SCI}(O) \le 12\%,$$

$$R_{SCE}(O) \le 8.5\%,$$

and

$$1.4 \le R_{SCI}(O) \, / \, R_{SCE}(O) \le 8.$$

In the decorative layered body of the first disclosure,
a diffuse light reflectance measured from a side of one surface of the decorative layered body according to JIS Z 8722:2009 in the central region is referred to as central diffuse light reflectance ($R_{SCE}(C)$), and the ratio ($R_{SCE}(C) / R_{SCE}(O)$) of the central diffuse light reflectance ($R_{SCE}(C)$) to the outer diffuse light reflectance ($R_{SCE}(O)$) may satisfy the following formula:

$$0.1 \le R_{SCE}(C) \, / \, R_{SCE}(O) \le 0.9.$$

In the decorative layered body of the first disclosure,
the ratio ($R_{SCE}(C) / R_{SCE}(O)$) of the central diffuse light reflectance ($R_{SCE}(C)$) to the outer diffuse light reflectance ($R_{SCE}(O)$) may satisfy the following formula:

$$0.1 \le R_{SCE}(C) \, / \, R_{SCE}(O) \le 0.7.$$

A decorative layered body of the first disclosure is a decorative layered body including a profiled layer having a profiled surface on which a relief structure is formed,

wherein the decorative layered body includes at least one unit optical element that reflects, refracts, and/or diffracts incident light according to the relief structure,

wherein, in the at least one unit optical element, the profiled surface includes a plurality of inclined surfaces arranged in a direction toward a reference line extending in a normal direction normal to the decorative layered body and inclined toward the reference line and a plurality of connection surfaces connecting adjacent ones of the inclined surfaces,

wherein an angle of each of the inclined surfaces with respect to the normal direction is larger than angles, with respect to the normal direction, of corresponding ones of the connection surfaces that are connected to the each of the inclined surfaces,

wherein each of the at least one unit optical element includes a central region that is a region including the reference line and an outer region that is located between the central region and an edge portion of the each of the at least one unit optical element in a direction in which the inclined surfaces and the connection surfaces are arranged,

wherein a diffuse light reflectance measured from one side of the decorative layered body according to JIS Z 8722:2009 in the outer region is referred to as outer diffuse light reflectance ($R_{SCE}(O)$), wherein a diffuse light reflectance measured from a side of the one surface according to JIS Z 8722:2009 in the central region is referred to as central diffuse light reflectance ($R_{SCE}(C)$), and wherein the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.9.$$

In the decorative layered body of the first disclosure,

the profiled layer may have a lens structure;

the inclined surfaces may be lens surfaces; and the connection surfaces may be rising surfaces.

In the decorative layered body of the first disclosure,
the ratio ($R_{SCE}(C) / R_{SCE}(O)$) of the central diffuse light reflectance ($R_{SCE}(C)$) to the outer diffuse light reflectance ($R_{SCE}(O)$) may satisfy the following formula:

$$0.1 \leq R_{SCE}(C) / R_{SCE}(O) \leq 0.7.$$

A decorative layered body of the first disclosure is a decorative layered body including a profiled layer having a profiled surface on which a relief structure is formed,

wherein the decorative layered body has at least one unit optical element that reflects, refracts, and/or diffracts incident light according to the relief structure,
wherein, in the at least one unit optical element, the profiled surface includes a plurality of inclined surfaces arranged in a direction toward a reference line extending in a normal direction normal to the decorative layered body and inclined toward the reference line and a plurality of connection surfaces connecting adjacent ones of the inclined surfaces,
wherein an angle of each of the inclined surfaces with respect to the normal direction is larger than angles, with respect to the normal direction, of corresponding ones of the connection surfaces that are connected to the each of the inclined surfaces,
wherein a total light reflectance and a diffuse light reflectance measured from a side of one surface of the decorative layered body according to JIS Z 8722:2009 in a region that includes at least 40% of the at least one unit optical element when the decorative layered body is viewed in plan are referred to as overall total light reflectance ($R_{SCI}(E)$) and overall diffuse light reflectance ($R_{SCE}(E)$), respectively, and wherein the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) satisfy the following formulas:

$$R_{SCI}(E) \leq 35\%,$$

$$R_{SCE}(E) \leq 25\%,$$

and

$$1.3 \leq R_{SCI}(E) / R_{SCE}(E) \leq 15.$$

In the decorative layered body of the first disclosure,

the profiled layer may have a lens structure;
the inclined surfaces may be lens surfaces; and the connection surfaces may be rising surfaces.

In the decorative layered body of the first disclosure,
the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) may satisfy the following formulas:

$$R_{SCI}(E) \leq 12\%,$$

$$R_{SCE}(E) \leq 6\%,$$

and

$$1.5 \leq R_{SCI}(E) / R_{SCE}(E) \leq 6.$$

The decorative layered body of the first disclosure may further include a transmittance adjusting layer that is disposed outward of the profiled layer on a side of the one surface side of the decorative layered body and adjusts visible light transmittance.

The decorative layered body of the first disclosure may further include a brightness adjusting layer that covers the profiled surface of the profiled layer, and

the brightness adjusting layer may be a reflective layer.

The decorative layered body of the first disclosure may further include a brightness adjusting layer that covers the profiled surface of the profiled layer, and

the brightness adjusting layer may be a refractive index modulation layer having a refractive index different from a refractive index of the profiled surface.

The decorative layered body of the first disclosure may further include:

a brightness adjusting layer that covers the profiled surface of the profiled layer and whose surface opposite to a surface facing the profiled layer has a surface relief corresponding to the relief structure of the profiled surface; and

a filling layer that fills in the surface relief of the brightness adjusting layer, and

the brightness adjusting layer may be a refractive index modulation layer having a refractive index different from a refractive index of the filling layer.

The decorative layered body of the first disclosure may further include a brightness adjusting layer that covers the profiled surface of the profiled layer, and

the brightness adjusting layer may contain a high refractive index material.

**In** the decorative layered body of the first disclosure,

the high refractive index material may include titanium oxide, zirconium oxide, or silicon oxide.

The decorative layered body of the first disclosure may further include a brightness adjusting layer that covers the profiled surface of the profiled layer, and

the brightness adjusting layer may contain a pigment and/or a dye.

**In** the decorative layered body of the first disclosure,

the profiled layer may contain a pigment and/or a dye.

In the decorative layered body of the first disclosure,

the pigment may be a light reflective pigment or a light absorptive pigment.

In the decorative layered body of the first disclosure,

the pigment may include carbon black, an inorganic pigment, a phthalocyanine-based pigment, a quinacridone-based pigment, an isoindolinone-based pigment, a condensed azo-based pigment, a dioxazine-based pigment, an iron oxide pigment, or a composite metal oxide pigment.

The decorative layered body of the first disclosure may further include a brightness adjusting layer that covers the profiled surface of the profiled layer, and

a surface of the brightness adjusting layer that is opposite to a surface facing the profiled layer may have a surface relief corresponding to the relief structure.

In the decorative layered body of the first disclosure,

the brightness adjusting layer may have an average thickness less than or equal to 50% of a height of the relief structure.

The decorative layered body of the first disclosure may further include:

a brightness adjusting layer that covers the profiled surface of the profiled layer; and

an additional brightness adjusting layer disposed outward of the brightness adjusting layer and the profiled layer on a side of the other surface of the decorative layered body.

A transfer sheet of the first disclosure includes:

a substrate; and
the above-described decorative layered body.

In the transfer sheet of the first disclosure, the decorative layered body may include a release layer that forms a surface of the decorative layered body that is in contact with the substrate.

A decorative member of the first disclosure may include:

a molded portion; and
the above-described decorative layered body that covers at least part of the molded portion.

A mobile body of the first disclosure includes the above-described decorative layered body.

A decorative member of the first disclosure is a decorative member including a decorative layered body including a profiled layer,

wherein the profiled layer has a profiled surface on which a relief structure is formed,

wherein the decorative layered body includes at least one unit optical element that reflects, refracts, and/or diffracts incident light according to the relief structure,

wherein, in the at least one unit optical element, the profiled surface includes a plurality of inclined surfaces arranged in a direction toward a reference line extending in a normal direction normal to the decorative layered body and inclined toward the reference line and a plurality of connection surfaces connecting adjacent ones of the inclined surfaces,

wherein an angle of each of the inclined surfaces with respect to the normal direction is larger than angles, with respect to the normal direction, of corresponding ones of the connection surfaces that are connected to the each of the inclined surfaces,

wherein each of the at least one unit optical element includes a central region that is a region including the reference line and an outer region that is located between the central region and an edge portion of the each of the at least one unit optical element in a direction in which the inclined surfaces and the connection surfaces are arranged,

wherein a total light reflectance and a diffuse light reflectance measured from a front surface of the decorative member according to JIS Z 8722:2009 in a region that overlaps the outer region when the decorative layered body is viewed in plan are referred to as outer total light reflectance ($R_{SCI}(O)$) and outer diffuse light reflectance ($R_{SCE}(O)$), respectively, and wherein the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \leq 45\%,$$

$$R_{SCE}(O) \leq 40\%,$$

and

$$1.1 \leq R_{SCI}(O) / R_{SCE}(O) \leq 18.$$

In the decorative member of the first disclosure,

the profiled layer may have a lens structure;
the inclined surfaces may be lens surfaces; and the connection surfaces may be rising surfaces.

In the decorative member of the first disclosure, the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) may satisfy the following formulas:

$$R_{SCI}(O) \leq 12\%,$$

$$R_{SCE}(O) \leq 8.5\%,$$

and

$$1.4 \leq R_{SCI}(O) / R_{SCE}(O) \leq 8.$$

In the decorative member of the first disclosure,
a diffuse light reflectance measured from the front surface of the decorative member according to JIS Z 8722:2009 in a region that overlaps the central region of the at least one unit optical element when the decorative layered body is viewed in plan is referred to as central diffuse light reflectance ($R_{SCE}(C)$), and the ratio ($R_{SCE}(C) / R_{SCE}(O)$) of the central diffuse light reflectance ($R_{SCE}(C)$) to the outer diffuse light reflectance ($R_{SCE}(O)$) may satisfy the following formula:

$$0.1 \leq R_{SCE}(C) / R_{SCE}(O) \leq 0.9.$$

In the decorative member of the first disclosure,
the ratio ($R_{SCE}(C) / R_{SCE}(O)$) of the central diffuse light reflectance ($R_{SCE}(C)$) to the outer diffuse light reflectance ($R_{SCE}(O)$) may satisfy the following formula:

$$0.1 \leq R_{SCE}(C) / R_{SCE}(O) \leq 0.7.$$

A decorative member of the first disclosure is a decorative member including a decorative layered body including a profiled layer,

wherein the profiled layer has a profiled surface on which a relief structure is formed,

wherein the decorative layered body includes at least one unit optical element that reflects, refracts, and/or diffracts incident light according to the relief structure,

wherein, in the at least one unit optical element, the profiled surface includes a plurality of inclined surfaces arranged in a direction toward a reference line extending in a normal direction normal to the decorative layered body and inclined toward the reference line and a plurality of connection surfaces connecting adjacent ones of the inclined surfaces,

wherein an angle of each of the inclined surfaces with respect to the normal direction is larger than angles, with respect to the normal direction, of corresponding ones of the connection surfaces that are connected to the each of the inclined surfaces,

wherein each of the at least one unit optical element includes a central region that is a region including the reference line and an outer region that is located between the central region and an edge portion of the each of the at least one unit optical element in a direction in which the inclined surfaces and the connection surfaces are arranged,

wherein a diffuse light reflectance measured from a front surface of the decorative member according to JIS Z 8722:2009 in a region that overlaps the outer region when the decorative layered body is viewed in plan is referred to as outer diffuse light reflectance ($R_{SCE}(O)$), wherein a diffuse light reflectance measured from the front surface side according to JIS Z 8722:2009 in a region that overlaps the central region when the decorative layered body is viewed in plan is referred to as central diffuse light reflectance ($R_{SCE}(C)$), and wherein the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.9.$$

In the decorative member of the first disclosure,

the profiled layer may have a lens structure;

the inclined surfaces may be lens surfaces; and the connection surfaces may be rising surfaces.

In the decorative member of the disclosure,
the ratio ($R_{SCE}(C) / R_{SCE}(O)$) of the central diffuse light reflactance ($R_{SCE}(C)$) to the outer diffuse light reflectance ($R_{SCE}(O)$) may satisfy the following formula:

$$0.1 \leq R_{SCE}(C) / R_{SCE}(O) \leq 0.7.$$

A decorative member of the first disclosure is a decorative member including a decorative layered body including a profiled layer,

wherein the profiled layer has a profiled surface on which a relief structure is formed,

wherein the decorative layered body includes at least one unit optical element that reflects, refracts, and/or diffracts incident light according to the relief structure,

wherein, in the at least one unit optical element, the profiled surface includes a plurality of inclined surfaces arranged in a direction toward a reference line extending in a normal direction normal to the decorative layered body and inclined toward the reference line and a plurality of connection surfaces connecting adjacent ones of the inclined surfaces,

wherein an angle of each of the inclined surfaces with respect to the normal direction is larger than angles, with respect to the normal direction, of corresponding ones of the connection surfaces that are connected to the each of the inclined surfaces,

wherein a total light reflectance and a diffuse light reflectance measured from a front surface of the decorative member according to JIS Z 8722:2009 in a region that includes at least 40% of the at least one unit optical element when the decorative layered body is viewed in plan are referred to as overall total light reflectance ($R_{SCI}(E)$) and overall diffuse light reflectance ($R_{SCE}(E)$), respectively, and wherein the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) satisfy the following formulas:

$$R_{SCI}(E) \leq 35\%,$$

$$R_{SCE}(E) \leq 25\%,$$

and

$$1.3 \leq R_{SCI}(E) / R_{SCE}(E) \leq 15.$$

In the decorative member of the first disclosure,
the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) may satisfy the following formulas:

$$R_{SCI}(E) \leq 12\%,$$

$$R_{SCE}(E) \leq 6\%,$$

and

$$1.5 \leq R_{SCI}(E) / R_{SCE}(E) \leq 6.$$

The decorative member of the first disclosure may further include a molded portion disposed outward of the decorative layered body on the front surface of the decorative member, and
the molded portion may adjust visible light transmittance.
In the decorative member of the first disclosure,

the decorative layered body may further include a transmittance adjusting layer that is disposed outward of the profiled layer on the front surface of the decorative member and that adjusts visible light transmittance.

In the decorative member of the first disclosure,

the decorative layered body may further include a brightness adjusting layer that covers the profiled surface of the profiled layer, and
the brightness adjusting layer may be a reflective layer.

In the decorative member of the first disclosure,

the decorative layered body may further include a brightness adjusting layer that covers the profiled surface of the profiled layer, and

the brightness adjusting layer may be a refractive index modulation layer having a refractive index different from a refractive index of the profiled layer.

In the decorative member of the first disclosure,
the decorative layered body may further include:

a brightness adjusting layer that covers the profiled surface of the profiled layer and whose surface opposite to a surface facing the profiled layer has a surface relief corresponding to the relief structure of the profiled surface; and

a filling layer that fills in the surface relief of the brightness adjusting layer, and

the brightness adjusting layer may be a refractive index modulation layer having a refractive index different from a refractive index of the filling layer.

In the decorative member of the first disclosure,

the decorative layered body may further include a brightness adjusting layer that covers the profiled surface of the profiled layer, and

the brightness adjusting layer may contain a high refractive index material.

In the decorative member of the first disclosure,
the high refractive index material may include titanium oxide, zirconium oxide, or silicon oxide.
In the decorative member of the first disclosure,

the decorative layered body may further include a brightness adjusting layer that covers the profiled surface of the profiled layer, and
the brightness adjusting layer may contain a pigment and/or a dye.

In the decorative member of the first disclosure,
the profiled layer may contain a pigment and/or a dye.
In the decorative member of the first disclosure,
the pigment may be a light reflective pigment or a light absorptive pigment.
In the decorative member of the first disclosure,
the pigment may include carbon black, an inorganic pigment, a phthalocyanine-based pigment, a quinacridone-based pigment, an isoindolinone-based pigment, a condensed azo-based pigment, a dioxazine-based pigment, an iron oxide pigment, or a composite metal oxide pigment.
In the decorative member of the first disclosure,

the decorative layered body may further include a brightness adjusting layer that covers the profiled surface of the profiled layer, and
a surface of the brightness adjusting layer that is opposite to a surface facing the profiled layer may have a surface relief corresponding to the relief structure.

In the decorative member of the first disclosure,

the brightness adjusting layer may have an average thickness less than or equal to 50% of a height of the relief structure.

In the decorative member of the first disclosure,
the decorative layered body may further include:

a brightness adjusting layer that covers the profiled surface of the profiled layer; and
an additional brightness adjusting layer disposed outward of the brightness adjusting layer and the profiled layer on a side of the other surface of the decorative layered body.

A mobile body of the first disclosure includes the above-described decorative member.

According to the first disclosure, the design characteristics of the decorative layered body or the decorative member can be improved.

<Second disclosure>

An object of the second disclosure is to improve the formability of a decorative layered body.

A decorative layered body of the second disclosure includes:

a first layer having a relief structure; and
a second layer that covers a relief surface of the relief structure,
wherein the relief structure includes a plurality of protruding portions and recessed portions formed between the plurality of protruding portions,
wherein a depth of each of the recessed portions is 10 $\mu$m or less,
wherein a width of each of the recessed portions at a height level of apexes of the protruding portions is 20 $\mu$m or less,
wherein the second layer contains a plurality of particles, and
wherein the particles have an average particle diameter of 300 nm or less.

In the decorative layered body of the second disclosure,

the depth of each of the recessed portions may be 5 $\mu$m or less, and
the average particle diameter of the particles may be 100 nm or less.

In the decorative layered body of the second disclosure,
a value obtained by dividing the width of each of the recessed portions at half the depth of the each of the recessed portions by the average particle diameter of the particles may be 15 or more.

In the decorative layered body of the second disclosure,
the second layer may further contain a binder resin.

In the decorative layered body of the second disclosure,
a surface of the second layer that is opposite to a surface facing the first layer may have a surface relief corresponding to the relief structure.

In the decorative layered body of the second disclosure,
the second layer has an average thickness less than or equal to 50% of a height of the relief structure.

In the decorative layered body of the second disclosure,

the second layer may be a brightness adjusting layer, and
the decorative layered body may further include an additional brightness adjusting layer.

A decorative layered body of the second disclosure includes

a layer having a relief structure,
wherein the relief structure includes a plurality of protruding portions and a plurality of recessed portions formed between the plurality of protruding portions,
wherein a height of each of the protruding portions is 10 $\mu$m or less,
wherein each of the protruding portions has a base width that is a width of the each of the protruding portions at a height level of bottoms of the recessed portions,
wherein the base width of a protruding portion with the smallest base width among the plurality of protruding portions is 20 $\mu$m or less,
wherein the layer contains a plurality of particles, and
wherein the particles have an average particle diameter of 300 nm or less.

In the decorative layered body of the second disclosure,

the height of each of the protruding portions may be 5 μm or less, and
the average particle diameter of the particles may be 100 nm or less.

In the decorative layered body of the second disclosure,
a value obtained by dividing the width of each of the protruding portions at half the height of the each of the protruding portions by the average particle diameter of the particles may be 15 or more.
In the decorative layered body of the second disclosure,
the layer may further contain a binder resin.
In the decorative layered body of the second disclosure,

the decorative layered body may include at least one unit optical element that reflects, refracts, and/or diffracts incident light according to the relief structure;
in the at least one unit optical element, a relief surface of the relief structure may include a plurality of inclined surfaces arranged in a direction toward a reference line extending in a normal direction normal to the decorative layered body and inclined toward the reference line and a plurality of connection surfaces connecting adjacent ones of the inclined surfaces; and
an angle of each of the inclined surfaces with respect to the normal direction may be larger than angles, with respect to the normal direction, of corresponding ones of the connection surfaces that are connected to the each of the inclined surfaces.

In the decorative layered body of the second disclosure,

the relief structure may be a lens structure;
the inclined surfaces may be lens surfaces; and
the connection surfaces may be rising surfaces.

In the decorative layered body of the second disclosure,
the relief structure may form a group of parallel straight lines or a group of parallel curved lines when the decorative layered body is viewed in plan.
In the decorative layered body of the second disclosure,
the relief structure may form an embossed hologram.
In the decorative layered body of the second disclosure,
the particles may include a high refractive index material.
In the decorative layered body of the second disclosure,
the high refractive index material may include titanium oxide, zirconium oxide, or silicon oxide.
In the decorative layered body of the second disclosure,
the particles may include a pigment and/or a dye.
In the decorative layered body of the second disclosure,
the pigment may be a light reflective pigment or a light absorptive pigment.
In the decorative layered body of the second disclosure,
the particles may include carbon black, an inorganic pigment, an iron oxide pigment, or a composite metal oxide pigment.
A transfer sheet of the second disclosure includes:

a substrate; and
the above-described decorative layered body.

A decorative member of the second disclosure includes:

a decorative layered body; and
a molded portion facing one surface of the decorative layered body.

A mobile body of the second disclosure includes the above-described decorative layered body.
A decorative layered body of the second disclosure includes:

a profiled layer having a relief structure; and

a brightness adjusting layer that covers a relief surface of the relief structure,

wherein the relief structure includes a plurality of protruding portions and recessed portions formed between the plurality of protruding portions,

wherein the brightness adjusting layer has a thickness smaller than a depth of each of the recessed portions, and

wherein the thickness of the brightness adjusting layer is nonuniform.

In the decorative layered body of the second disclosure,

the decorative layered body may include at least one unit optical element that reflects, refracts, and/or diffracts incident light according to the relief structure;

in the at least one unit optical element, a relief surface of the relief structure may include a plurality of inclined surfaces arranged in a direction toward a reference line extending in a normal direction normal to the decorative layered body and inclined toward the reference line and a plurality of connection surfaces connecting adjacent ones of the inclined surfaces;

an angle of each of the inclined surfaces with respect to the normal direction may be larger than angles, with respect to the normal direction, of corresponding ones of the connection surfaces that are connected to the each of the inclined surfaces;

the brightness adjusting layer on one of the inclined surfaces may have a first thickness;

the brightness adjusting layer on another one of the inclined surfaces may have a second thickness; and

the first thickness may differ from the second thickness.

In the decorative layered body of the second disclosure,

the relief structure may have a lens structure;

the inclined surfaces may be lens surfaces; and

the connection surfaces may be rising surfaces.

In the decorative layered body of the second disclosure,
the absolute difference between the first thickness and the second thickness may be 100 nm or more.

In the decorative layered body of the second disclosure,

the decorative layered body may include at least one unit optical element that reflects, refracts, and/or diffracts incident light according to the relief structure;

in the at least one unit optical element, a relief surface of the relief structure may include a plurality of inclined surfaces arranged in a direction toward a reference line extending in a normal direction normal to the decorative layered body and inclined toward the reference line and a plurality of connection surfaces connecting adjacent ones of the inclined surfaces;

an angle of each of the inclined surfaces with respect to the normal direction may be larger than angles, with respect to the normal direction, of corresponding ones of the connection surfaces that are connected to the each of the inclined surfaces; and

the thickness of the brightness adjusting layer on one of the inclined surfaces may be nonuniform.

In the decorative layered body of the second disclosure,

the relief structure may be a lens structure;

the inclined surfaces may be lens surfaces; and

the connection surfaces may be rising surfaces.

In the decorative layered body of the second disclosure,
the absolute difference between maximum and minimum values of the thickness of the brightness adjusting layer on the one of the inclined surfaces may be 100 nm or more.
In the decorative layered body of the second disclosure,
a surface of the brightness adjusting layer that is opposite to a surface facing the profiled layer may have a surface relief corresponding to the relief structure.
In the decorative layered body of the second disclosure,
the brightness adjusting layer may have an average thickness less than or equal to 50% of a height of the relief structure.
The decorative layered body of the second disclosure may further include an additional brightness adjusting layer.
A transfer sheet of the second disclosure includes:

a substrate; and
the above-described decorative layered body.

A decorative member of the second disclosure includes:

a decorative layered body; and
a molded portion facing one surface of the decorative layered body.

A mobile body of the second disclosure includes the above-described decorative layered body.
According to the second disclosure, the formability of the decorative layered body can be improved.

Brief Description of Drawings

[Fig. 1] Fig. 1 is an illustration explaining first and second embodiments and is a perspective view showing a mobile body including a decorative member.

[Fig. 2] Fig. 2 is a cross-sectional view taken along line II-II in Fig. 1 and shows the decorative member in Fig. 1 together with a sensor.

[Fig. 3] Fig. 3 is a cross-sectional view showing the structure of the decorative member according to each of the first and second embodiments.

[Fig. 4] Fig. 4 is a partially enlarged plan view showing a decorative layered body according to each of the first and second embodiments.

[Fig. 5] Fig. 5 is a cross-sectional view taken along line V-V in Fig. 4.

[Fig. 6] Fig. 6 is an enlarged illustration showing a portion surrounded by a chain double-dashed line in the cross section shown in Fig. 5.

[Fig. 7] Fig. 7 is an enlarged plan view showing a reflective layer of the decorative layered body shown in Fig. 5.

[Fig. 8] Fig. 8 is an illustration for explaining a method for measuring total light reflectance and diffuse light reflectance.

[Fig. 9] Fig. 9 is an illustration for explaining the method for measuring the total light reflectance and the diffuse light reflectance.

[Fig. 10] Fig. 10 is an illustration for explaining the method for measuring the total light reflectance and the diffuse light reflectance.

[Fig. 11] Fig. 11 is an illustration for explaining the method for measuring the total light reflectance and the diffuse light reflectance.

[Fig. 12] Fig. 12 is an illustration for explaining the effect of the decorative layered body according to each of the first and second embodiments.

[Fig. 13A] Fig. 13A is an illustration explaining an example of a method for producing the decorative layered body and a transfer sheet according to each of the first and second embodiments.

[Fig. 13B] Fig. 13B is an illustration explaining the example of the method for producing the decorative layered body and the transfer sheet according to each of the first and second embodiments.

[Fig. 13C] Fig. 13C is an illustration explaining the example of the method for producing the decorative layered body and the transfer sheet according to each of the first and second embodiments.

[Fig. 13D] Fig. 13D is an illustration explaining the example of the method for producing the decorative layered body and the transfer sheet according to each of the first and second embodiments.

[Fig. 13E] Fig. 13E is an illustration explaining the example of the method for producing the decorative layered body and the transfer sheet according to each of the first and second embodiments.

[Fig. 13F] Fig. 13F is an illustration explaining the example of the method for producing the decorative layered body and the transfer sheet according to each of the first and second embodiments.

[Fig. 14] Fig. 14 is a cross-sectional view showing a modification of the decorative layered body and the transfer sheet according to each of the first and second embodiments.

[Fig. 15] Fig. 15 is a cross-sectional view showing another modification of the decorative layered body according to each of the first and second embodiments.

[Fig. 16] Fig. 16 is a cross-sectional view showing still another modification of the decorative layered body according to each of the first and second embodiments.

[Fig. 17] Fig. 17 corresponds to Fig. 3 and is a cross-sectional view showing a modification of the decorative member according to each of the first and second embodiments.

[Fig. 18A] Fig. 18A is an illustration explaining an example of a method for producing the decorative layered body shown in Fig. 17.

[Fig. 18B] Fig. 18B is an illustration explaining the example of the method for producing the decorative layered body shown in Fig. 17.

[Fig. 18C] Fig. 18C is an illustration explaining the example of the method for producing the decorative layered body shown in Fig. 17.

[Fig. 18D] Fig. 18D is an illustration explaining the example of the method for producing the decorative layered body shown in Fig. 17.

[Fig. 19] Fig. 19 is an illustration corresponding to Fig. 3 and is a cross-sectional view showing another modification of the decorative member according to each of the first and second embodiments.

[Fig. 20] Fig. 20 is an illustration corresponding to Fig. 5 and is a cross-sectional view of the decorative layered body shown in Fig. 19.

[Fig. 21] Fig. 21 is an illustration corresponding to Fig. 3 and is a cross-sectional view showing still another modification of the decorative member according to each of the first and second embodiments.

[Fig. 22A] Fig. 22A is an illustration explaining an example of a method for producing the decorative layered body shown in Fig. 21.

[Fig. 22B] Fig. 22B is an illustration explaining the example of the method for producing the decorative layered body shown in Fig. 21.

[Fig. 23] Fig. 23 is an illustration corresponding to Fig. 3 and is a cross-sectional view showing still another modification of the decorative member according to each of the first and second embodiments.

[Fig. 24] Fig. 24 is an illustration explaining an example of a method for producing the decorative layered body shown in Fig. 23.

[Fig. 25] Fig. 25 is an illustration corresponding to Fig. 3 and is a cross-sectional view showing yet another example of the decorative member according to each of the first and second embodiments.

[Fig. 26A] Fig. 26A is an illustration explaining an example of a method for producing the decorative layered body shown in Fig. 25.

[Fig. 26B] Fig. 26B is an illustration explaining the example of the method for producing the decorative layered body shown in Fig. 25.

[Fig. 26C] Fig. 26C is an illustration explaining the example of the method for producing the decorative layered body shown in Fig. 25.

[Fig. 26D] Fig. 26D is an illustration explaining the example of the method for producing the decorative layered body shown in Fig. 25.

[Fig. 27] Fig. 27 is an illustration corresponding to Fig. 3 and is a cross-sectional view showing still another modification of the decorative member according to each of the first and second embodiments.

[Fig. 28A] Fig. 28A is an illustration explaining an example of a method for producing the decorative layered body shown in Fig. 27.

[Fig. 28B] Fig. 28B is an illustration explaining the example of the method for producing the decorative layered body shown in Fig. 27.

[Fig. 28C] Fig. 28C is an illustration explaining the example of the method for producing the decorative layered body shown in Fig. 27.

[Fig. 28D] Fig. 28D is an illustration explaining the example of the method for producing the decorative layered body shown in Fig. 27.

[Fig. 28E] Fig. 28E is an illustration explaining the example of the method for producing the decorative layered body shown in Fig. 27.

[Fig. 28F] Fig. 28F is an illustration explaining the example of the method for producing the decorative layered body shown in Fig. 27.

[Fig. 29] Fig. 29 is an illustration corresponding to Fig. 3 and is a cross-sectional view showing still another example of the decorative member according to each of the first and second embodiments.

[Fig. 30] Fig. 30 is an illustration corresponding to Fig. 3 and is a cross-sectional view showing yet another example of the decorative member according to each of the first and second embodiments.

[Fig. 31A] Fig. 31A is an illustration explaining an example of a method for producing the decorative layered body shown in Fig. 30.

[Fig. 31B] Fig. 31B is an illustration explaining the example of the method for producing the decorative layered body shown in Fig. 30.

[Fig. 32] Fig. 32 is an illustration corresponding to Fig. 2 and showing a modification of the shapes of the decorative member and decorative layered body according to each of the first and second embodiments.

[Fig. 33] Fig. 33 is an illustration corresponding to Fig. 5 and showing yet another example of the decorative layered body according to each of the first and second embodiments.

[Fig. 34] Fig. 34 is an enlarged illustration showing a portion surrounded by a chain double-dashed line in the cross section shown in Fig. 33.

[Fig. 35] Fig. 35 is an illustration corresponding to Fig. 5 and showing yet another modification of the decorative layered body according to each of the first and second embodiments.

[Fig. 36A] Fig. 36A is an illustration explaining an example of a method for producing the decorative layered body shown in Fig. 33.

[Fig. 36B] Fig. 36B is an illustration explaining the example of the method for producing the decorative layered body shown in Fig. 33.

[Fig. 36C] Fig. 36C is an illustration explaining the example of the method for producing the decorative layered body shown in Fig. 33.

[Fig. 36D] Fig. 36D is an illustration explaining the example of the method for producing the decorative layered body shown in Fig. 33.

[Fig. 37] Fig. 37 is an illustration corresponding to Fig. 5 and showing yet another modification of the decorative layered body according to each of the first and second embodiments.

[Fig. 38] Fig. 38 is an illustration corresponding to Fig. 5 and showing yet another modification of the decorative layered body according to each of the first and second embodiments.

[Fig. 39A] Fig. 39A is a cross-sectional view for explaining the thickness of a brightness adjusting layer.

[Fig. 39B] Fig. 39B is a cross-sectional view for explaining the thickness of a brightness adjusting layer.

[Fig. 40] Fig. 40 is a graph for explaining the difference in reflectance due to the difference in the thickness of the brightness adjusting layer.

[Fig. 41] Fig. 41 is a cross-sectional view for explaining a modification of the shape of a profiled layer.

[Fig. 42] Fig. 42 is an illustration corresponding to Fig. 4 and is a cross-sectional view showing yet another modification of the decorative layered body according to each of the first and second embodiments.

[Fig. 43] Fig. 43 is an illustration showing a cross section of the decorative layered body shown in Fig. 42, the cross section being taken along line F43-F43.

[Fig. 44] Fig. 44 is an illustration showing a cross section of the decorative layered body shown in Fig. 42, the cross section being taken along line F44-F44.

[Fig. 45] Fig. 45 is an illustration corresponding to Fig. 4 and is a cross-sectional view showing yet another modification of the decorative layered body according to each of the first and second embodiments.

[Fig. 46] Fig. 46 is an illustration corresponding to Fig. 4 and is a cross-sectional view showing yet another modification of the decorative layered body according to each of the first and second embodiments.

[Fig. 47] Fig. 47 is an illustration corresponding to Fig. 4 and is a cross-sectional view showing yet another modification of the decorative layered body according to each of the first and second embodiments.

[Fig. 48] Fig. 48 is an illustration corresponding to Fig. 4 and is a cross-sectional view showing yet another modification of the decorative layered body according to each of the first and second embodiments.

Description of Embodiments

<<<First embodiment>>>

Referring next to the drawings, a first embodiment of the present disclosure will be described.

In the drawing attached to the present description, the scale, the ratio of the vertical and horizontal dimensions, etc. are appropriately changed and exaggerated from those of actual components, for the sake of convenience in illustration and ease of understanding.

Referring next to the drawings, an embodiment of the present disclosure will be described. In the drawing attached to the present description, the scale, the ratio of the vertical and horizontal dimensions, etc. are appropriately changed and exaggerated from those of actual components, for the sake of convenience in illustration and for ease of understanding.

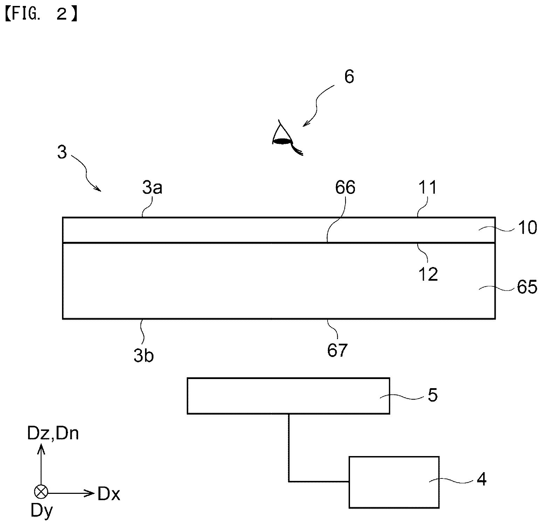

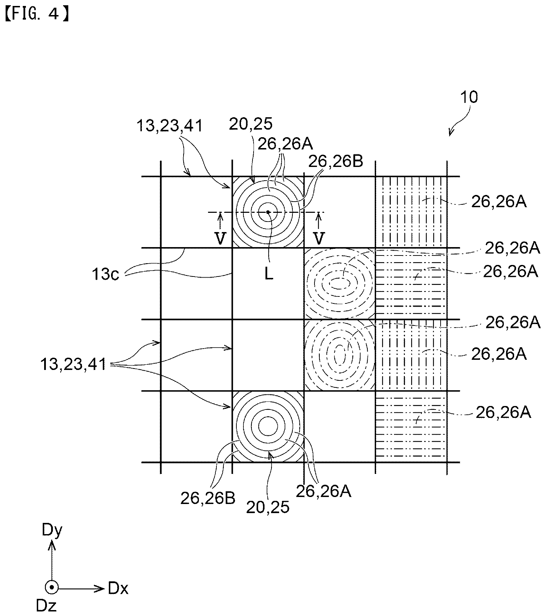

In some drawings, common directions are indicated by arrows with common symbols to clarify the directional relations in the drawings. An arrow directed to the back side of the drawing sheet of a drawing in a direction perpendicular to the drawing sheet is indicated by a symbol with $\times$ inside a circle, as shown, for example, in Fig. 2. An arrow directed to the front side of the drawing sheet of a drawing in a direction perpendicular to the drawing sheet is indicated by a symbol with a dot inside a circle, as shown, for example, in Fig. 4.

As used herein, terms such as "parallel," "perpendicular," "same," etc. and values of lengths and angles that specify shapes, geometrical conditions, and their degrees are not limited to their strict definitions but are construed to include those in ranges in which the same functions can be expected.

As used herein, terms such as "film," "sheet," and "plate" are not to be distinguished from each other based only on their different designations. For example, a "transfer sheet" and a member such as a transfer film are not to be distinguished from each other based only on their different designations.

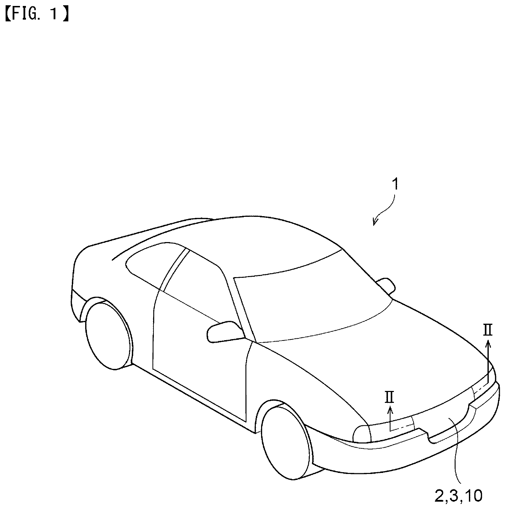

Figs. 1 to 13F are illustrations explaining the first embodiment. In particular, Figs. 1 and Fig. 2 are illustrations showing an application example of a decorative member 3 including a decorative layered body 10. The decorative layered body 10 is formed into a sheet shape and is referred to also as a decorative sheet. The decorative layered body 10 displays a design and imparts design characteristics to an article to which the decorative layered body 10 is applied (the decorative member 3 in the example shown in Fig. 1).

The decorative member 3 and/or the decorative layered body 10 according to the first embodiment described below is devised so as to express a sense of three-dimensionality in order to improve the design characteristics. More specifically, with the decorative member 3 and/or the decorative layered body 10, a sense of three-dimensionality as thick as or above the decorative layered body 10 can be expressed to thereby improve the design characteristics.

In the example shown in Figs. 1 to 3, the decorative member 3 is used for a mobile body 1. In the illustrated example, the decorative member 3 is installed in a front panel 2 of the mobile body 1. In engine cars, the front panel 2 is formed as a front grille. In electric cars, a heat exchanger such as a radiator to be air cooled is not installed in some cases. Therefore, the front panel 2 may not be formed as a grille having a large number of holes formed therein.

Referring next to specific application examples showing in the drawings, the embodiment will be described. The mobile body 1 shown in Fig. 1 is an automobile. However, the mobile body 1 to which the decorative member 3 is applied is not limited to automobiles. The decorative member 3 is applicable to other mobile bodies 1 serving as mobile devices. Examples of the other mobile bodies 1 other than automobiles include railroad cars, bogies, ships, airplanes, helicopters, drones, and robots. The decorative member 3 and the decorative layered body 10 may be used for interior parts of mobile bodies. Moreover, the decorative member 3 and the decorative layered body 10 are applicable to construction materials such as interior materials, exterior materials, ceiling materials, and floor materials and casings of household electrical appliances, casings of communication devices, and cosmetic containers.

<<Decorative member>>

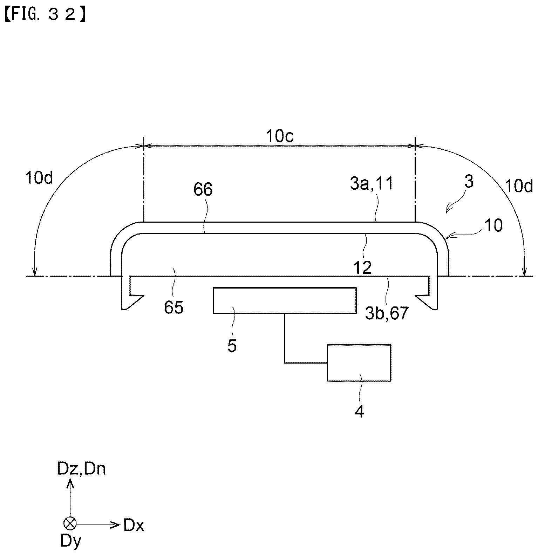

Referring first to Fig. 2, the overall structure of the decorative member 3 will be described. As shown in Fig. 2, the decorative member 3 has a front surface 3a and a back surface 3b opposite to the front surface 3a. The front surface 3a and the back surface 3b extend along a front surface 66 and a back surface 67, respectively, of a molded portion 65 described later. In the illustrated example, the front surface 3a and the back surface 3b extend two-dimensionally in an X direction Dx and a Y direction Dy orthogonal to the X direction Dx. The front surface 3a and the back surface 3b are opposed to each other in a Z direction Dz orthogonal to both the X direction Dx and the Y direction Dy. However, this example is not a limitation, and the front surface 3a and/or the back surface 3b may be a curved surface as shown in Fig. 32.

In the example shown in Fig. 2, the decorative member 3 includes the decorative layered body 10 and the molded portion 65. In the example shown in Fig. 2, the molded portion 65 and the decorative layered body 10 are stacked in this order in a direction extending from the back surface 3b of the decorative member 3 to the front surface 3a (the Z direction Dz). In the example shown in Fig. 2, the decorative member 3 is disposed so as to face a sensor 5. In the example shown in Fig. 2, the molded portion 65 faces the sensor 5, and the decorative layered body 10 faces an observer 6.

The decorative layered body 10 has a front surface 11 and a back surface 12. In the example shown in Fig. 2, the front surface 11 forms the front surface 3a of the decorative member 3. The back surface 12 is directed to the back surface 3b side of the decorative member 3 (the molded portion 65 side). The front surface 11 and the back surface 12 extend along the front surface 66 of the molded portion 65 described later. In the illustrated example, the front surface 11 and the back surface 12 each extend two dimensionally in the X direction Dx and the Y direction Dy. The front surface 11 and the back surface 12 are opposed to each other in the Z direction Dz. However, this example is not a limitation, and the front surface 11 and/or the back surface 12 may be a curved surface as shown in Fig. 32.

The molded portion 65 has the front surface 66 and the back surface 67. The back surface 67 forms the back surface 3b of the decorative member 3. The front surface 66 is directed to the front surface 3a side of the decorative member 3 (the decorative layered body 10 side). In the illustrated example, the front surface 66 and the back surface 67 extend two-dimensionally in the X direction Dx and the Y direction Dy. The front surface 66 and the back surface 67 are opposed to each other in the Z direction Dz. However, this example is not a limitation, and the front surface 66 and/or the back surface 67 may be a curved surface as shown in Fig. 32.

The molded portion 65 may be formed of any of various materials such as resin materials and glass. No particular limitation is imposed on the resin material forming the molded portion 65. Examples of the resin material forming the molded portion 65 include polymethyl methacrylate (PMMA), polypropylene (PP), polycarbonate (PC), acrylonitrile-butadiene-styrene (ABS), acrylonitrile-(ethylene-propylene-diene)-styrene (AES), and acrylonitrile-styrene-acrylate (ASA).

The molded portion 65 may be colored. In this case, any desired color may be imparted to the decorative member 3. The molded portion 65 may be transparent or may be opaque. When the molded portion 65 is opaque, at least part of an article to which the decorative member 3 is applied can be hidden by the molded portion 65. For example, in the example shown in Fig. 2, when the molded portion 65 is opaque, the decorative member 3 can hide the sensor 5.

The term "transparent" as used herein means that the visible light transmittance specified as an average of transmittances at different wavelengths measured in the measurement wavelength range of 380 nm to 780 nm using a spectrophotometer ("UV-3100PC" manufactured by Shimadzu Corporation, a product in accordance with JIS K 0115) is 50% or more. The average transmittance is preferably 80% or more.

As shown in Fig. 2, the decorative member 3 may be disposed so as to face the sensor 5 that uses electromagnetic waves with longer wavelengths than visible light. For example, the sensor 5 may monitor the circumstances around the mobile body 1. The results of the detection by the sensor 5 may be transmitted to a controller 4 of the mobile body 1. The controller 4 may issue an alert based on the results of the detection by the sensor 5 or may control the movement of the mobile body 1. For example, the sensor 5 may detect an obstacle etc. in front of the mobile body 1. The sensor 5 may be capable of transmitting and receiving electromagnetic waves. When the sensor 5 receives reflected waves reflected from, for example, an obstacle, the presence or absence of the obstacle and the distance from the obstacle can be detected. The sensor 5 may be a millimeter wave radar. The millimeter wave radar may use millimeter waves with a wavelength of 1 mm or more and 10 mm or less as the electromagnetic waves. Alternatively, the sensor 5 may be a lidar. The lidar may use infrared rays as the electromagnetic waves.

The sensor 5 faces the back surface 3b of the decorative member 3. In the example shown in Fig. 2, the electromagnetic waves used in the sensor 5 pass through the decorative member 3 in the Z direction Dz. In the example shown in Fig. 2, the front surface 3a and the back surface 3b serve as an emission surface and an incident surface for the electromagnetic waves. Preferably, the front surface 3a and the back surface 3b are flat surfaces at least in regions facing the sensor 5 in the Z direction Dz. When the front surface 3a and the back surface 3b are flat surfaces, a reduction in the sensitivity of the sensor 5 due to scattering of the electromagnetic waves can be suppressed.

<<Decorative layered body>>

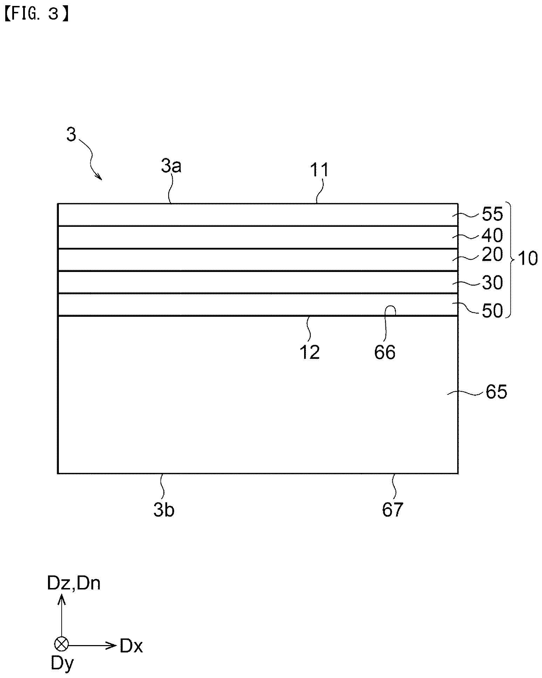

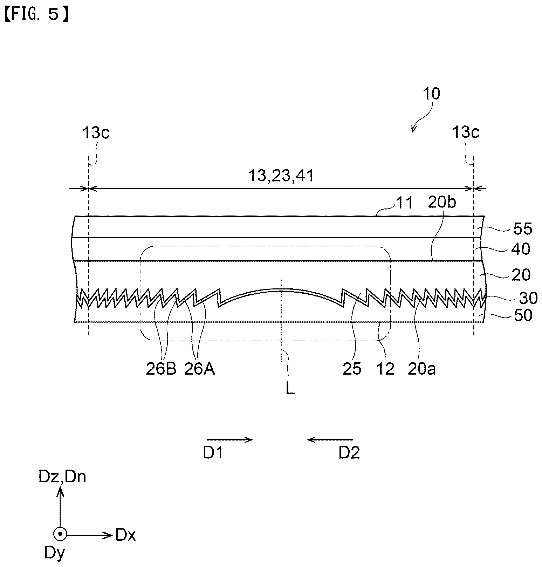

The decorative layered body 10 will next be described in more detail. As shown in Figs. 3 and 5, the decorative layered body 10 includes a profiled layer 20, a brightness adjusting layer 30, and a transmittance adjusting layer 40. As shown in Fig. 5, the profiled layer 20 has a profiled surface 20a having a relief structure 25 formed thereon and a non-profiled surface 20b opposite to the profiled surface 20a. The brightness adjusting layer 30 covers the profiled surface 20a. As shown in Fig. 4, the decorative layered body 10 includes at least one unit optical element 13. Each unit optical element 13 reflects, refracts and/or diffracts light incident on the front surface 3a according to the relief structure 25 of the profiled surface 20a. This allows a sense of three-dimensionality as thick as or above the decorative layered body 10 to be expressed. Therefore, the design characteristics of the decorative layered body 10 are improved. In the illustrated example, the decorative layered body 10 includes a plurality of unit optical elements 13. In this manner, a complicated design formed by a combination of the plurality of unit optical elements 13 can be imparted to the decorative layered body 10.

The decorative layered body 10 may include additional layers. For example, in the example shown in Figs. 3 and 5, the decorative layered body 10 includes a filling layer 50 and a functional layer 55. In this example, the filling layer 50, the brightness adjusting layer 30, the profiled layer 20, the transmittance adjusting layer 40, and the functional layer 55 are stacked in this order in the direction from the back surface 12 of the decorative layered body 10 to the front surface 11. In this example, the functional layer 55 forms the front surface 11 of the decorative layered body 10, and the filling layer 50 forms the back surface 12 of the decorative layered body 10. The transmittance adjusting layer 40 is disposed between the front surface 11 of the decorative layered body 10 and the profiled layer 20. The profiled layer 20 is disposed between the transmittance adjusting layer 40 and the brightness adjusting layer 30. The brightness adjusting layer 30 is disposed between the back surface 12 of the decorative layered body 10 and the profiled layer 20. Of course, the transmittance adjusting layer 40 may form the front surface 11 of the decorative layered body 10. Moreover, the brightness adjusting layer 30 may form the back surface 12 of the decorative layered body 10.

<Profiled layer>

First, the profiled layer 20 will be described. In the example shown in Fig. 4, the profiled layer 20 includes at least one unit profiled element 23. In the illustrated example, the profiled layer 20 includes a plurality of unit profiled elements 23. One unit profiled element 23 corresponds to one unit optical element 13. On the profiled surface 20a, a relief structure 25 is formed in each unit profiled element 23. The relief structure 25 can be formed by shaping the profiled layer 20 using a shaping die 100 described later.

Since the profiled surface 20a has the relief structure 25, optical effects (reflection, refraction and/or diffraction) are exerted on light incident on each unit optical element 13 according to the relief structure 25. In the illustrated example, the relief structure 25 is determined such that the parallel light incident on the front surface 11 of the decorative layered body 10 is focused and/or diverged. The profiled layer 20 including the unit profiled elements 23 each having the relief structure 25 allows the decorative layered body 10 to express a rich sense of three-dimensionality as large as or above its thickness. Moreover, since the profiled layer 20 includes the plurality of unit profiled elements 23, a plurality of unit optical elements 13 can be formed in the decorative layered body 10. In the illustrated example, each relief structure 25 is configured such that the corresponding unit optical element 13 provides an optical effect similar to or corresponding to the optical effect of a convex lens on the light incident on the unit optical element 13. The optical effect corresponding to the optical effect similar to that of a convex lens means, for example, an optical effect similar to that of a convex mirror. In this manner, the unit optical element 13 exerts an optical function similar to or corresponding to the optical function of a convex lens. Therefore, the decorative layered body 10 can express a design with a greater sense of depth than the actual depth of the decorative layered body 10 and can express a sense of three-dimensionality. This allows a rich design expression with a sense of luxury. Of course, each relief structure 25 may be configured such that the corresponding unit optical element 13 provides an optical effect similar to or corresponding to the optical effect of a concave lens on the light incident on the front surface 11 of the decorative layered body 10. In this case also, the decorative layered body 10 can express a design with a greater sense of depth than the actual thickness of the decorative layered body 10 and can express a sense of three-dimensionality. This allows a rich design expression with a sense of luxury.

No particular limitation is imposed on the dimensions of each unit profiled element 23 (and the dimensions of each unit optical element 13) in the plan view of the decorative layered body 10, and the dimensions can be appropriately set according to the design to be expressed by the decorative layered body 10. However, from the viewpoint of effectively utilizing the visual effect of the unit optical elements 13, it is preferable that the unit profiled elements 23 have such a size that each unit profiled element 23 can be identified by the naked eye. Specifically, the shortest length of each unit profiled element 23 may be 1.0 mm or more, 10 mm or more, or 20 mm or more. To arrange the plurality of unit profiled elements 23 such that a desired pattern is formed to allow a design according to the pattern to be expressed, it is preferable that the unit profiled elements 23 are not excessively large. This is because, when each unit profiled element 23 is excessively large, the flexibility in the arrangement of the plurality of unit profiled elements 23 in the profiled layer 20 is reduced and the plurality of unit profiled elements 23 may not be arranged as desired. Specifically, the longest length of the unit profiled elements 23 may be 200 mm or less and 100 mm or less. The size of each unit profiled element 23 when the decorative layered body 10 is viewed in plan may be 1.0 mm or more and 200 mm or less.

In the example shown in Fig. 4, the plurality of unit profiled elements 23 (the plurality of unit optical elements 13) have the same shape when viewed in plan. The plurality of unit profiled elements 23 have a rectangular shape when viewed in plan. The plurality of unit profiled elements 23 are regularly arranged. The plurality of unit profiled elements 23 are arranged in a square array. However, this example is not a limitation. The plurality of unit profiled elements 23 may have different shapes from each other. Each unit profiled element 23 may have a shape other than a rectangular shape. For example, each unit profiled element 23 may have a polygonal shape such as a triangular, pentagonal, hexagonal, or octagonal shape. The plurality of unit profiled elements 23 may have a shape other than the polygonal shape. Specifically, the unit profiled elements 23 may include curved portions or portions extending in the form of arcs. The unit profiled elements 23 may have any shape such as a circular shape, a semi-circular shape, an elliptical shape, a fan shape, a crescent shape, a heart shape, or a letter shape. The plurality of unit profiled elements 23 may be arranged irregularly. Moreover, although not illustrated, each unit profiled element 23 may have a shape in which any of the shapes described above overlap each other.

In the example shown in Figs. 4 and 5, the profiled surface 20a includes a plurality of inclined surfaces 26A inclined with respect to the normal direction Dn normal to the decorative layered body 10 and a plurality of connection surfaces 26B connecting adjacent ones of the inclined surfaces 26A. The number of inclined surfaces 26A included in each unit optical element 13 may be 10 or more, 50 or more, 100 or more, or 200 or more.

In the example shown in Figs. 4 and 5, the plurality of inclined surfaces 26A correspond to a plurality of lens surfaces formed by dividing a continuous convex lens surface along planes perpendicular to the thickness direction. The connection surfaces 26B correspond to rising surfaces connecting adjacent lens surfaces. With this relief structure 25, the increase in the thickness of the decorative layered body 10 due to the unit optical element 13 configured to serve as a convex lens can be effectively reduced. For example, when the decorative member 3 is used for a front grille of a vehicle as in the illustrated example, there may be a demand for a reduction in the thickness of the decorative member 3 from the viewpoint of a reduction in weight. When the decorative member 3 is disposed so as to face the sensor 5, it is necessary for the decorative layered body 10 to allow electromagnetic waves emitted from the sensor 5 to pass through the decorative member 3 with high transmittance. In this case, it is preferable to reduce the thickness of the decorative layered body 10.

In the example shown in Fig. 5, the relief structure 25 of the profiled surface 20a of each unit optical element 13 is a Fresnel lens structure. In this case, the plurality of inclined surfaces 26A correspond to a plurality of lens surfaces obtained by dividing the lens surface of a curved surface lens such as a spherical lens or cylindrical lens into a plurality of sections along planes perpendicular to the thickness direction (optical axis direction) of the curved surface lens.

In an example shown by solid lines in Fig. 4, the relief structure 25 is a circular Fresnel lens structure. In this case, the plurality of inclined surfaces 26A are arranged concentrically, but this is not a limitation. For example, as shown by dash-dot lines in Fig. 4, the outlines of the plurality of inclined surfaces 26A may be elliptical. Moreover, the extending directions of the major axes of the ellipses in different unit profiled elements 23 (these directions may be hereinafter referred to simply as the major axis directions) may differ from each other. For example, the major axis direction of one unit profiled element 23 may be non-parallel or perpendicular to the major axis direction of another unit profiled element 23.

Moreover, as shown by chain double-dashed lines in Fig. 4, the relief structure 25 may be a linear Fresnel lens structure. In this case, the arrangement directions of the inclined surfaces 26A and connection surfaces 26B of different unit profiled elements 23 may differ from each other. For example, the arrangement direction of the inclined surfaces 26A and connection surfaces 26B of one linear Fresnel lens structure may be non-parallel or perpendicular to the arrangement direction of the inclined surfaces 26A and connection surfaces 26B of another linear Fresnel lens structure.

In the example shown in Fig. 4, the plurality of inclined surfaces 26A extend so as to surround a reference line L. Therefore, as shown in Fig. 5, inclined surfaces 26A are present on both sides of the reference line L in the cross-sectional view of the unit optical element 13 taken in the arrangement direction of the inclined surfaces 26A. In the illustrated example, the reference line L coincides with the optical axis of the above-described curved surface lens. In the illustrated example, the reference line L passes through the geometric center of the unit optical element 13 when the decorative layered body 10 is viewed in plan.

When the unit optical element 13 exhibits the same optical function as or an optical function corresponding to that of a curved surface lens such as a spherical lens or a cylindrical lens, the unit profiled element 23 has the following features. Specifically, as described above, the plurality of inclined surfaces 26A are arranged so as to be directed toward the reference line L. The plurality of inclined surfaces 26A are inclined toward the reference line L. In the example shown in Fig. 5, the inclined surface 26A on one side of the reference line L (e.g., on the left side in Fig. 5) are inclined in a first direction D1 with respect to the normal direction Dn in the above cross-sectional view, and the inclined surface 26A on the other side of the reference line L (e.g., on the right side in Fig. 5) are inclined in a second direction D2 opposite to the first direction D1 with respect to the normal direction Dn.

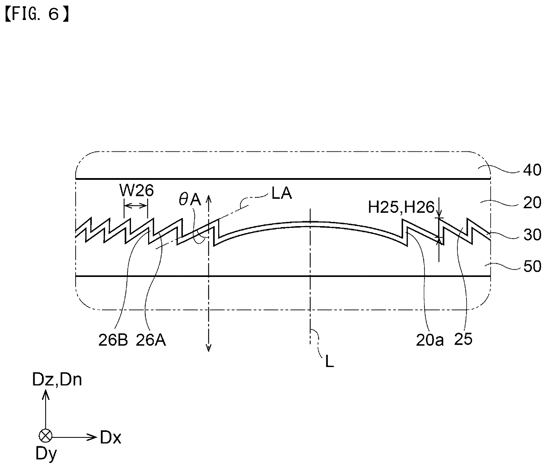

Moreover, the unit profiled element 23 has the following features as additional features. Specifically, as shown in Figs. 5 and 6, in the above-described cross section, the standard deviation of the pitches W26 of the inclined surfaces 26A on one side of the reference line L (e.g., the left side in Fig. 5) is larger than 5 $\mu$m. In addition, the standard deviation of the heights (the dimension in the Z direction Dz) H26 of the inclined surfaces 26A on one side of the reference line L is 1 $\mu$m or less. The heights H26 may be equal to each other. Moreover, when a plurality of inclined surfaces 26A are also present on the other side of the reference line L (e.g., the right side in Fig. 5) in the cross section shown in Fig. 5, the standard deviation of the pitches W26 of the inclined surfaces 26A on the other side of the reference line L is larger than 5 $\mu$m. In addition, the standard deviation of the heights (the dimension in the Z direction Dz) H26 of the plurality of inclined surfaces 26A on the other side of the reference line L is 1 $\mu$m or less. The heights H26 may be equal to each other. In the example shown in Figs. 5 and 6, the pitches W26 decrease as one moves away from the reference line L.

Alternatively, in place of or in addition to the above additional features, the unit profiled element 23 has the following additional features. Specifically, in the above-described cross-section, the difference between the maximum and minimum values of the inclined surface angles θA of the inclined surfaces 26A on one side of the reference line L is larger than 1°. Moreover, as shown in Fig. 5, when the inclined surfaces 26A are also present on the other side of the reference line L in the above-described cross section, the difference between the maximum and minimum values of the inclined surface angles θA of the inclined surfaces 26A on the other side of the reference line L is larger than 1°. In the example shown in Figs. 5 and 6, the inclined surface angles θA decrease as one moves away from the reference line L on both the one and the other sides of the reference line L.

As used herein, the term "inclination surface angle θA" is the angle of an inclined surface 26A with respect to the normal direction Dn normal to the decorative layered body 10. In the illustrated example, the inclined surfaces 26B extend in the Z direction Dz along the reference line L.

The relief structure 25 can be appropriately designed according to the function required of the decorative layered body 10 or the design to be expressed by the decorative layered body 10. When the decorative member 3 is disposed so as to face the sensor 5 as in the illustrated example, the decorative layered body 10 is required to allow the electromagnetic waves emitted from the sensor 5 to pass through the decorative member 3 with high transmittance. In this case, it is preferable to reduce the thickness of the decorative layered body 10. The design expressed by the decorative layered body 10 can differ depending on the intended application of the decorative layered body 10. For example, when the decorative layered body 10 is used as an exterior material for the mobile body 1, it is preferable to prevent the occurrence of prismatic light on the front surface 11 of the decorative layered body 10. However, in some cases, it is preferable to design the decorative layered body 10 such that prismatic light occurs on the front surface 11.

To reduce the thickness of the decorative layered body 10 while the expressed sense of three-dimensionality as thick as or above the decorative layered body 10 is maintained, the height H25 of the relief structure 25 is preferably 0.5 μm or more, more preferably 1 μm or more, still more preferably 2 μm or more, and particularly preferably 3 μm or more. Moreover, the height H25 of the relief structure 25 is preferably 50 μm or less, more preferably 15 μm or less, and still more preferably 10 μm or less. Therefore, the height H25 of the relief structure 25 may be 0.5 μm or more and 50 μm or less. When the height H25 of the relief structure 25 is 1 μm or more, the visibility of the design displayed by the optical effect can be further improved. As used herein, the "height H25 of the relief structure" means the maximum value of the heights (the dimension in the Z direction Dz) H26 (see Fig. 6) of the inclined surfaces 26A or connection surfaces 26B that form the relief structure.

To suppress the occurrence of prismatic light on the front surface 11 of the decorative layered body 10, the height H25 of the relief structure 25 is preferably larger than 1.0 μm.

To suppress the occurrence of prismatic light on the front surface 11 of the decorative layered body 10, the pitches W26 of the inclined surfaces 26A (see Fig. 6) are preferably 5 μm or more, more preferably 12 μm or more, and still more preferably 15 μm or more. From the viewpoint of achieving a reduction in the size of the unit optical element 13, the pitches W26 of the inclined surfaces 26A are preferably 100 μm or less, more preferably 50 μm or less, and still more preferably 20 μm or less. Therefore, the pitches W26 of the inclined surfaces 26A are preferably 5 μm or more and 100 μm or less.

When it is desirable to allow prismatic light to occur on the front surface 11 of the decorative layered body 10, the height H25 of the relief structure 25 is preferably 0.1 μm or more, more preferably 0.2 μm or more, and still more preferably 0.5 μm or more. In this case, the height H25 of the relief structure 25 is preferably 10.0 μm or less, more preferably 6.0 μm or less, and still more preferably 3.0 μm or less. Therefore, the height H25 of the relief structure 25 is preferably 0.1 μm or more and 10.0 μm or less.

When it is desirable to allow prismatic light to occur on the front surface 11 of the decorative layered body 10, the pitches W26 of the inclined surfaces 26A are preferably 0.5 μm or more and preferably 1.0 μm or more. The pitches W26 of the inclined surfaces 26A are preferably less than 10 μm, more preferably 5 μm or less, and still more preferably 2 μm or less. Therefore, when it is desirable to allow prismatic light to occur on the front surface 11 of the decorative layered body 10, the pitches W26 of the inclined surfaces 26A are preferably 0.5 μm or more and less than 10 μm.

From the viewpoint of accurately forming the relief structure 25, the height H25 of the relief structure 25 is preferably 0.2 μm or more, more preferably 0.5 μm or more, and still more preferably 1.5 μm or more. From the same point of view, the pitch W26 of the relief structure 25 is preferably 0.5 μm or more, more preferably 2 μm or more, still more preferably 4 μm or more, and particularly preferably 8 μm or more.

As shown in Fig. 6, the pitch W26 may vary depending on the distance from the optical axis of the unit optical element 13 (i.e., the reference line L). Specifically, the pitch W26 may decrease as one moves away from the reference line L.

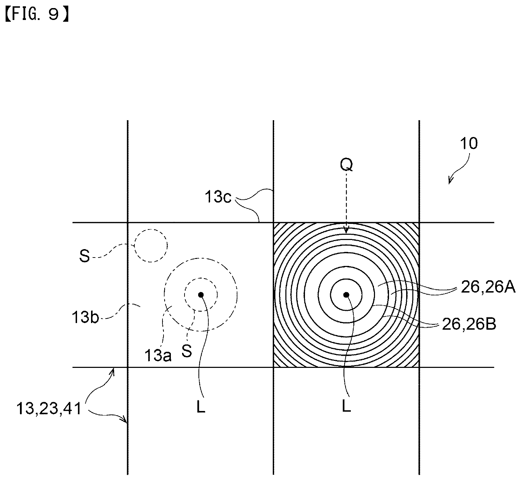

As shown in Fig. 9, each unit optical element 13 includes a central region 13a and an outer region 13b. The central region 13a is the region through which the reference line L in the unit optical element 13 passes. The outer region 13b is the region extending between the central region 13a and an edge portion 13c of the unit optical element 13 in a direction in which the inclined surfaces 26A and the connection surfaces 26B are arranged. As described above, the reference line L passes through the geometric center of the unit optical element 13 when the decorative layered body 10 is viewed in plan. Therefore, the central region 13a is a region including the geometric center of the unit optical element 13 when the decorative layered body 10 is viewed in plan.

When the relief structure 25 is formed as a circular Fresnel lens structure, the outer region 13b circumferentially surrounds the central region 13a, as shown in Fig. 9. When the Fresnel lens structure 25 is formed as a linear Fresnel lens structure, the central region 13a of the unit optical element 13 extends to the edge portion 13c within the unit optical element 13 in the extending direction of the inclined surfaces 26A and the connection surfaces B when the decorative layered body 10 is viewed in plan. When the Fresnel lens structure 25 is formed as the linear Fresnel lens structure, the outer region 13b of the unit optical element 13 extends between the central region 13a and the edge portion 13c of the unit optical element 13 in the arrangement direction of the plurality of inclined surfaces 26A and the plurality of connection surfaces 26B.

When the pitch W26 of the Fresnel lens structure 25 in the central region 13a differs from that in the outer region 13b, the pitch W26 in the central region 13a is generally larger than the pitch W26 in the outer region 13b. In this case, the pitch W26 in the central region 13a is, for example, 20.0 $\mu$m or more and 100.0 $\mu$m or less, and the pitch W26 in the outer region 13b is, for example, 5.0 $\mu$m or more and 20.0 $\mu$m or less.

The inclined surface angle $\theta$A, the height H25, and the pitch W26 are observed and measured as follows. Specifically, first, the decorative layered body 10 or the decorative member 3 is cut in the stacking direction of the layers forming the decorative layered body 10. Next, the obtained cross section of the decorative layered body 10 is observed using a digital microscope (product name: VHX-8000 series manufactured by KEYENCE CORPORATION), and the inclined surface angle $\theta$A, the height H25, and the pitch W26 are measured.

In the illustrated example, a mixture of polymethyl methacrylate (PMMA) and urethane acrylate is used as the material forming the profiled layer 20. In the illustrated example, the material forming the profiled layer 20 contains silicone. This profiled layer 20 can be formed by applying a liquid precursor material to a substrate 72, etc. described below, shaping the applied material using a shaping die, and then irradiating the resulting material with UV rays to cure it. The precursor material for the profiled layer 20 may be a UV-curable resin that contains, for example, an acrylic resin optionally having a polymerizable unsaturated group and a (meth)acrylic polymerizable monomer or oligomer. As used herein, the term "(meth)acrylic" means either or both of "acrylic" and "methacrylic." The mass ratio of the acrylic resin optionally having a polymerizable unsaturated group / the (meth)acrylic monomer or oligomer in the UV curable resin is preferably 35/65 or more and 95/5 or less and more preferably 70/30 or more and 90/10 or less. The thus-formed profiled layer 20 is flexible and has stretchability. Therefore, when the decorative layered body 10 is curved or stretched along the surface of the molded portion 65, the profiled layer 20 can be curved or stretched as desired. In other words, there is little risk that the profiled layer 20 will prevent the decorative layered body 10 from being curbed or stretched.

In addition to the UV curable resin, a thermoplastic resin (a vinyl-based resin such as an acrylic resin, acrylonitrile (ABS resin), or polyvinyl chloride), an electron beam (EB) curable resin, etc. can be used to form the profiled layer 20.

In the illustrated example, the profiled layer 20 is transparent so that the brightness adjusting layer 30 is visible through the front surface 11. In the illustrated example, the plurality of relief structures 25 in the plurality of unit profiled elements 23 included in the profiled layer 20 are integrally formed without any seams (see Fig. 5).

<Brightness adjusting layer>

Next, the brightness adjusting layer 30 will be described. The brightness adjusting layer 30 is a layer that adjusts the brightness of the light reflected by the decorative layered body 10. By adjusting the brightness of the light reflected by the decorative layered body 10, a rich design with a sense of luxury can be imparted to the decorative layered body 10 more effectively.

In the illustrated example, the brightness adjusting layer 30 is provided to adjust the visible light reflectance measured on the front surface 11 side of the decorative layered body 10. The brightness adjusting layer 30 covers the profiled surface 20a of the profiled layer 20. In this manner, the visible light reflectance at the reflection interface between the profiled surface 20a and the brightness adjusting layer 30 is adjusted, and the visible light reflectance measured on the front surface 11 side of the decorative layered body 10 is adjusted. The surface of the brightness adjusting layer 30 that faces the profiled layer 20 has a surface relief corresponding to the profiled surface 20a. In other words, the brightness adjusting layer 30 has a relief structure corresponding to the relief structure 25 of the profiled layer 20.

In the illustrated example, the brightness adjusting layer 30 is a reflective layer. In the example shown in Fig. 3, the reflective layer 30 covers the profiled surface 20a of the profiled layer 20 to form a reflective interface between the profiled surface 20a and the reflective layer 30. The reflective layer 30 improves the visible light reflectance at the reflective interface between the profiled surface 20a and the reflective layer 30, and the brightness of the light reflected by the decorative layered body 10 is thereby adjusted. The reflective layer 30 is a metal reflective layer formed by vapor deposition of a metal material, sputtering, coating, etc. The reflective layer 30 is formed as a thin film-like layer. The thickness of the reflective layer 30 may be smaller than the heights H26 of the inclined surfaces 26A and the connection surfaces 26B. The average thickness of the reflective layer 30 may be 50% or less of the height H25 of the relief structure 25, 25% or less of the height H25 of the relief structure 25, or 10% or less of the height H25 of the relief structure 25. The reflective layer 30 having such a thickness has, on the side opposite to the side facing the profiled surface 20a, a surface relief corresponding to the surface relief of the profiled surface 20a without filling in the surface relief of the profiled surface 20a. As used herein, the "thickness of the brightness adjusting layer 30" means the dimension of the brightness adjusting layer 30 in the Z direction Dz (the normal direction Dn normal to the decorative layered body 10).

In the example shown in Fig. 5, the surface relief of the reflective layer 30 is filled with the filling layer 50. However, the reflective layer 30 may be formed so as to fill in the surface relief of the profiled surface 20a.

The material used for the reflective layer 30 is preferably a material that improves the reflectance of the reflective interface formed by the reflective layer 30 and is more preferably a material that allows electromagnetic waves to pass therethrough. In this case, the material forming the reflective layer 30 can be, for example, a metal material such as aluminum, indium, tin, or silver. When the reflective layer 30 is formed by vapor deposition or sputtering, the reflective layer 30 may be formed only of one of the metal materials described above. When the reflective layer 30 is formed by coating, the reflective layer 30 may be formed only of one of the metal materials described above or, if necessary, may be formed using a mixture of any of the metal materials described above and a binder resin.

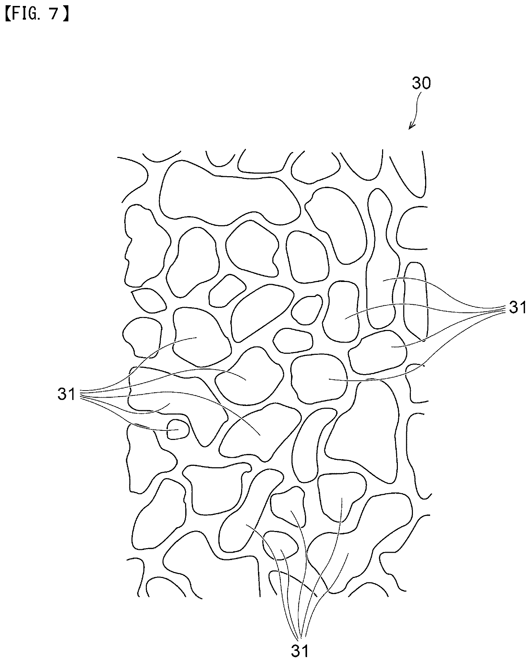

As described above, the electromagnetic waves used in the sensor 5 pass through the decorative layered body 10. When the reflective layer 30 is formed as a layer extending continuously over the entire profiled surface 20a, the electromagnetic waves are blocked or attenuated. Therefore, as shown in Fig. 7, the reflective layer 30 may include a plurality of metal grain portions 31. The metal grain portions 31 have a metallic luster and can reflect visible light. The reflective layer 30 forms islands in a so-called sea-island structure. The island-shaped metal grain portions 31 are spaced apart from each other. Gaps forming the sea of the sea-island structure are provided between the plurality of metal grain portions 31. The electromagnetic waves used in the sensor 5, such as millimeter waves, pass through these gaps and thus penetrate the reflective layer 30. This metal layer can be formed by sputtering or vapor deposition such as vacuum vapor deposition using, for example, an indium material. The reflective layer 30 may be formed seamlessly and integrally across the plurality of unit profiled elements 23.

Preferably, the thickness of the reflective layer 30 is such that the reflectance of the reflective interface formed by the reflective layer 30 can be improved. The thickness of the reflective layer 30 may be, for example, 0.005 $\mu$m or more. The thickness of the reflective layer 30 may be 20 $\mu$m or less. Therefore, the thickness of the reflective layer 30 may be 0.005 $\mu$m or more and 20 $\mu$m or less. The thickness of the reflective layer 30 and the thicknesses of the other layers included in the decorative layered body 10 can also be measured by observing a cross-section of the decorative layered body 10 using a digital microscope (product name: VHX-8000 series manufactured by KEYENCE CORPORATION).

<Transmittance adjusting layer>

The transmittance adjusting layer 40 will next be described. The transmittance adjusting layer 40 adjusts the visible light transmittance of the decorative layered body 10 and thereby plays a role in adjusting the visible light reflectance measured on the front surface 11 side of the decorative layered body 10 (i.e., the front surface 3a side of the decorative member 3 in the example shown in Fig. 2). By adjusting the above-described reflectance to a prescribed reflectance described later, the design characteristics of the decorative layered body 10 can be further improved. More specifically, by adjusting the above-described reflectance to the prescribed reflectance described later, the decorative layered body 10 can have an apparent thickness larger than the actual thickness in an effective manner. Moreover, by adjusting the above-described reflectance to the prescribed reflectance described later, the apparent position of the reflective interface between the profiled layer 20 and the brightness adjusting layer 30 can be perceived so as to be located deeper than the actual position of the reflective interface. In this manner, a rich design expression with a sense of luxury can be achieved, and the design characteristics can be further improved.

The total light transmittance of the transmittance adjusting layer 40 is set appropriately such that the visible light reflectance measured on the front surface 11 side of the decorative layered body 10 is adjusted to the prescribed reflectance described later. Therefore, it is only necessary that the total light transmittance of the transmittance adjusting layer 40 be less than 100%, and the total light transmittance may be 90% or less, 50% or less, or 10% or less. Of course, the total light transmittance of the transmittance adjusting layer 40 is more than 0%. The total light transmittance is the ratio of the total amount of light transmitted through the transmittance adjusting layer 40 to the total amount of light entering the transmittance adjusting layer 40. The total light transmittance can be measured using a haze meter (HM-150 manufactured by MURAKAMI COLOR RESEARCH LABORATORY) by a method according to JIS K 7361-1. The total light transmittance of the transmittance adjusting layer 40 may be partially changed. For example, the total light transmittance of a part of the transmittance adjusting layer 40 may be 30%, and the total light transmittance of another part may be 10%.

The transmittance adjusting layer 40 typically contains a pigment. The transmittance adjusting layer 40 may contain a dye instead of the pigment or may contain both the pigment and the dye. The transmittance adjusting layer 40 absorbs part of the light entering the decorative layered body 10, and the visible light reflectance of the decorative layered body 10 is thereby adjusted. Moreover, the transmittance adjusting layer 40 allows a desired color to be imparted to the decorative layered body 10. The material used to form the transmittance adjusting layer 40 can be a resin mixed with a pigment or a dye. The transmittance adjusting layer 40 may further contain additives such as a UV absorber and a light stabilizer.

The resin contained in the transmittance adjusting layer 40 may include a resin composition such as a UV curable resin or an electron beam curable resin.

The resin contained in the transmittance adjusting layer 40 may be, for example, a non-UV curable acrylic resin.

The acrylic resin is, for example, a polymer of a (meth)acrylate compound. The polymer may be a homopolymer or a copolymer of a (meth)acrylate compound. Examples of the (meth)acrylate compound include alkyl (meth)acrylates such as methyl (meth)acrylate and ethyl (meth)acrylate, cycloalkyl (meth)acrylates such as cyclohexyl (meth)acrylate, aromatic (meth)acrylates such as such as phenyl (meth)acrylate, and hydroxyalkyl (meth)acrylates such as hydroxyethyl (meth)acrylate, hydroxypropyl (meth)acrylate, and hydroxybutyl (meth)acrylate. The acrylic resin is preferably polymethyl methacrylate (PMMA).

As used herein, the term "(meth)acrylate compound" means either or both of an "acrylate compound" and a "methacrylate compound."

The weight average molecular weight (Mw) of the acrylic resin may be, for example, 25000 or more or 50000 or more, from the viewpoint of durability such as heat resistance and abrasion resistance. The Mw of the acrylic resin may be, for example, 100000 or less or 80000 or less from the viewpoint of interlayer adhesion. In the present description, the Mw means a value measured by gel permeation chromatography using polystyrene as the standard material and is measured by a method according to JIS K 7252-3:2016.

The glass transition temperature (Tg) of the acrylic resin may be, for example, 70°C or higher or 85°C or higher from the viewpoint of durability such as heat resistance and abrasion resistance. The Tg of the acrylic resin may be, for example, 110°C or lower or 100°C or lower from the viewpoint of interlayer adhesion. Therefore, the Tg of the acrylic resin may be 70°C or higher and 110°C or lower. In the present description, the Tg is the glass transition temperature obtained by differential scanning calorimetry (DSC) according to JIS K 7121:2012.

The resin contained in the transmittance adjusting layer 40 may be a cured product of an acrylic thermosetting resin. The cured product is formed from, for example, the acrylic thermosetting resin and a curing agent. Examples of the acrylic thermosetting resin include acrylic polyols having two or more hydroxy groups per molecule. Examples of the acrylic polyol include polymers of (meth)acrylate compounds using at least a hydroxy group-containing monomer such as hydroxyalkyl (meth)acrylate as a raw material monomer. Examples of the curing agent include isocyanate compounds.

When the transmittance adjusting layer 40 is colored black, the transmittance adjusting layer 40 typically contains a black pigment. The transmittance adjusting layer 40 may contain a black dye instead of the black pigment or may contain both the pigment and the dye. Examples of the black pigment that can be contained in the transmittance adjusting layer 40 include carbon black, titanium black (such as substoichiometric titanium oxides and titanium oxynitride), composite metal oxides, perylene organic black, ceramic black, and bone black. Examples of the black dye, i.e., the black dye contained in the transmittance adjusting layer 40, include azo-based black dyes and nigrosine black dyes.

When the transmittance adjusting layer 40 is colored blue, the transmittance adjusting layer 40 typically contains a blue pigment. The transmittance adjusting layer 40 may contain a blue dye instead of the blue pigment or may contain both the pigment and the dye. Examples of blue pigment that can be contained in the transmittance adjusting layer 40 include copper phthalocyanine-based pigments, anthraquinone-based pigments, cobalt blue, cobalt-based pigments, composite metal oxides, and phthalocyanine-based pigments. Examples of the blue dye that can be contained in the transmittance adjusting layer 40 include methine-based dyes, anthraquinone-based dyes, azo-based dyes, triarylmethane-based dyes, and phthalocyanine-based dyes.

When the transmittance adjusting layer 40 is colored red, the transmittance adjusting layer 40 typically contains a red pigment. The transmittance adjusting layer 40 may contain a red dye instead of the red pigment or may contain both the pigment and the dye. Examples of the red pigment that can be contained in the transmittance adjusting layer 40 include diketopyrrolopyrrole-based pigments, anthraquinone-based pigments, perylene-based pigments, quinacridone-based pigments, titaniumbased complex metal oxides, and iron oxide pigments. Examples of the red dye that can be contained in the transmittance adjusting layer 40 include azo-based dyes, anthraquinone-based dyes, and perinonebased dyes.

When the transmittance adjusting layer 40 is colored yellow, the transmittance adjusting layer 40 typically contains a yellow pigment. The transmittance adjusting layer 40 may contain a yellow dye instead of the yellow pigment or may contain both the pigment and the dye. Examples of the yellow pigment that can be contained in the transmittance adjusting layer 40 include isoindolinone-based pigments, anthraquinone-based pigments, complex metal oxides, iron oxide pigments, titanium yellow, and condensed azo-based pigments. Examples of the yellow dye that can be contained in the transmittance adjusting layer 40 include azo-based dyes, anthraquinone-based dyes, methine-based dyes, quinophthalone-based dyes, and pyrazolone-based dyes.

When the transmittance adjusting layer 40 is colored green, the transmittance adjusting layer 40 typically contains a green pigment. The transmittance adjusting layer 40 may contain a green dye instead of the green pigment or may contain both the pigment and the dye. Examples of the green pigment that can be contained in the transmittance adjusting layer 40 include phthalocyanine-based pigments, isoindolinone-based pigments, cobalt blue, and cobalt-based pigments. Examples of the green dye that can be contained in the transmittance adjusting layer 40 include triphenylmethane-based basic dyes and phthalocyanine-based dyes.

When the transmittance adjusting layer 40 is colored purple, the transmittance adjusting layer 40 typically contains a purple pigment. The transmittance adjusting layer 40 may contain a purple dye instead of the purple pigment or may contain both the pigment and the dye. Examples of the purple pigment that can be contained in the transmittance adjusting layer 40 include quinacridone-based pigments and dioxazine-based pigments. Examples of the purple dye that can be contained in the transmittance adjusting layer 40 include azo-based dyes, anthraquinone-based dyes, azine-based dyes, and quinoline-based dyes.

When the transmittance adjusting layer 40 is colored reddish purple, the transmittance adjusting layer 40 typically contains a magenta pigment. The transmittance adjusting layer 40 may contain a magenta dye instead of the magenta pigment or may contain both the pigment and the dye. Examples of the magenta pigment that can be contained in the transmittance adjusting layer 40 include quinacridone-based pigments. Examples of the magenta dye that can be contained in the transmittance adjusting layer 40 include fuchsine and anthraquinone-based dyes.

The transmittance adjusting layer 40 may contain not only the pigment and dye described above but also a toning pigment or a toning dye. For example, when the transmittance adjusting layer 40 is colored black and the black pigment or dye is reddish, the transmittance adjusting layer 40 may further contain any of the above-described blue pigments and dyes as a toning pigment or a toning dye. Examples of the toning pigment that can be used in this case include, in addition to the above-described blue pigments, various coloring pigments such as the red pigments, yellow pigments, green pigments, magenta pigments, and purple pigments described above. Moreover, examples of the toning dye that can be used in this case include, in addition to the blue dyes described above, various dyes such as the red dyes, green dyes, magenta dyes, yellow dyes, and purple dyes described above.

Alternatively, the transmittance adjusting layer 40 may contain any of the above-described color pigments and dyes other than the black pigments and dyes so as to be colored black.

This transmittance adjusting layer 40 is produced by curing a liquid precursor material. The precursor material for the transmittance adjusting layer 40 contains the resin and the pigment or dye contained in the transmittance adjusting layer 40 described above.

Preferably, the pigment or dye contained in the transmittance adjusting layer 40 has an average particle diameter of 300 nm or less. In the present description, the average particle diameter of the pigment or dye contained in the transmittance adjusting layer 40 is determined by the same method as that for the average particle diameter of particles P described later.

The transmittance adjusting layer 40 may be formed, for example, as a solid print layer using a printing ink. Alternatively, as shown in Figs. 4 and 5, the transmittance adjusting layer 40 may be formed so as to include a plurality of unit adjusting elements 41 that adjust the visible light transmittance. In the example shown in Fig. 4, the plurality of unit adjusting elements 41 have the same shape in plan view. The plurality of unit adjusting elements 41 each have a quadrilateral shape in plan view. The plurality of unit adjusting elements 41 are arranged regularly. In the example shown in Fig. 4, the plurality of unit adjusting elements 41 are arranged in a square array . In the example shown in Fig. 4, the unit adjusting elements 41 have the same shape as the unit profiled elements 23 described above in plan view, and each of the unit adjusting elements 41 is disposed so as to overlap the corresponding one of the unit profiled elements 23 described above. However, this example is not a limitation. The plurality of unit profiled elements 23 may have mutually different shapes. The plurality of unit adjusting elements 41 may have a polygonal shape other than the quadrilateral shape. The plurality of unit profiled elements 23 may be arranged irregularly. Moreover, the unit adjusting elements 41 may have a shape different from the shape of the unit profiled elements 23 described above in plan view. Although not illustrated, the unit adjusting elements 41 may be arranged so as to overlap each other.

No particular limitation is imposed on the dimensions of each unit adjusting element 41 in the plan view of the decorative layered body 10, and the dimensions can be set as appropriate according to the design expressed by the decorative layered body 10. However, from the viewpoint of effectively utilizing the visual effect of the unit adjusting elements 41, it is preferable that each unit adjusting element 41 has a size that can be identified by the naked eye. Specifically, the shortest length of each unit adjusting element 41 may be 1.0 mm or more, 10 mm or more, or 20 mm or more. Moreover, to form a desired pattern by utilizing the arrangement of the plurality of unit adjusting elements 41 to thereby allow the design expression by the pattern, it is preferable that each unit adjusting element 41 is not excessively large. This is because, if each unit adjusting element 41 is excessively large, the flexibility in the arrangement of the plurality of unit adjusting elements 41 in the transmittance adjusting layer 40 is low and the plurality of unit adjusting elements 41 may not be arranged as desired. Specifically, the longest length of each unit adjusting element 41 may be 200 mm or less or 100 mm or less. The size of each unit adjusting element 41 when the decorative layered body 10 is viewed in plan may be 1.0 mm or more and 200 mm or less.

The total light transmittance of at least some of the plurality of unit adjusting elements 41 may differ from the total light transmittance of the other unit adjusting elements 41. In this case, the observer can perceive the Z direction Dz positions of the unit profiled elements 23 overlapping the respective unit adjusting elements 41 such that they differ from each other. The resulting sense of three-dimensionality allows the design characteristics to be more effectively improved.

The thickness of the transmittance adjusting layer 40 is preferably 0.1 $\mu$m or more and 500 $\mu$m or less.

<Filling layer>

The filling layer 50 is a flattening layer that fills in the surface relief of the brightness adjusting layer 30. The filling layer 50 has a surface relief corresponding to the surface relief of the brightness adjusting layer 30. In the illustrated example, the surface of the brightness adjusting layer 30 that faces the filling layer 50 has a surface relief corresponding to the surface relief of the profiled surface 20a. Therefore, the filling layer 50 has a surface relief corresponding to the surface relief of the profiled surface 20a.

The filling layer 50 can be a transparent or opaque resin layer. When the filling layer 50 is opaque, the filling layer 50 can hide at least part of an article to which the decorative member 3 is applied. For example, in the example shown in Fig. 2, when the filling layer 50 is opaque, the decorative member 3 can hide the sensor 5. When the filling layer 50 is opaque, the filling layer 50 may contain a pigments or a dye. The pigment contained in the filling layer 50 is preferably, for example, a black pigment such as carbon black, a white pigment such as titanium oxide, or an aluminum-based pigment. When the filling layer 50 contains any of these pigments, the hiding power of the filling layer 50 is improved. Alternatively, the filling layer 50 may be formed by vapor-depositing a metal such as aluminum, indium, or tin onto another layer of the decorative layered body 10.

In the example shown in Fig. 3, the filling layer 50 functions also as a bonding layer. In the example shown in Fig. 3, the bonding layer 50 bonds (adheres, sticks, or thermally fuses) another layer of the decorative layered body 10 to the molded portion 65. Examples of the material that can be used to form the bonding layer 50 include thermoplastic resins and (meth)acrylate-based copolymers. No particular limitation is imposed on the thermoplastic resin, and examples of the thermoplastic resin that can be used include acrylic resins, vinyl chloride-vinyl acetate copolymers, polyamide resins, polyester resins, chlorinated polypropylenes, chlorinated rubbers, urethane resins, epoxy resins, and styrene resins. Any of these resins may be used alone, or a combination of two or more may be used.

<Functional layer>

The functional layer 55 is a layer provided with the expectation of providing various functions. Examples of the various functions include a hard coating function, an anti-reflective function, an anti-glare function, an anti-static function, and an anti-staining function. In the illustrated example, the functional layer 55 is a release layer. The release layer 55 has releasability that allows the decorative layered body 10 to be easily released from a substrate 72 described later. Examples of the material that can be used to form the release layer 55 include: thermoplastic resins such as acrylic resins, vinyl chloride acetate resins, polyurethane resins, polyolefin resins, polyester resins, epoxy resins, and silicone resins; thermosetting resins obtained by combining these thermoplastic resins with curing agents; UV curable resins; and electron beam curable resins. In the illustrated example, the functional layer 55 forms the front surface 11 of the decorative layered body 10. The other layers of the decorative layered body 10 are observed through the functional layer 55. Therefore, the functional layer 55 is transparent.

The thickness of the decorative layered body 10 having the structure described above may be 0.005 mm or more, 0.025 mm or more, 0.05 mm or more, 0.1 mm or more, or 0.15 mm or more. The thickness of the decorative layered body 10 may be 2 mm or less, 1.0 mm or less, 1 mm or less, 0.75 mm or less, or 0.5 mm or less. Therefore, the thickness of the decorative layered body 10 may be 0.005 mm or more and 2 mm or less.

The focal length of each unit optical element 13 is preferably 0.5 mm or more and 350 mm or less, more preferably 2 mm or more and 250 mm or less, and still more preferably 5 mm or more and 150 mm or less. When the focal length of each unit optical element 13 is 0.5 mm or more and 350 mm or less, a sense of three-dimensionality as thick as or above the decorative layered body 10 can be expressed effectively. In this manner, a rich design expression with a sense of luxury can be achieved, and the design characteristics can be further improved.

The focal length of some of the plurality of unit optical elements 13 may differ from the focal length of the other unit optical elements 13. This allows the observer to perceive the positions of the unit optical elements 13 in the Z direction Dz such that they differ from each other. The resulting sense of three-dimensionality allows the design characteristics to be improved more effectively.

<<Reflectance of decorative layered body>>

Next, the reflectance of the decorative layered body 10 will be described. According to the findings of the inventors, the apparent thickness of the decorative layered body 10 can be perceived so as to be larger than the actual thickness in an effective manner by adjusting the total light reflectance ($R_{SCI}$) and diffuse light reflectance ($R_{SCE}$) of the front surface 11 of the decorative layered body 10. In the example described above, the apparent position of the reflective interface between the profiled surface 20a and the brightness adjusting layer 30 can be perceived so as to be located deeper than the actual position of the reflective interface. In this manner, a rich design with a sense of luxury can be further effectively imparted to the decorative layered body 10.

The total light reflectance ($R_{SCI}$) and diffuse light reflectance ($R_{SCE}$) of the front surface 11 of the decorative layered body 10 in the present embodiment are measured according to JIS Z 8722:2009 under geometric condition c. In the present description, the total light reflectance ($R_{SCI}$) and the diffuse light reflectance ($R_{SCE}$) are the reflectance Y values (Y of the tristimulus values XYZ) measured by SCI and SCE methods using a spectrocolorimeter according to JIS Z 8722:2009. The total light reflectance ($R_{SCI}$) and diffuse light reflectance ($R_{SCE}$) are measured using a spectrocolorimeter (model CM-700d) manufactured by KONICA MINOLTA, INC. In the measurement, the measurement conditions, observation conditions, and measurement/illumination diameters are set as described below. In the measurement of the total light reflectance ($R_{SCI}$) and diffuse light reflectance ($R_{SCE}$), the spectrocolorimeter is vertically pressed against the front surface 11 of the decorative layered body 10 placed on a flat surface. The range of the measurement wavelength of the spectrocolorimeter is 400 nm to 700 nm, and the measurement wavelength intervals are 10 nm.

<Measurement conditions>

- Mode (specular reflection processing mode): I + E (SCI + SCE)

<Observation conditions>

- Colorimetric system: L*a*b*

- Color difference formula: ΔE*ab

- Viewing angle: 10° viewing field

- Main light source: D65

<Measurement diameter / illumination diameter>

By replacing a target mask and changing a lens position, the measurement diameter / illumination diameter are set to $\phi$3 mm/$\phi$6 mm or $\phi$8 mm/$\phi$11 mm.

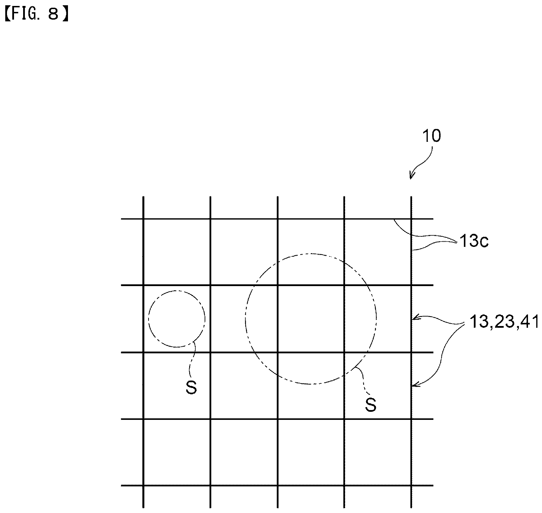

The measurement diameter / illumination diameter are selected according to the size of each unit optical element 13. The illumination diameter is the diameter of an irradiation area of the spectrocolorimeter, and the measurement diameter is the diameter of a measurement area S of the spectrocolorimeter (see Fig. 8).

The position of the measurement area S relative to the unit optical element 13 when the total light reflectance ($R_{SCI}$) and diffuse light reflectance ($R_{SCE}$) are measured is set appropriately according to the relation between the size of the unit optical element 13 and the measurement diameter of the spectrocolorimeter.

In the example shown by a dash-dot line in Fig. 8, the measurement diameter / illumination diameter are selected such that, when the center of the measurement area S is adjusted to coincide with the geometric center of a unit optical element 13, at least 40% of the unit optical element 13 is included in the measurement area S, and then the total light reflectance ($R_{SCI}$) and the diffuse light reflectance ($R_{SCE}$) are set. As for the measurement diameter, the smallest measurement diameter is selected from among selectable measurement diameters. For example, when at least 40% of the unit optical element 13 is included within a virtual circle with a diameter of 3 mm, at least 40% of the unit optical element 13 is included within the measurement area S regardless of whether the measurement diameter / illumination diameter are $\phi$3 mm/$\phi$6 mm or $\phi$8 mm/$\phi$11 mm. However, the measurement diameter / illumination diameter are set to $\phi$3 mm/$\phi$6 mm. When at least 40% of the unit optical element 13 is included within a virtual circle with a diameter of 8 mm but is not included within a virtual circle with a diameter of 3 mm, the measurement diameter / illumination diameter are set to $\phi$8 mm/$\phi$11 mm.

Next, as shown by the dash-dot line or a chain double-dashed line in Fig. 8, the position of the measurement area S relative to a unit optical element 13 is determined such that the center of the measurement area S of the spectrocolorimeter coincides with the geometric center of the unit optical element 13 when the decorative layered body 10 is viewed in plan, and then the total light reflectance ($R_{SCI}$) and diffuse light reflectance ($R_{SCE}$) are measured. The total light reflectance ($R_{SCI}$) and diffuse light reflectance ($R_{SCE}$) measured in the area including at least 40% of the unit optical element 13 are hereinafter referred to also as "overall total light reflectance ($R_{SCI}$(E))" and "overall diffuse light reflectance ($R_{SCE}$(E))," respectively.

When the overall total light reflectance ($R_{SCI}(E)$) and the "overall diffuse light reflectance ($R_{SCE}(E)$) are measured, the measurement diameter / illumination diameter may be set such that one unit optical element 13 is included within the measurement area S, as shown by the chain double-dashed line in Fig. 8.

When at least 40% of a unit optical element 13 is not contained within a virtual circle having a diameter of 8 mm when the decorative layered body 10 is viewed in plan, the measurement diameter / illumination diameter are set to the smallest values (i.e., $\phi$3 mm/$\phi$6 mm). In this case, the total light reflectance ($R_{SCI}$) and diffuse light reflectance ($R_{SCE}$) are measured in both the outer region 13b and the central region 13a of the unit optical element 13.

More specifically, as shown in Fig. 9, the position of the measurement area S relative to a unit optical element 13 is set such that the measurement area S is located within the outer region 13b when the decorative layered body 10 is viewed in plan, and then the total light reflectance ($R_{SCI}$) and the diffuse light reflectance ($R_{SCE}$) are measured. The total light reflectance ($R_{SCI}$) and the diffuse light reflectance ($R_{SCE}$) measured in the outer region 13b of the unit optical element 13 as described above are hereinafter referred to also as "outer total light reflectance ($R_{SCI}(O)$)" and "outer diffuse light reflectance ($R_{SCE}(O)$)," respectively.

In addition, as shown in Fig. 9, the position of the measurement area S relative to the unit optical element 13 is set such that the measurement area S is located within the central area 13a when the decorative layered body 10 is viewed in plan, and then the total light reflectance ($R_{SCI}$) and the diffuse light reflectance ($R_{SCE}$) are measured. The total light reflectance ($R_{SCI}$) and the diffuse light reflectance ($R_{SCE}$) measured in the central area 13a of the unit optical element 13 as described above are hereinafter referred to also as "central total light reflectance ($R_{SCI}(C)$)" and "central diffuse light reflectance ($R_{SCE}(C)$)," respectively.

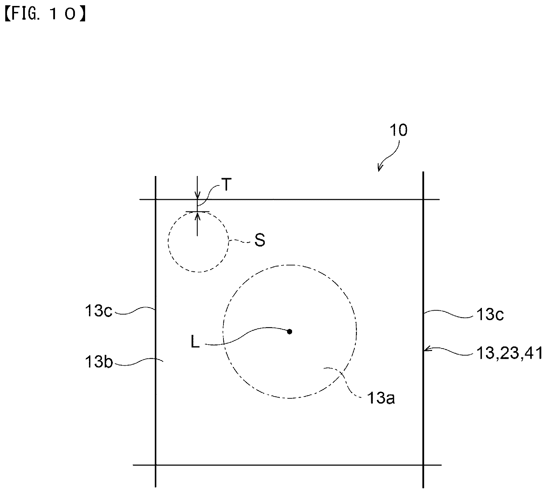

When the total light reflectance ($R_{SCI}$) and the diffuse light reflectance ($R_{SCE}$) are measured in the outer region 13b of the unit optical element 13, the position of the measurement area S relative to the unit optical element 13 is set such that the distance T between the outer edge of the measurement area S and an edge portion 13c of the unit optical element 13 that is closest to the measurement area S is 1 mm, as shown in Fig. 10. In this manner, even when the relief structure 25 is irregular in the vicinity of the edge portion 13c of the unit optical element 13, the influence of the disturbance in the reflected light caused by the irregularity in the relief structure 25 on the measurement value can be reduced.

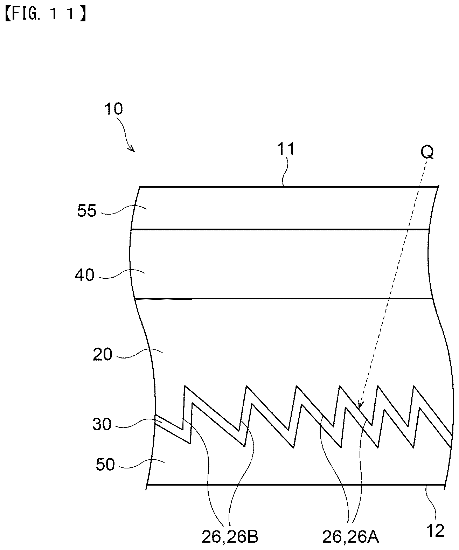

When the total light reflectance ($R_{SCI}$) and the diffuse light reflectance ($R_{SCE}$) are measured in the outer region 13b of the unit optical element 13, the spectrocolorimeter is disposed with respect to the decorative layered body 10 such that light Q emitted from the spectrocolorimeter and entering the decorative layered body 10 is incident on (the inclined surfaces 26A or the connection surfaces 26B, as shown by arrows in Figs. 9 and 11. More specifically, the orientation of the spectrocolorimeter with respect to the decorative layered body 10 is determined as follows. The orientation of the spectrocolorimeter with respect to the decorative layered body 10 is determined such that, in a plane defined by a direction normal to the decorative layered body 10 in the region on which the light from the spectrocolorimeter is incident and the arrangement direction of the inclined surfaces 26A and the connection surfaces 26B in this region, the optical axis of the light Q from the spectrocolorimeter is inclined at the same angle as the above-described viewing angle with respect to the normal direction.

The inventors have found that the apparent thickness of the decorative layered body 10 can be perceived so as to be larger than the actual thickness in an effective manner by adjusting the reflectance of the front surface 11 of the decorative layered body 10 as follows. Specifically, the reflectance of the front surface 11 of the decorative layered body 10 is adjusted such that the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) satisfy the following formulas:

$$R_{SCI}(E) \leq 35\%,$$

$$R_{SCE}(E) \leq 25\%,$$

and

$$1.3 \leq R_{SCI}(E) / R_{SCE}(E) \leq 15.$$

The inventors have also found that the apparent thickness of the decorative layered body 10 can be perceived so as to be much larger than the actual thickness by adjusting the reflectance of the front surface 11 of the decorative layered body 10 as follows. Specifically, the reflectance of the front surface 11 of the decorative layered body 10 is adjusted such that the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) satisfy the following formulas:

$$R_{SCI}(E) \leq 12\%,$$

$$R_{SCE}(E) \leq 6\%,$$

and

$$1.5 \leq R_{SCI}(E) / R_{SCE}(E) \leq 6.$$

The inventors have also found that the apparent thickness of the decorative layered body 10 can be perceived so as to be larger than the actual thickness in an effective manner by adjusting the reflectance of the front surface 11 of the decorative layered body 10 as follows. Specifically, the reflectance of the front surface 11 of the decorative layered body 10 is adjusted such that the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \leq 45\%,$$

$$R_{SCE}(O) \leq 40\%,$$

and

$$1.1 \leq R_{SCI}(O) / R_{SCE}(O) \leq 18.$$

The inventors have also found that the apparent thickness of the decorative layered body 10 can be perceived so as to be much larger than the actual thickness by adjusting the reflectance of the front surface 11 of the decorative layered body 10 as follows. Specifically, the reflectance of the front surface 11 of the decorative layered body 10 is adjusted such that the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \leq 12,$$

$$R_{SCE}(O) \leq 8.5,$$

and

$$1.4 \leq R_{SCI}(O) / R_{SCE}(O) \leq 8.$$

The inventors have also found that the apparent thickness of the decorative layered body 10 can be perceived so as to be larger than the actual thickness in an effective manner by adjusting the reflectance of the front surface 11 of the decorative layered body 10 as follows. Specifically, the reflectance of the front surface 11 of the decorative layered body 10 is adjusted such that the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.9.$$

The inventors have also found that the apparent thickness of the decorative layered body 10 can be perceived so as to be much larger than the actual thickness by adjusting the reflectance of the front surface 11 of the decorative layered body 10 as follows. Specifically, the reflectance of the front surface 11 of the decorative layered body 10 is adjusted such that the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.7.$$

The total light reflectance ($R_{SCI}$) and diffuse light reflectance ($R_{SCE}$) of the front surface 11 of the decorative layered body 10 can be adjusted by adjusting the weight ratio (P/V) of the pigment (P) to the resin (V) contained in the brightness adjusting layer 30. More specifically, when the brightness adjusting layer 30 is formed of a colorless transparent resin and a pigment, P/V is preferably 0.2 or more, more preferably 0.5 or more, and still more preferably 0.8 or more. From the viewpoint of the durability of the brightness adjusting layer 30 and its adhesion to other layers, P/V is preferably 2 or less, more preferably 1.5 or less, and still more preferably 1.2 or less. Therefore, P/V may be 0.2 or more and 2 or less.

<<Function of decorative layered body>>

Next, the function of the decorative layered body 10 will be described. The decorative layered body 10 displays a design and imparts design characteristics to the article to which the decorative layered body 10 is applied. When the decorative layered body 10 can express a sense of three-dimensionality, a rich design with a sense of luxury can be expressed. The sense of three-dimensionality of the decorative layered body 10 can be expressed by forming the physical relief structure. However, in some applications of the decorative layered body 10, the thickness of the decorative layered body 10 cannot be increased sufficiently. Due to such restrictions, the design characteristics may not be improved sufficiently. For example, many decorative members, such as decorative members used for vehicle front grilles, are required to be reduced in thickness from the viewpoint of a reduction in weight. The thickness of a decorative member designed to allow the transmission of electromagnetic waves such as millimeter waves is set according to the wavelength of the millimeter waves and is subject to restrictions. In addition, from the viewpoint of improving the electromagnetic wave transmittance, it is preferable to reduce the thickness of the decorative layered body.

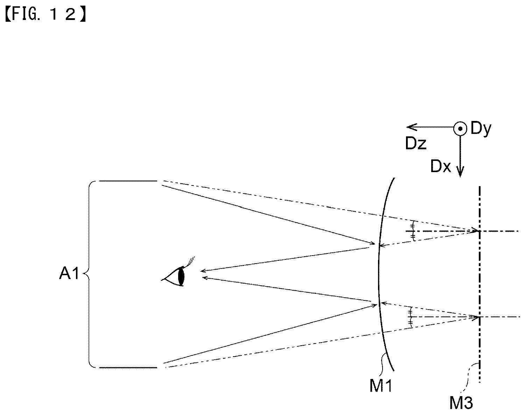

However, in the first embodiment, as shown in Fig. 5, the decorative layered body 10 includes the profiled layer 20 having the relief structure 25 described above, and the unit optical elements 13 exhibit the same optical function as a curved surface lens such as a spherical lens or a cylindrical lens or an optical function corresponding to this optical function. Fig. 12 is an illustration for explaining the optical function of the unit optical elements 13. In the first embodiment, the reflective interface formed between the profiled layer 20 and the brightness adjusting layer 30 is configured to function as a convex mirror. In this case, as shown in Fig. 12, a range A1 reflected in the convex mirror M1 is wider than a specular reflection surface disposed at the same position as the convex mirror M1. Specifically, the range A1 reflected in the convex mirror M1 is the same as a range A1 reflected in a specular reflection surface M3 disposed further away from the observer in the Z direction Dz. As a result, the observer observing the reflection in the reflective interface feels that the reflective interface serving as the convex mirror M1 is located deeper than the actual position of the reflective interface. Specifically, the unit optical elements 13 can display a design with a sense of depth that is deeper than the actual thickness of the unit optical elements 13. In this manner, the unit optical elements 13 can display a design with a sense of depth that is deeper than its thickness. Therefore, a sense of three-dimensionality that is as thick as or above the unit optical elements 13 can be expressed while the thickness of the unit optical elements 13 is reduced. As a result, a rich design expression with a sense of luxury can be achieved, and the design characteristics can be improved.

Moreover, in the first embodiment, the reflectance of the front surface 11 of the decorative layered body 10 is adjusted as described above. Therefore, the observer observing the reflection in the reflective interface feels that the reflective interface between the profiled layer 20, serving as the convex mirror M1, and the brightness adjusting layer 30 is located deeper than the actual position of the reflective interface.

<<Method for producing decorative member>>

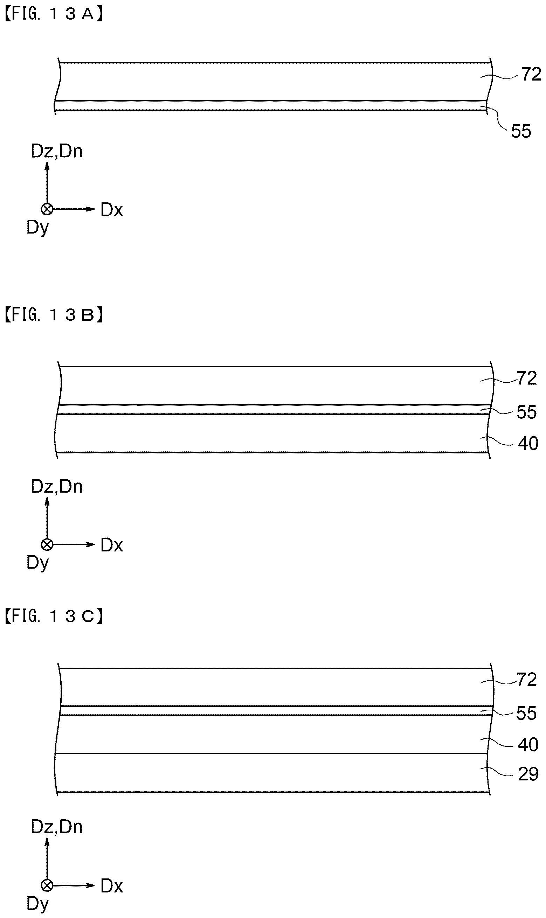

Referring next to Figs. 13A to 13F, a method for producing the decorative member 3 in the first embodiment (i.e., the decorative member 3 shown in Fig. 2) will be described. Figs. 13A to 13F are cross-sectional views showing a method for producing a transfer sheet 70 used to transfer the decorative layered body 10 to the molded portion 65.

First, as shown in Fig. 13A, a flat substrate 72 is prepared. The substrate 72 is a member that is to be removed from the decorative layered body 10 when the decorative layered body 10 is transferred to the molded portion 65. The substrate 72 used may be a substrate generally used for a transfer sheet such as a polyester resin film or a polyolefin resin film. A parting layer may be formed on one side of the substrate 72. The parting layer has releasability that facilitates the removal of the substrate 72 from the decorative layered body 10. Examples of the material that can be used to form the parting layer include: thermoplastic resins such as acrylic resins, vinyl chloride acetate resins, polyurethane resins, polyolefin resins, polyester resins, epoxy resins, and silicone resins; and thermosetting resins obtained by combining these thermoplastic resins with curing agents. Instead of forming the parting layer on the substrate 72, well-known release treatment may be applied to the surface of the substrate 72. In this case also, the substrate 72 can be easily removed from the decorative layered body 10.

Next, a release layer 55 is formed on the substrate 72. When the parting layer has been formed on the substrate 72, the release layer 55 is formed on the parting layer. The release layer 55 formed on the substrate 72 allows the substrate 72 to be easily removed from the decorative layered body 10.

Next, as shown in Fig. 13B, the transmittance adjusting layer 40 is formed on the release layer 55. The transmittance adjusting layer 40 may be formed by applying a coating solution for forming the transmittance adjusting layer 40 and curing the coating solution. For example, the transmittance adjusting layer 40 may be formed by applying an ink containing any of the pigments and/or dyes described above (e.g., a black ink containing carbon black) by gravure printing.

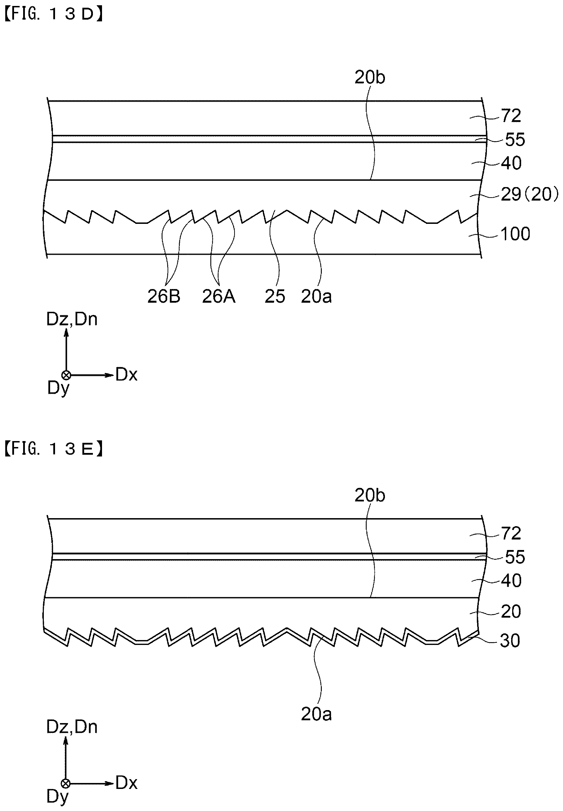

Next, as shown in Fig. 13C, a layer 29 of a precursor material for the profiled layer 20 described above is formed on the transmittance adjusting layer 40. Next, as shown in Fig. 13D, a shaping die 100 is pressed against the layer 29 to shape the layer 29. The shaping die 100 has a surface relief corresponding to the relief structure 25. Next, the layer 29 is irradiated with ultraviolet rays to cure the layer 29. In this manner, the profiled layer 20 with the relief structure 25 formed on the profiled surface 20a is produced. The shaping die 100 is then detached from the profiled layer 20. The shaping die 100 may be detached from the layer 29 before the layer 29 is irradiated with UV rays.

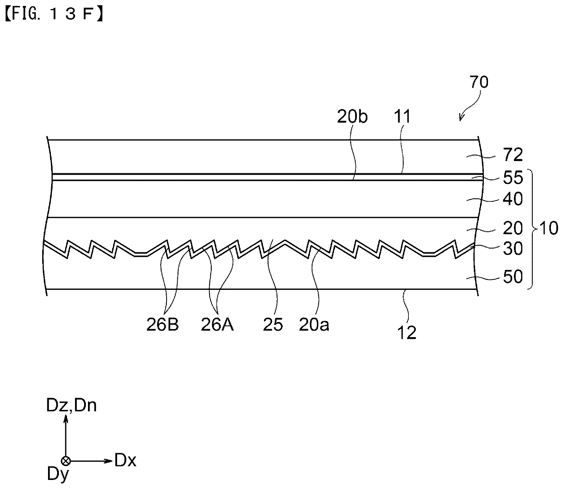

Next, as shown in Fig. 13E, the reflective layer 30 is formed on the profiled surface 20a of the profiled layer 20 by sputtering, vapor deposition such as vacuum vapor deposition, or coating. Next, as shown in Fig. 13F, the filling layer 50 is formed on the reflective layer 30. The filling layer 50 serves as a flattening layer that fills in the surface relief of the reflective layer 30. The transfer sheet 70 is thereby produced.

Next, the transfer sheet 70 is placed in a forming mold for molding the molded portion 65. Next, a molten resin is introduced between the back surface 12 (i.e., the filling layer 50) of the decorative layered body 10 and the inner surface of the forming mold, and the resin is solidified within the forming mold. In this manner, the molded portion 65 joined to the transfer sheet 70 is formed within the forming mold. Then the substrate 72 is removed from the decorative layered body 10. The decorative member 3 (see Fig. 2) with the decorative layered body 10 transferred to the molded portion 65 is thereby completed. This method for forming the decorative member 3 is known as in-mold decorating.

<<Modification 1 of first embodiment>>

In the specific example described above, the decorative layered body 10 includes the transmittance adjusting layer 40, but this example is not a limitation. The decorative layered body 10 need not necessarily include the transmittance adjusting layer 40 so long as the visible light reflectance measured on the front surface 11 side of the decorative layered body 10 is a prescribed reflectance described later.

<<Modification 2 of first embodiment>>

In the example described above, the brightness adjusting layer 30 is a reflective layer, but this is not a limitation. The brightness adjusting layer 30 may be a refractive index modulation layer. The refractive index modulation layer 30 is a layer having a refractive index different from the refractive index of an adjacent layer, and a reflective interface is formed between the refractive index modulation layer 30 and the adjacent layer. In the example described above, the refractive index modulation layer 30 has a refractive index different from the refractive index of the profiled layer 20, and a reflective interface is formed between the refractive index modulation layer 30 and the profiled layer 20. In the example described above, the refractive index modulation layer 30 covers the relief structure 25 of the profiled layer 20, and a reflective interface is formed between the refractive index modulation layer 30 and the profiled surface 20a. Therefore, the light reflectance of the profiled surface 20a can be improved. In this manner, the brightness of the light reflected by the decorative layered body 10 can be adjusted.

The refractive index modulation layer 30 contains a high refractive index material. Examples of the high refractive index material that can be used to form the refractive index modulation layer 30 include titanium oxide, zirconium oxide, silicon oxide, hollow silica, aluminum oxide, zinc oxide, zinc sulfide, and barium titanate. By forming the refractive index modulation layer 30 using any of the above materials, the electromagnetic wave transmittance of the refractive index modulation layer 30 can be improved. The brightness adjusting layer 30 serving as the refractive index modulation layer will be described later in detail.

<<Modification 3 of first embodiment>>

The brightness adjusting layer 30 may be a colored layer. The colored layer 30 absorbs part of the light entering the decorative layered body 10, and the visible light reflectance at the reflection interface between the profiled surface 20a and the brightness adjusting layer 30 is thereby adjusted. The colored layer 30 can impart a desired color to the decorative layered body 10. In this case, particles formed of a pigment and/or a dye may be dispersed in the brightness adjusting layer 30. The brightness adjusting layer 30 serving as the colored layer will be described later in detail.

<<Modification 4 of first embodiment>>

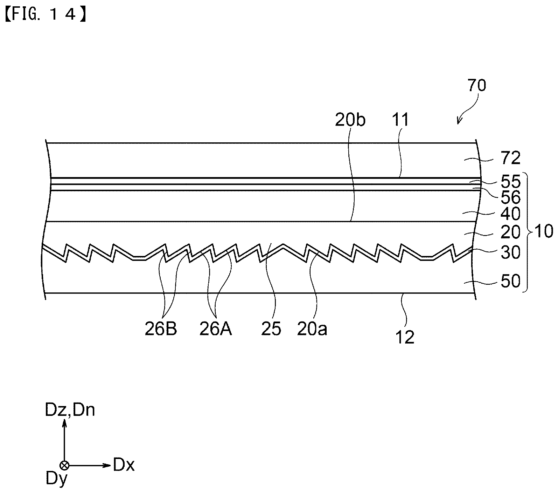

In the specific example described above, the transmittance adjusting layer 40 is produced by applying the ink containing a pigment and/or a dye to the functional layer 55 using gravure printing, but this is not a limitation. For example, a preformed sheet-shaped transmittance adjusting layer 40 may be stacked on the functional layer 55 with a bonding layer 56 interposed therebetween, as shown in Fig. 14. The sheet-shaped transmittance adjusting layer 40 can be produced, for example, using a resin material (such as polycarbonate (PC) or acrylic) mixed with a coloring agent. The bonding layer 56 can be produced, for example, using an adhesive ink. The bonding layer 56 may contain a coloring agent.

<<Modification 5 of first embodiment>>

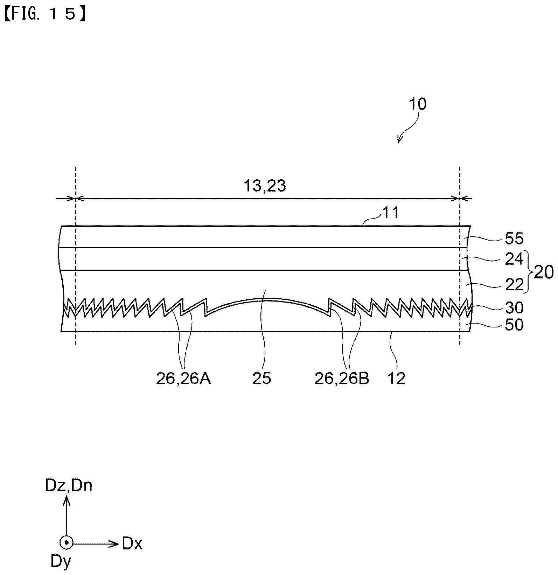

Instead of providing the transmittance adjusting layer 40 in the decorative layered body 10, the total light transmittance of the profiled layer 20 may be adjusted. In this case, the profiled layer 20 may contain particles formed of a pigment and/or a dye, as in the case of the transmittance adjusting layer 40 described above. For example, as shown in Fig. 15, the profiled layer 20 may include a decorative layer that forms the profiled surface 20a and a transmittance adjusting layer 24 that is located at a side of the front surface 11 of the decorative layered body 10 than the decorative layer 22. In this case, the transmittance adjusting layer 24 in the profiled layer 20 may have a structure similar to that of the transmittance adjusting layer 40 described above.

<<Modification 6 of first embodiment>>

Alternatively, the profiled layer 20 as a whole may function as a transmittance adjusting layer. In this case, particles formed of a pigment and/or a dye may be dispersed over the entire profiled layer 20 (and therefore also in the relief structure 25). In this case, the profiled layer 20 may have the same total light transmittance as the transmittance adjusting layer 40 described above. In this case also, a sense of three-dimensionality as thick as or above the decorative layered body 10 can be expressed more effectively. Therefore, a rich design expression with a sense of luxury can be achieved, and the design characteristics can be further improved. This modification will be described later in detail.

<<Modification 7 of first embodiment>>

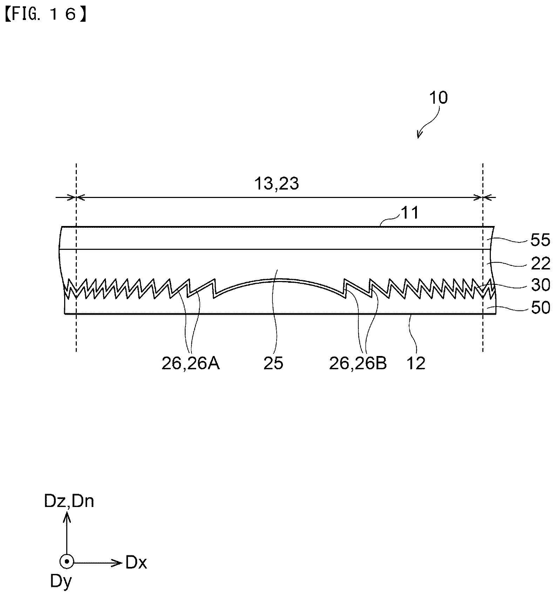

Alternatively, as shown in Fig. 16, the functional layer 55 may have the function of adjusting the visible light transmittance. In this case, the functional layer 55 may have the same total light transmittance as the transmittance adjusting layer 40 described above. In this case also, a sense of three-dimensionality as thick as or above the decorative layered body 10 can be expressed more effectively. Therefore, a rich design expression with a sense of luxury can be achieved, and the design characteristics can be further improved.

<<Modification 8 of first embodiment>>

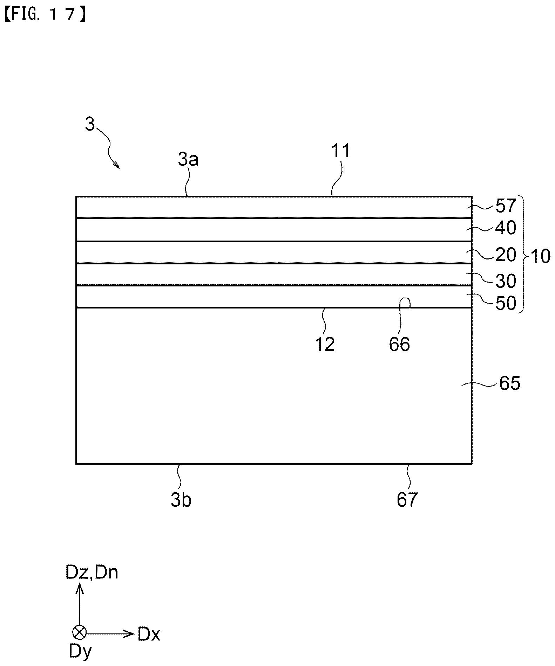

As shown in Fig. 17, the decorative layered body 10 may include a substrate layer 57. In this case, the decorative layered body 10 can be produced by sequentially stacking the other layers of the decorative layered body 10 onto the substrate layer 57.

The substrate layer 57 may be formed from a film-like member. Any material having appropriate supporting properties can be used as the material forming the substrate layer 57, and examples of the material that can be used include acrylates, ABS, polyvinyl chloride, polymethyl methacrylate, polyethylene terephthalate, polyethylene naphthalate, polycarbonate, polystyrene, cyclic polyolefin, and polypropylene. When the decorative layered body 10 is formed so as to be capable of conforming to a three-dimensional curved surface, the material forming the substrate layer 57 is preferably an acrylate, ABS, or polyvinyl chloride. An acrylate, ABS, polyvinyl chloride, polycarbonate, and polypropylene can be stretched by applying heat. Therefore, when the decorative layered body 10 is formed so as to be applicable to a three-dimensional curved surface, there is little risk that the substrate layer 57 will inhibit the shaping of the decorative layered body 10. Moreover, when the decorative layered body 10 is shaped, the risk of the formation of cracks in the substrate layer 57 to cause the substrate layer 57 to whiten is reduced.

No particular limitation is imposed on the thickness of the substrate layer 57 so long as it is thick enough to appropriately support the other layers of the decorative layered body 10, but the thickness is preferably 50 $\mu$m or more. When the decorative layered body 10 is formed so as to be capable of conforming to a three-dimensional curved surface, the thickness of the substrate layer 57 is preferably 100 $\mu$m or less.

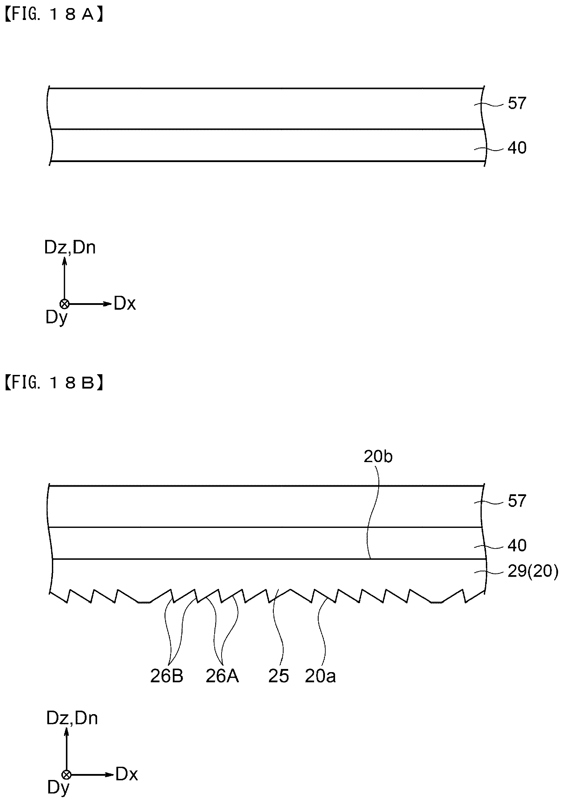

Referring next to Figs. 18A to 18D, a method for producing the decorative member 3 shown in Fig. 17 will be described. Figs. 18A to 18D are cross-sectional views showing the method for producing the decorative layered body 10 shown in Fig. 17.

First, a flat substrate is prepared as the substrate layer 57. Next, as shown in Fig. 18A, the transmittance adjusting layer 40 is formed on the substrate layer 57. The transmittance adjusting layer 40 is formed using the same method as that shown in Fig. 13B.

Next, as shown in Fig. 18B, the profiled layer 20 is formed on the transmittance adjusting layer 40. The profiled layer 20 is formed using the same method as that shown in Figs. 13C and 13D. Specifically, first, a layer 29 of a precursor material for the profiled layer 20 is formed on the substrate layer 57. Next, the shaping die 100 is pressed against the layer 29, and then the layer 29 is cured. The profiled layer 20 is thereby formed.

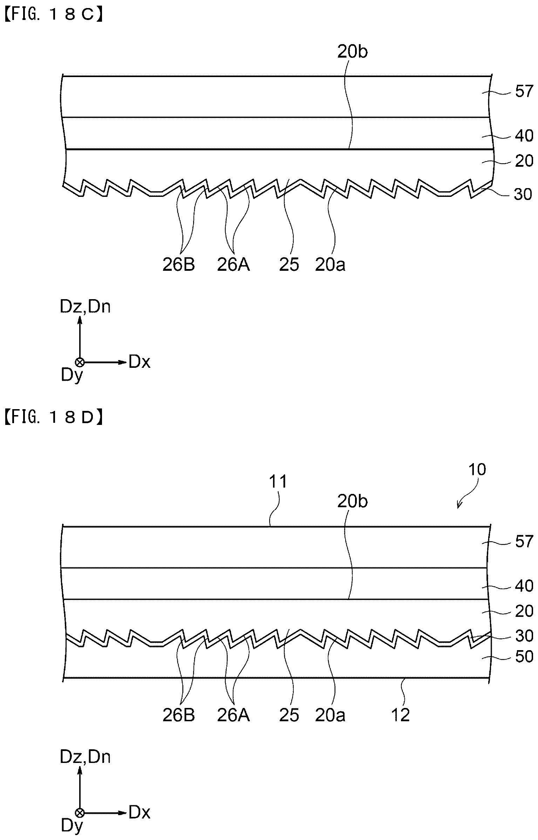

Next, as shown in Fig. 18C, the brightness adjusting layer 30 is formed on the profiled surface 20a of the profiled layer 20. Next, as shown in Fig. 18D, the filling layer 50 is formed on the brightness adjusting layer 30. The decorative layered body 10 shown in Fig. 17 is thereby produced.

Next, the decorative layered body 10 is pre-shaped using a preforming die having a shape corresponding to the shape of the front surface 3a of the decorative member 3. Then the pre-shaped decorative layered body 10 is placed in a forming mold for molding the molded portion 65. Next, a molten resin is introduced between the back surface 12 (i.e., the filling layer 50) of the decorative layered body 10 and the inner surface of the forming mold, and the resin is solidified within the forming mold. In this manner, the molded portion 65 joined to the decorative layered body 10 is formed within the forming mold, and the decorative member 3 shown in Fig. 17 is completed.

<<Modification 9 of first embodiment>>

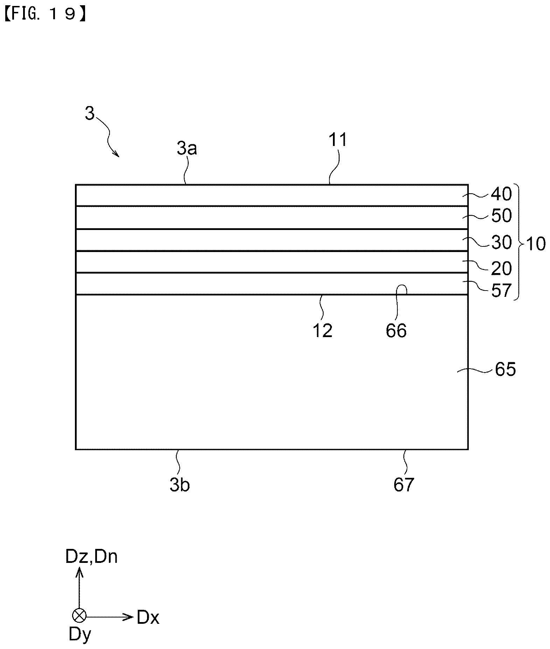

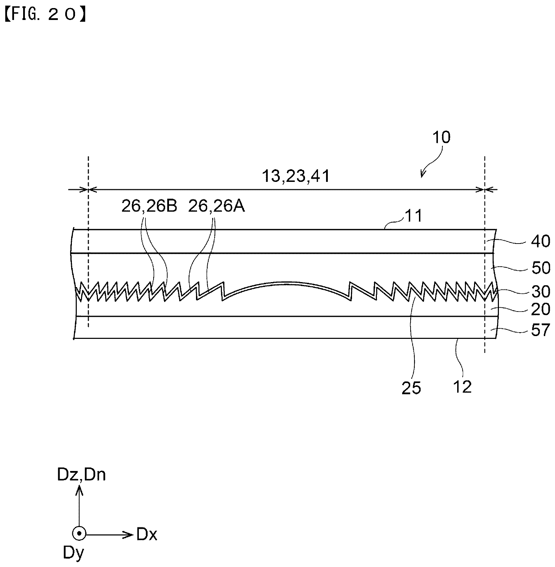

In the example described above, the profiled surface 20a of the profiled layer 20 faces the back surface 12 of the decorative layered body 10, but this is not a limitation. As shown in Figs. 19 and 20, the profiled surface 20a may face the front surface 11 of the decorative layered body 10. In the example shown in Figs. 19 and 20, a reflective interface is formed between the filling layer 50 and the brightness adjusting layer 30, and the brightness adjusting layer 30 may adjust the visible light reflectance at the reflective interface. When the brightness adjusting layer 30 is a refractive index modulation layer, the refractive index of the brightness adjusting layer 30 may differ from the refractive index of the filling layer 50.

Of course, in the example shown in Figs. 19 and 20 also, a reflective interface may be formed between the brightness adjusting layer 30 and the profiled layer 20. In this case, the brightness adjusting layer 30 may be a refractive index modulation layer, and the refractive index of the brightness adjusting layer 30 may differ from the refractive index of the profiled layer 20.

In the example shown in Figs. 19 and 20, the reflective interface is observed through the filling layer 50. Therefore, the filling layer 50 is transparent. In this case also, the brightness adjusting layer 30 can adjust the visible light reflectance measured on the front surface 11 side of the decorative layered body 10. In the example shown in Figs. 19 and 20, the profiled layer 20 may be opaque. When the profiled layer 20 is opaque, the profiled layer 20 can hide at least part of the article to which the decorative member 3 is applied. For example, in the example shown in Figs. 19 and 20, when the profiled layer 20 is opaque, the decorative member 3 can hide the sensor 5.

<<Modification 10 of first embodiment>>

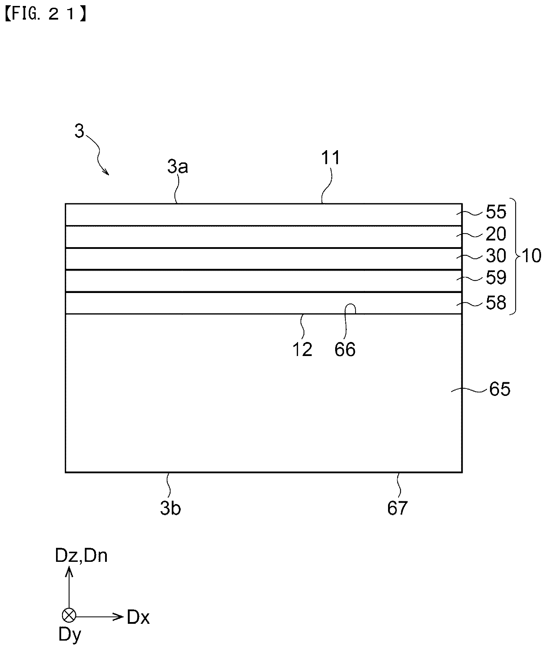

As shown in Fig. 21, the decorative layered body 10 may have a backer layer 58. The backer layer 58 is a layer that reinforces the decorative layered body 10 and allows the decorative layered body 10 to maintain its shape as an integrated body. When the decorative layered body 10 has the backer layer 58, the strength of the decorative layered body 10 is improved. Therefore, as described later, the decorative layered body 10 can be pre-formed before joining to the molded portion 65. In the example shown in Fig. 21, the backer layer 58, a bonding layer 59, the brightness adjusting layer 30, the profiled layer 20, the transmittance adjusting layer 40, and the functional layer 55 are stacked in this order in the direction from the back surface 12 to the front surface 11 of the decorative layered body 10. The backer layer 58 forms the back surface 12 of the decorative layered body 10.

Examples of the material that can be used to form the backer layer include ABS resins, polyolefin resins, styrene resins, (meth)acrylic resins, vinyl chloride resins, and polycarbonate resins. The polyolefin resin is preferably a polypropylene resin. Of these resins, ABS resins, polypropylene resins, and polycarbonate resins are particularly preferred. When the material forming the molded portion 65 is an ABS resin, the material forming the backer layer is preferably an ABS resin. When the material forming the molded portion 65 is a polypropylene resin, the material forming the backer layer is preferably a polypropylene resin. When the material forming the molded portion 65 is a polycarbonate resin, the material forming the backer layer is preferably a polycarbonate resin. The backer layer 58 may be a film-like member produced using the material for forming the backer layer. The thickness of the backer layer 58 is, for example, 0.1 mm or more and 1.0 mm or less.

The backer layer 58 may be transparent or opaque. When the backer layer 58 is opaque, the backer layer 58 can hide at least part of the article to which the decorative member 3 is applied. For example, in the example shown in Fig. 21, when the backer layer 58 is opaque, the decorative member 3 can hide the sensor 5.

The bonding layer 59 bonds the backer layer 58 to another layer of the decorative layered body 10. The material forming the bonding layer 59 can be the same material as the material forming the filling layer 50 serving as the bonding layer.

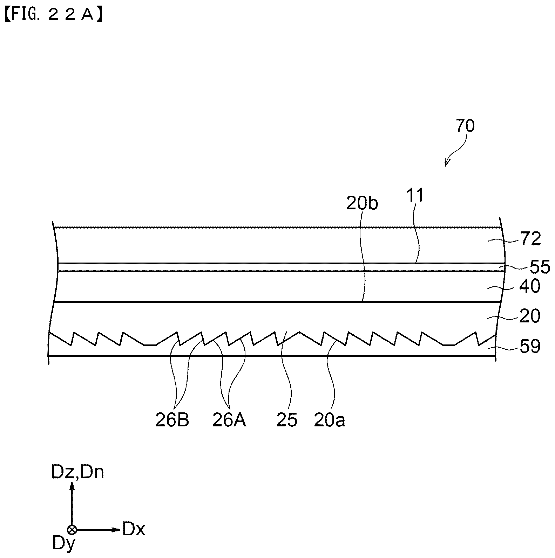

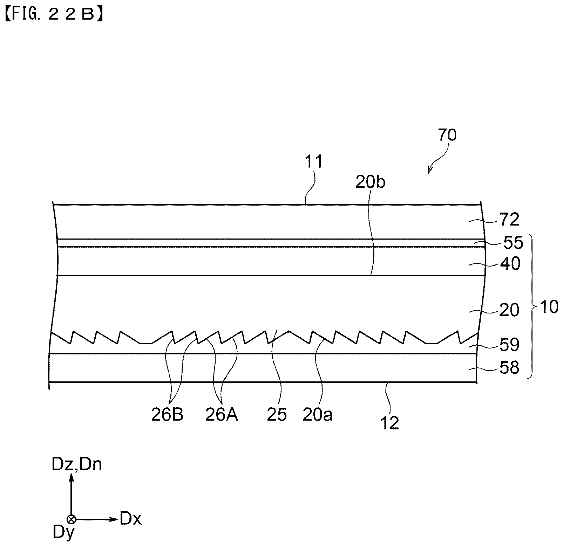

Referring next to Figs. 13A to 13E, 22A, and 22B, the method for producing the decorative member 3 shown in Fig. 21 will be described.

First, the functional layer 55 serving as a release layer, the transmittance adjusting layer 40, the profiled layer 20, and the brightness adjusting layer 30 are formed on the substrate 72 by the same method as that shown in Figs. 13A to 13E. Next, as shown in Fig. 22A, the bonding layer 59 is formed on the brightness adjusting layer 30. Next, as shown in Fig. 22B, the bonding layer 59 is bonded to the backer layer 58. Finally, the substrate 72 is removed from the decorative layered body 10. The decorative layered body 10 shown in Fig. 21 is thereby produced.

Next, the decorative layered body 10 is pre-shaped using a preforming die having a shape corresponding to the shape of the front surface 3a of the decorative member 3. Then the pre-shaped decorative layered body 10 is placed in a forming mold for molding the molded portion 65. Next, a molten resin is introduced between the back surface 12 (i.e., the backer layer 58) of the decorative layered body 10 and the inner surface of the forming mold, and the resin is solidified within the forming mold. In this manner, the molded portion 65 joined to the decorative layered body 10 is formed within the forming mold, and the decorative member 3 shown in Fig. 21 is completed. This method of forming the decorative member 3 is known as insert molding.

<<Modification 11 of first embodiment>>

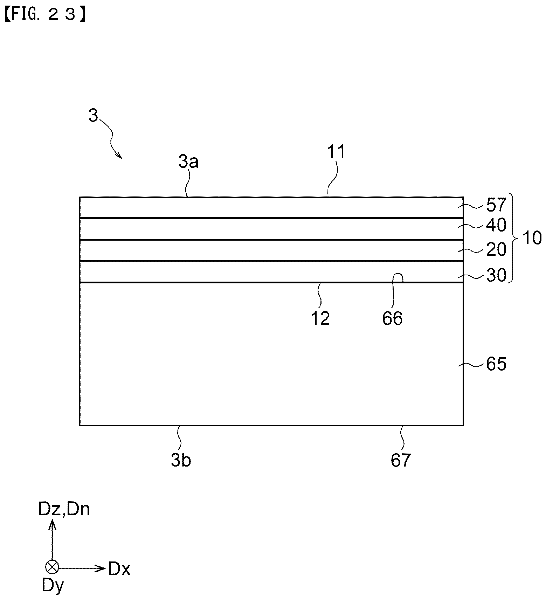

When the decorative layered body 10 includes the substrate layer 57, the decorative layered body 10 need not necessarily include the backer layer 58. When the brightness adjusting layer 30 fills in the surface relief of the profiled layer 20, the decorative layered body 10 need not necessarily include the filling layer 50. In an example shown in Fig. 23, the brightness adjusting layer 30, the profiled layer 20, the transmittance adjusting layer 40, and the substrate layer 57 are stacked in this order in the direction from the back surface 12 to the front surface 11 of the decorative layered body 10. The substrate layer 57 forms the front surface 11 of the decorative layered body 10, and the brightness adjusting layer 30 forms the back surface 12 of the decorative layered body 10.

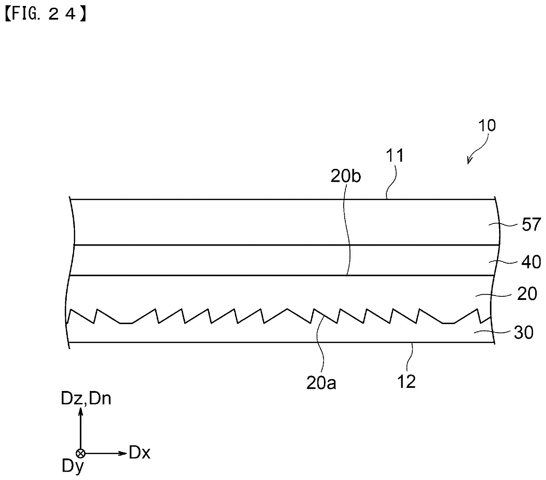

Referring next to Figs. 18A to 18C and 24, a method for producing the decorative member 3 shown in Fig. 23 will be described.

First, the transmittance adjusting layer 40 and the profiled layer 20 are formed on the substrate layer 57 by the same method as that shown in Figs. 18A to 18C. Next, as shown in Fig. 24, the brightness adjusting layer 30 is formed so as to fill in the surface relief of the profiled surface 20a of the profiled layer 20. The decorative layered body 10 shown in Fig. 23 is thereby produced.

Next, the decorative layered body 10 is pre-shaped using a preforming die having a shape corresponding to the shape of the front surface 3a of the decorative member 3. Then the pre-shaped decorative layered body 10 is placed in a forming mold for molding the molded portion 65. Next, a molten resin is introduced between the back surface 12 (i.e., the brightness adjusting layer 30) of the decorative layered body 10 and the inner surface of the forming mold, and the resin is solidified within the forming mold. In this manner, the molded portion 65 joined to the decorative layered body 10 is formed within the forming mold, and the decorative member 3 shown in Fig. 23 is completed.

<<Modification 12 of first embodiment>>

The decorative layered body 10 may include an opaque masking layer 60 as described below. The masking layer 60 hides at least part of the article to which the decorative member 3 is applied and at least part of the molded portion 65. The masking layer 60 may be formed, for example, of a pigment and/or a dye and a binder resin. Preferred examples of the pigment contained in the masking layer 60 include black pigments such as carbon black, white pigments such as titanium oxide, and aluminum-based pigments. When the masking layer 60 contains any of the above pigments, the hiding power of the masking layer 60 is improved. Alternatively, the masking layer 60 may be formed by vapor deposition of a metal such as aluminum, indium, or tin onto another layer of the decorative layered body 10. With the masking layer 60, the overall total light reflectance ($R_{SCI}(E)$), overall diffuse light reflectance ($R_{SCE}(E)$), outer total light reflectance ($R_{SCI}(O)$), outer diffuse light reflectance ($R_{SCE}(O)$), central total light reflectance ($R_{SCI}(C)$), and central diffuse light reflectance ($R_{SCE}(C)$) of the decorative layered body 10 can be adjusted. For example, the reflectance of the decorative layered body 10 differs depending on whether the masking layer 60 contains a black pigment or a white pigment.

<<Modification 13 of first embodiment>>

The decorative layered body 10 may include a bonding layer 61 as described later. The bonding layer 61 bonds (adheres, sticks, or thermally fuses) another layer of the decorative layered body 10 to the molded portion 65.

<<Modification 14 of first embodiment>>

The decorative layered body 10 may include a scattering layer. The scattering layer forms the front surface 11 of the decorative layered body 10 or is located between the front surface 11 and both the profiled layer 20 and the brightness adjusting layer 30. The scattering layer scatters visible light reflected by the profiled layer 20 or the brightness adjusting layer 30. Since the light reflected by the profiled layer 20 or the brightness adjusting layer 30 is scattered by the scattering layer, a viewing angle within which the profiled layer 20 or the brightness adjusting layer 30 can be seen from the front surface 11 of the decorative layered body 10 can be widened. Moreover, since the light is scattered by the scattering layer, homogenized light is emitted from the front surface 11 of the decorative layered body 10.

The scattering layer may contain a binder resin and a light scattering material dispersed in the binder resin. In this case, the scattering layer can scatter light isotropically by utilizing the difference in refractive index between the binder resin and the light scattering material or by utilizing the reflectance of the light scattering material.

As the binder resin contained in the scattering layer, a well-known material such as a chlorine-based resin, a urethane resin, an acrylic urethane resin, an acrylic resin, a polyester resin, a polyamide resin, a butyral resin, a polystyrene resin, a nitrocellulose resin (cellulose nitrate), or a cellulose acetate resin can be used.

The light scattering material contained in the scattering layer may be appropriately selected according to the light scattering properties required of the scattering layer. Examples of the light scattering material include organic particles such as plastic beads and inorganic particles such as silica. Examples of the plastic beads include melamine beads, acrylic beads, acrylic-styrene beads, polycarbonate beads, polyethylene beads, polystyrene beads, and vinyl chloride beads. Of these, acrylic beads are preferred. The light scattering material may be air bubbles.

By adding the light scattering material to the functional layer 55 or the transmittance adjusting layer 40, the resulting layer can serve as a scattering layer.

When the scattering layer forms the front surface 11 of the decorative layered body 10, a surface relief may be formed on a surface of the scattering layer that forms the front surface 11. In this case, the scattering layer need not necessarily contain the light scattering material. The surface relief of the front surface 11 of the decorative layered body 10 can also scatter the light reflected by the profiled layer 20 or the brightness adjusting layer 30.

<<Modification 15 of first embodiment>>

The decorative layered body 10 may include a UV absorbing layer. The UV absorbing layer is a layer containing a UV absorber. For example, the UV absorbing layer forms the front surface of the decorative layered body 10. Alternatively, the UV absorbing layer is located between the front surface 11 and the transmittance adjusting layer 40. Alternatively, the UV absorbing layer is located between the front surface 11 and both the profiled layer 20 and the brightness adjusting layer 30. In this case, the discoloration of the transmittance adjusting layer 40, the profiled layer 20, and the brightness adjusting layer 30 due to UV rays entering the decorative layered body 10 can be suppressed.

The UV absorbing layer allows visible light to pass therethrough. A well-known material can be used as the material forming the UV absorbing layer. For example, the UV absorbing layer may be formed using a UV absorber and a binder resin. As the UV absorber contained in the UV absorbing layer, hydroxyphenyltriazine-based UV absorbers, benzotriazole-based UV absorbers, titanium dioxide, etc. can be used. As the binder resin for forming the UV absorbing layer, general-purpose thermoplastic resins, thermosetting resins, and ionizing radiation curable resins can be used.

By adding the UV absorber to the functional layer 55 or the transmittance adjusting layer 40, the resulting layer can serve as a UV absorbing layer.

<<Modification 16 of first embodiment>>

The decorative layered body 10 may further include a design pattern layer. A design pattern such as a figure, a design, a picture, a photograph, a character, a mark, a pictogram, a letter, or a number may be formed in the design pattern layer. In this case, a design expression representing a background may be displayed on the decorative layered body 10. For example, a wood grain or marble-like design pattern, a metallic texture, or a geometric pattern may be provided. The design pattern provided in the decorative layered body 10 may be a printed layer formed by printing or a transferred layer transferred on the decorative layered body 10.

<<Modification 17 of first embodiment>>

The decorative layered body 10 may further include an adhesion improving layer or an adhesive layer for improving the adhesion and bonding between adjacent layers.

<<Modification 18 of first embodiment>>

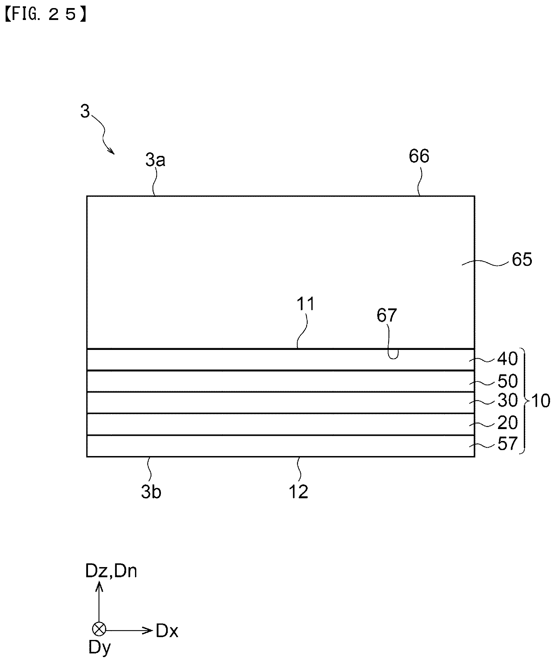

In the example described above, the decorative layered body 10 forms the front surface 3a of the decorative member 3, but this is not a limitation. As shown in Fig. 25, the decorative layered body 10 may form the back surface 3b of the decorative member 3. In this case, as shown in Figs. 17 and 18, the profiled layer 20 and the brightness adjusting layer 30 may be stacked in this order in the direction from the back surface 3b to the front surface 3a of the decorative layered body 10.

In the example shown in Fig. 25, as in the example shown in Fig. 19, a reflective interface may be formed between the filling layer 50 and the brightness adjusting layer 30, and the visible light reflectance of the reflective interface may be adjusted by the brightness adjusting layer 30. When the brightness adjusting layer 30 is a refractive index modulation layer, the refractive index of the brightness adjusting layer 30 may differ from the refractive index of the filling layer 50.

Of course, in the example shown in Fig. 25, a reflective interface may be formed between the brightness adjusting layer 30 and the profiled layer 20. In this case, the brightness adjusting layer 30 may be a refractive index modulation layer, and the refractive index of the brightness adjusting layer 30 may differ from the refractive index of the profiled layer 20.

In the example shown in Fig. 25, the decorative layered body 10 includes the substrate layer 57, the profiled layer 20, the brightness adjusting layer 30, the filling layer 50, and the transmittance adjusting layer 40. The substrate layer 57, the profiled layer 20, the brightness adjusting layer 30, the filling layer 50, and the transmittance adjusting layer 40 are stacked in this order in the direction from the back surface 3b to the front surface 3a of the decorative member 3. The transmittance adjusting layer 40 forms the front surface 11 of the decorative layered body 10, and the substrate layer 57 forms the back surface 12 of the decorative layered body 10. The transmittance adjusting layer 40 is joined to the back surface 67 of the molded portion 65. Of course, a bonding layer may be disposed between the transmittance adjusting layer 40 and the molded portion 65. In this case, the bonding layer may form the front surface 11 of the decorative layered body 10.

In the example shown in Fig. 25, the brightness adjusting layer 30 and/or the profiled layer 20 is observed through the molded portion 65 and the filling layer 50. Therefore, the molded portion 65 and the filling layer 50 are transparent. The brightness adjusting layer 30 may also be transparent.

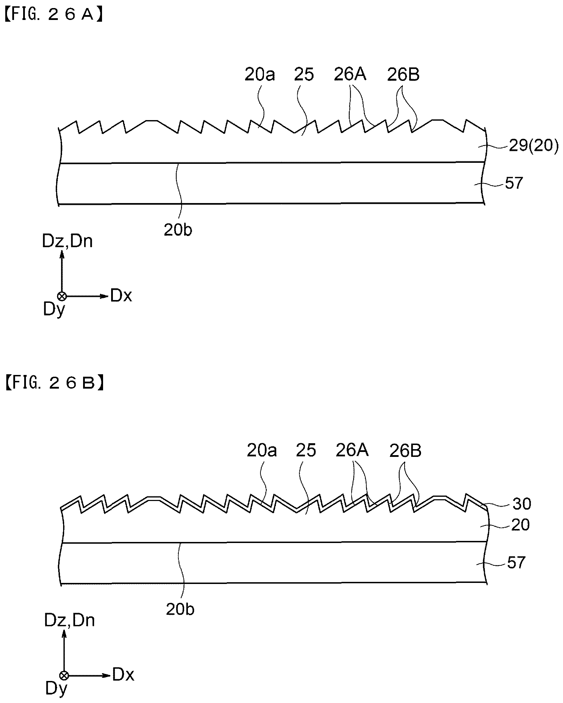

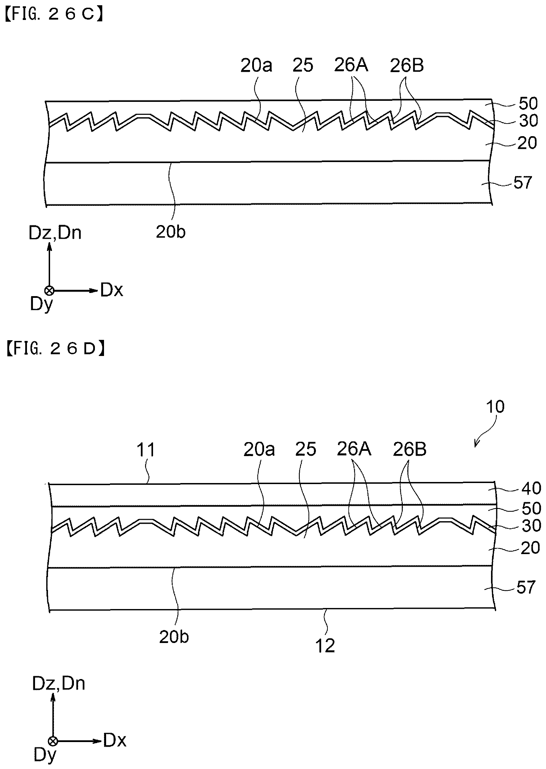

The decorative member 3 shown in Fig. 25 can be produced, for example, as follows. First, as shown in Fig. 26A, the profiled layer 20 is formed on one side of the substrate layer 57. Next, as shown in Fig. 26B, the brightness adjusting layer 30 is formed on the profiled surface 20a of the profiled layer 20. Next, as shown in Fig. 26C, the filling layer 50 is formed on the brightness adjusting layer 30. Next, as shown in Fig. 26D, the transmittance adjusting layer 40 is formed on the filling layer 50. The decorative layered body 10 shown in Fig. 25 is thereby produced.

Next, the decorative layered body 10 is pre-shaped using a preforming die having a shape corresponding to the shape of the front surface 3a of the decorative member 3. Then the pre-shaped decorative layered body 10 is placed in a forming mold for molding the molded portion 65. Next, a molten resin is introduced between the front surface 11 of the decorative layered body 10 (i.e., the transmittance adjusting layer 40) and the inner surface of the forming mold, and the resin is solidified within the forming mold. The molded portion 65 joined to the decorative layered body 10 is thereby formed within the forming mold, and the decorative member 3 shown in Fig. 25 is completed.

<<Modification 19 of first embodiment>>

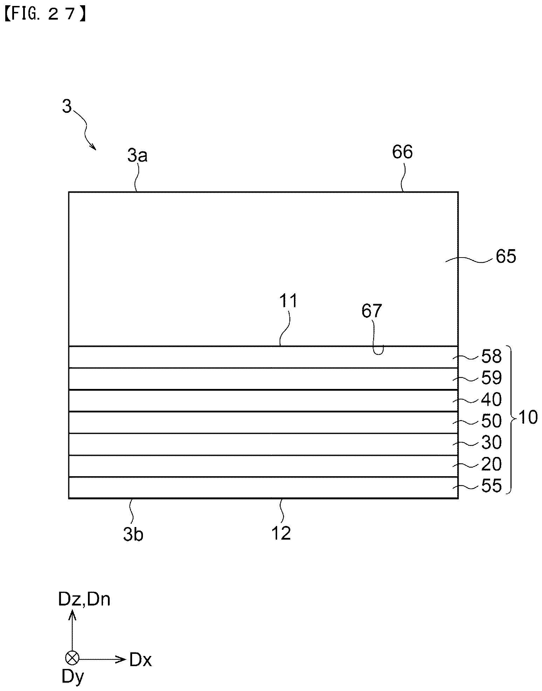

In an example shown in Fig. 27 also, the decorative layered body 10 forms the back surface 3b of the decorative member 3. In the example shown in Fig. 27, the decorative layered body 10 includes the functional layer 55, the profiled layer 20, the brightness adjusting layer 30, the filling layer 50, the transmittance adjusting layer 40, the bonding layer 59, and the backer layer 58. The functional layer 55, the profiled layer 20, the brightness adjusting layer 30, the filling layer 50, the transmittance adjusting layer 40, the bonding layer 59, and the backer layer 58 are stacked in this order in the direction from the back surface 3b to the front surface 3a of the decorative member 3. The backer layer 58 forms the front surface 11 of the decorative layered body 10, and the functional layer 55 forms the back surface 12 of the decorative layered body 10. The backer layer 58 is joined to the back surface 67 of the molded portion 65.

In the example shown in Fig. 27, as in the example shown in Fig. 19, a reflective interface may be formed between the filling layer 50 and the brightness adjusting layer 30, and the visible light reflectance of the reflective interface may be adjusted by the brightness adjusting layer 30. When the brightness adjusting layer 30 is a refractive index modulation layer, the refractive index of the brightness adjusting layer 30 may differ from the refractive index of the filling layer 50.

Of course, in the example shown in Fig. 27, a reflective interface may be formed between the brightness adjusting layer 30 and the profiled layer 20. In this case, the brightness adjusting layer 30 may be a refractive index modulation layer, and the refractive index of the brightness adjusting layer 30 may differ from the refractive index of the profiled layer 20.

In the example shown in Fig. 27, the brightness adjusting layer 30 and/or the profiled layer 20 is observed through the molded portion 65, the backer layer 58, the bonding layer 59, and the filling layer 50. Therefore, the molded portion 65, the backer layer 58, the bonding layer 59, and the filling layer 50 are transparent. The brightness adjusting layer 30 may also be transparent.

As the material forming the transparent bonding layer 59, thermoplastic resins and (meth)acrylate ester copolymers can be used. No particular limitation is imposed on the thermoplastic resin, and examples of the thermoplastic resin that can be used include acrylic resins, vinyl chloride-vinyl acetate copolymers, polyamide resins, polyester resins, chlorinated polypropylenes, chlorinated rubbers, urethane resins, epoxy resins, and styrene resins. Any of these resins may be used alone, or a combination of two or more may be used. The transparent bonding layer 59 may be formed of an OCA (Optical Clear Adhesive).

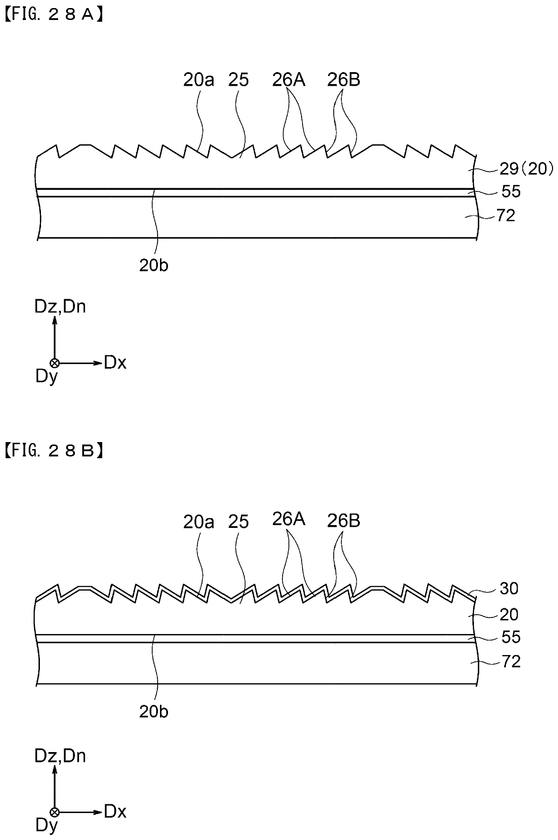

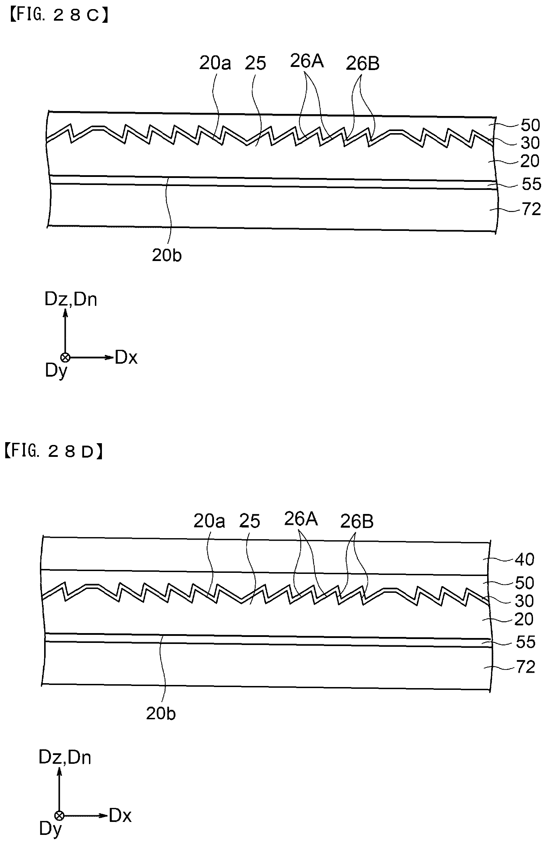

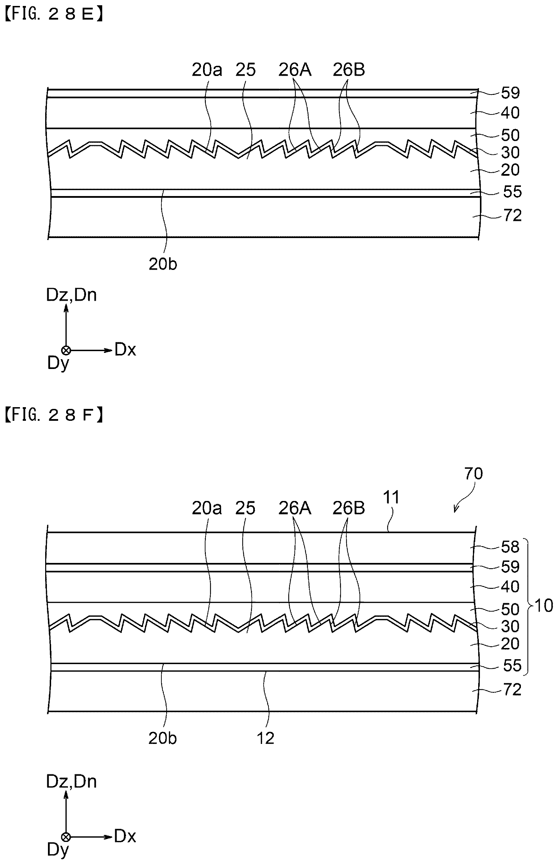

The decorative member 3 shown in Fig. 27 can be produced, for example, as follows. First, the functional layer 55 serving as a release layer is formed on the substrate 72 by the same method as that shown in Fig. 13A. Next, as shown in Fig. 28A, the profiled layer 20 is formed on the functional layer 55. Next, the brightness adjusting layer 30 is formed on the profiled surface 20a of the profiled layer 20. Next, as shown in Fig. 28B, the brightness adjusting layer 30 is formed on the profiled surface 20a of the profiled layer 20. Next, as shown in Fig. 28C, the filling layer 50 is formed on the brightness adjusting layer 30. Next, as shown in Fig. 28D, the transmittance adjusting layer 40 is formed on the filling layer 50. Next, as shown in Fig. 28E, the bonding layer 59 is formed on the transmittance adjusting layer 40. Next, as shown in Fig. 28F, the bonding layer 59 is joined to the backer layer 58. Finally, the substrate 72 is removed from the decorative layered body 10. The decorative layered body 10 shown in Fig. 27 is thereby produced.

Next, the decorative layered body 10 is pre-shaped using a preforming die having a shape corresponding to the shape of the front surface 3a of the decorative member 3. Then the pre-formed decorative layered body 10 is placed in a forming mold for molding the molded portion 65. Next, a molten resin is introduced between the front surface 11 of the decorative layered body 10 (i.e., the backer layer 58) and the inner surface of the forming mold, and the resin is solidified within the forming mold. The molded portion 65 joined to the decorative layered body 10 is thereby formed within the forming mold, and the decorative member 3 shown in Fig. 27 is completed.

<<Modification 20 of first embodiment>>

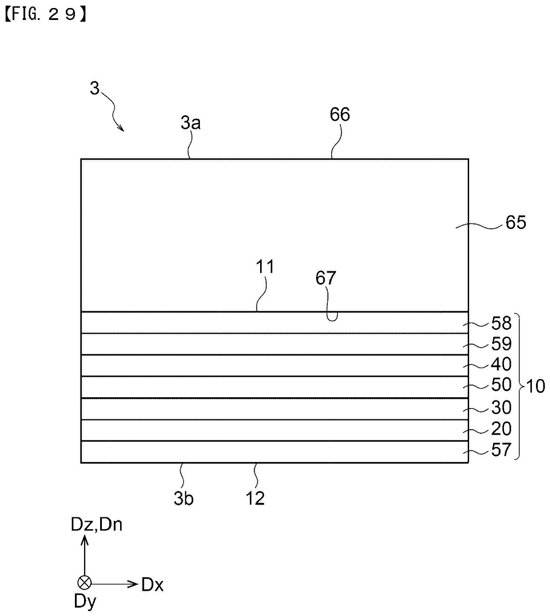

In an example shown in Fig. 29 also, the decorative layered body 10 forms the back surface 3b of the decorative member 3. In the example shown in Fig. 29, the decorative layered body 10 includes the substrate layer 57, the profiled layer 20, the brightness adjusting layer 30, the filling layer 50, the transmittance adjusting layer 40, the bonding layer 59, and the backer layer 58. The substrate layer 57, the profiled layer 20, the brightness adjusting layer 30, the filling layer 50, the transmittance adjusting layer 40, the bonding layer 59, and the backer layer 58 are stacked in this order in the direction from the back surface 3b to the front surface 3a of the decorative member 3. The backer layer 58 forms the front surface 11 of the decorative layered body 10, and the substrate layer 57 forms the back surface 12 of the decorative layered body 10. The backer layer 58 is joined to the back surface 67 of the molded portion 65.

In the example shown in Fig. 29, as in the example shown in Fig. 19, a reflective interface may be formed between the filling layer 50 and the brightness adjusting layer 30, and the visible light reflectance at the reflective interface may be adjusted by the brightness adjusting layer 30. When the brightness adjusting layer 30 is a refractive index modulation layer, the refractive index of the brightness adjusting layer 30 may differ from the refractive index of the filling layer 50.

Of course, in the example shown in Fig. 29, a reflective interface may be formed between the brightness adjusting layer 30 and the profiled layer 20. In this case, the brightness adjusting layer 30 may be a refractive index modulation layer, and the refractive index of the brightness adjusting layer 30 may differ from the refractive index of the profiled layer 20.

In the example shown in Fig. 29 also, the brightness adjusting layer 30 and/or the profiled layer 20 is observed through the molded portion 65, the backer layer 58, and the filling layer 50. Therefore, the molded portion 65, the backer layer 58, the bonding layer 59, and the filling layer 50 are transparent. The brightness adjusting layer 30 may also be transparent. The profiled layer 20 may be transparent or may be opaque.

The decorative member 3 shown in Fig. 29 can be produced, for example, as follows. First, the profiled layer 20, the brightness adjusting layer 30, the filling layer 50, and the transmittance adjusting layer 40 are stacked on the substrate layer 57 by the same method as that shown in Figs. 26A to Fig. 26D. Next, the bonding layer 59 is formed on the transmittance adjusting layer 40, and the backer layer 58 is joined to the bonding layer 59. The decorative layered body 10 shown in Fig. 29 is thereby produced.

<<Modification 21 of first embodiment>>

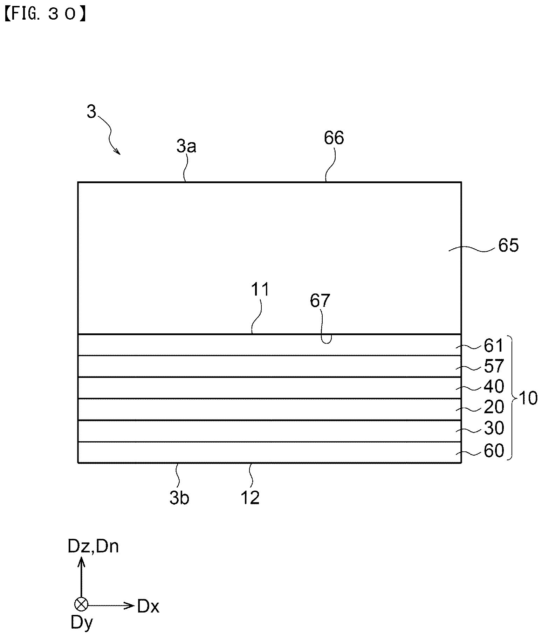

In an example shown in Fig. 30 also, the decorative layered body 10 forms the back surface 3b of the decorative member 3. In the example shown in Fig. 30, the decorative layered body 10 includes the masking layer 60, the brightness adjusting layer 30, the profiled layer 20, the transmittance adjusting layer 40, the substrate layer 57, and the bonding layer 61. The masking layer 60, the brightness adjusting layer 30, the profiled layer 20, the transmittance adjusting layer 40, the substrate layer 57, and the bonding layer 61 are stacked in this order in the direction from the back surface 3b to the front surface 3a of the decorative member 3. The bonding layer 61 forms the front surface 11 of the decorative layered body 10, and the masking layer 60 forms the back surface 12 of the decorative layered body 10. The bonding layer 61 is joined to the back surface 67 of the molded portion 65.

In the example shown in Fig. 30, the brightness adjusting layer 30 and/or the profiled layer 20 is observed through the molded portion 65, the bonding layer 61, and the substrate layer 57. Therefore, the molded portion 65, the bonding layer 61, and the substrate layer 57 are transparent. The profiled layer 20 may also be transparent. As the material forming the layer bonding layer 61, the same material as that used to form the transparent bonding layer 59 described above can be used.

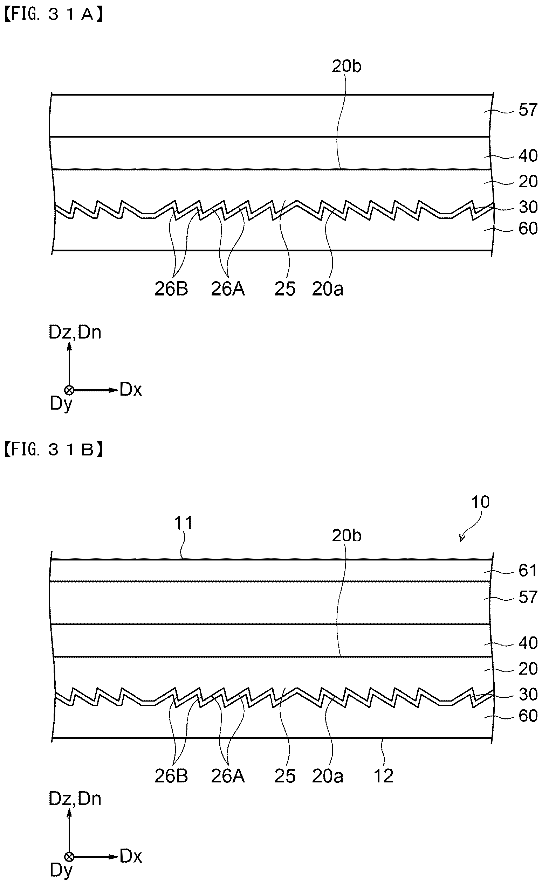

The decorative member 3 shown in Fig. 30 can be produced, for example, as follows. First, the profiled layer 20 and the brightness adjusting layer 30 are stacked on one side of the substrate layer 57 by the same method as that shown in Figs. 18A to 18C. Next, as shown in Fig. 31A, the masking layer 60 is formed on the brightness adjusting layer 30. Next, as shown in Fig. 31B, the bonding layer 61 is formed on the other side of the functional layer 55. After the step shown in Fig. 31B, the bonding layer 61 is joined to the back surface 67 of the molded portion 65. The decorative member 3 shown in Fig. 30 is thereby produced.

<<Modification 22 of first embodiment>>

In each example in which the molded portion 65 forms the front surface 3a of the decorative member 3, the molded portion 65 may serve also as the functional layer 55 and/or the transmittance adjusting layer 40. In this case, the decorative layered body 10 need not necessarily include the functional layer 55 and/or the transmittance adjusting layer 40.

<Reflectance of decorative member 3 when molded portion 65 forms front surface 3a of decorative member 3>

Next, the reflectance of the decorative members 3 shown in Figs. 25 to 31B will be described. The present inventors have found that, even when the decorative layered body 10 is observed through the molded portion 65 and other additional layers (not shown) as shown in Figs. 25 to 31B, the apparent thickness of the decorative layered body 10 can be perceived so as to be larger than the actual thickness in an effective manner by adjusting the total light reflectance ($R_{SCI}$) and diffuse light reflectance ($R_{SCE}$) of the front surface 3a of the decorative member 3. The inventors further found that, by adjusting the above-described total light reflectance and diffuse light reflectance to prescribed values, the apparent thickness of the decorative layered body 10 can be perceived so as to be much larger than the actual thickness. In this case, the apparent position of the reflective interface in the decorative layered body 10 can be perceived so as to be located deeper than the actual position of the reflective interface

The total light reflectance ($R_{SCI}$) and diffuse light reflectance ($R_{SCE}$) of the front surface 3a of the decorative member 3 in the first embodiment are measured in the same manner as that when the total light reflectance ($R_{SCI}$) and diffuse light reflectance ($R_{SCE}$) of the front surface 11 of the decorative layered body 10 are measured in the examples shown in Figs. 1 to 13F according to JIS Z 8722:2009 using a spectrocolorimeter (model number CM-700d) manufactured by KONICA MINOLTA, INC. under geometric condition c. The measurement conditions, the observation conditions, the measurement diameter/illumination diameter, and the measurement wavelength range and measurement wavelength intervals of the spectrocolorimeter during the measurement are also the same as those when the total light reflectance ($R_{SCI}$) and diffuse light reflectance ($R_{SCE}$) of the front surface 11 of the decorative layered body 10 are measured in the examples shown in Figs. 1 to 13F. The total light reflectance ($R_{SCI}$) and diffuse light reflectance ($R_{SCE}$) are measured by placing the spectrocolorimeter on the front surface 66 of the molded portion 65 such that the spectrocolorimeter is perpendicular to the front surface 11 of the decorative layered body 10.

As in the examples shown in Figs. 1 to 13F, the measurement diameter/illumination diameter are selected according to the size of the unit optical elements 13. Moreover, as in the examples shown in Figs. 1 to 13F, the position of the measurement area S relative to a unit optical element 13 when the total light reflectance ($R_{SCI}$) and the diffuse light reflectance ($R_{SCE}$) are measured is set appropriately according to the relation between the size of the unit optical elements 13 and the measurement diameter of the spectrocolorimeter.

In the examples shown in Figs. 25 to 31B also, the total light reflectance ($R_{SCI}$) and the diffuse light reflectance ($R_{SCE}$) measured in a region that includes at least 40% of a unit optical element 13 (a region on the front surface 3a of the decorative member 3) when the decorative layered body 10 is viewed in plan as shown in Fig. 8 are referred to as "overall total light reflectance ($R_{SCI}(E)$)" and "overall diffuse light reflectance ($R_{SCE}(E)$)," respectively.

In the examples shown in Figs. 25 to 31B also, the total light reflectance ($R_{SCI}$) and the diffuse light reflectance ($R_{SCE}$) measured in a region that overlaps the outer region 13b of a unit optical element 13 when the decorative layered body 10 is viewed in plan as shown in Fig. 9 are referred to as "outer total light reflectance ($R_{SCI}(O)$)" and "outer diffuse light reflectance ($R_{SCE}(O)$)," respectively.

In the examples shown in Figs. 25 to 31B also, the total light reflectance ($R_{SCI}$) and the diffuse light reflectance ($R_{SCE}$) measured in a region that overlaps the central area (13a) of a unit optical element (13) when the decorative layered body (10) is viewed in plan as shown in Fig. 9 are referred to as "central total light reflectance ($R_{SCI}(C)$)" and "central diffuse light reflectance ($R_{SCE}(C)$)," respectively.

In the examples shown in Figs. 25 to 31B also, when the total light reflectance ($R_{SCI}$) and the diffuse light reflectance ($R_{SCE}$) are measured in a region that overlaps the outer region 13b of a unit optical element 13, the spectrocolorimeter is disposed with respect to the decorative layered body 10 such that the light Q emitted from the spectrocolorimeter and incident on the decorative layered body 10 enters the inclined surfaces 26A or the connection surfaces 26B, as indicated by the arrows in Figs. 9 and 11.

The inventors have found that the apparent thickness of the decorative layered body 10 can be perceived so as to be larger than the actual thickness in an effective manner by adjusting the reflectance of the front surface 3a of the decorative member 3 as follows. Specifically, the reflectance of the front surface 3a of the decorative member 3 is adjusted such that the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) satisfy the following formulas:

$$R_{SCI}(E) \leq 35\%,$$

$$R_{SCE}(E) \leq 25\%,$$

and

$$1.3 \leq R_{SCI}(E) / R_{SCE}(E) \leq 15.$$

The inventors have also found that the apparent thickness of the decorative layered body 10 can be perceived so as to be much larger than the actual thickness by adjusting the reflectance of the front surface 3a of the decorative member 3 as follows. Specifically, the reflectance of the front surface 3a of the decorative member 3 is adjusted such that the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) satisfy the following formulas:

$$R_{SCI}(E) \leq 12\%,$$

$$R_{SCE}(E) \leq 6\%,$$

and

$$1.5 \leq R_{SCI}(E) / R_{SCE}(E) \leq 6.$$

The inventors have also found that the apparent thickness of the decorative layered body 10 can be perceived so as to be larger than the actual thickness in an effective manner by adjusting the reflectance of the front surface 3a of the decorative member 3 as follows. Specifically, the reflectance of the front surface 3a of the decorative member 3 is adjusted such that the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \leq 45\%,$$

$$R_{SCE}(O) \leq 40\%,$$

and

$$1.1 \leq R_{SCI}(O) / R_{SCE}(O) \leq 18.$$

The inventors have also found that the apparent thickness of the decorative layered body 10 can be perceived so as to be much larger than the actual thickness by adjusting the reflectance of the front surface 3a of the decorative member 3 as follows. Specifically, the reflectance of the front surface 3a of the decorative member 3 is adjusted such that the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \leq 12,$$

$$R_{SCE}(O) \leq 8.5,$$

and

$$1.4 \leq R_{SCI}(O) / R_{SCE}(O) \leq 8.$$

The inventors have also found that the apparent thickness of the decorative layered body 10 can be perceived so as to be larger than the actual thickness in an effective manner by adjusting the reflectance of the front surface 3a of the decorative member 3 as follows. Specifically, the reflectance of the front surface 3a of the decorative member 3 is adjusted such that the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.9.$$

The inventors have also found that the apparent thickness of the decorative layered body 10 can be perceived so as to be much larger than the actual thickness by adjusting the reflectance of the front surface 3a of the decorative member 3 as follows. Specifically, the reflectance of the front surface 3a of the decorative member 3 is adjusted such that the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.7.$$

EXAMPLES

Specific Examples in the first embodiment will next be described. The relation between the reflectance of the front surface 11 of the decorative layered body 10 and the evaluation of the appearance of the decorative layered body 10 will be described below. However, it should be noted that the same relation also holds not only between the reflectance of the front surface 3a of the decorative member 3 shown in Fig. 3 and the evaluation of the appearance of the decorative member 3 but also between the reflectance of the front surface 3a of each of the other decorative members 3 described above and the evaluation of the appearance of the decorative member 3 and between the reflectance of the front surface 3a of each of the decorative members 3 described later and the evaluation of the appearance of the decorative member 3.
First, Examples in which at least 40% of a unit optical element 13 is included within a virtual circle having the same diameter as the measurement diameter of the spectrocolorimeter will be described.

(Comparative Example 1-1)

A decorative layered body 10 was produced in the same manner as that shown in Fig. 5 except that the transmittance adjusting layer 40 was not provided in the decorative layered body 10. Each unit optical element 13 had a square shape when the decorative layered body 10 was viewed in plan, and the length of one side of the square unit optical element 13 was 4 mm. Aluminum was used as the material forming the brightness adjusting layer 30.
The measurement diameter / illumination diameter of the spectrocolorimeter were set to $\phi$8 mm/$\phi$11 mm. Then the overall total light reflectance ($R_{SCI}(E)$) and overall diffuse light reflectance ($R_{SCE}(E)$) of the front surface 11 of the decorative layered body 10 were measured, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Comparative Example 1-1, $R_{SCI}(E)$ was 79.4%, $R_{SCE}(E)$ was 68.2%, and $R_{SCI}(E) / R_{SCE}(E)$ was 1.2.

(Comparative Example 1-2)

A decorative layered body 10 was produced in the same manner as in Comparative Example 1-1 except that the transmittance adjusting layer 40 was provided in the decorative layered body 10 as in Fig. 4. Specifically, the decorative layered body 10 in Comparative Example 1-2 has the same structure as that of the decorative layered body shown in Fig. 5. The total light transmittance of the transmittance adjusting layer 40 was 80%. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Comparative Example 1-2, $R_{SCI}(E)$ was 43.2%, $R_{SCE}(E)$ was 35.7%, and $R_{SCI}(E) / R_{SCE}(E)$ was 1.2.

(Example 1-1)

A decorative layered body 10 was produced in the same manner as in Comparative Example 1-2 except that the total light transmittance of the transmittance adjusting layer 40 was 50%. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Example 1-1, $R_{SCI}(E)$ was 25.0%, $R_{SCE}(E)$ was 15.1%, and $R_{SCI}(E) / R_{SCE}(E)$ was 1.7.

(Example 1-2)

A decorative layered body 10 was produced in the same manner as in Comparative Example 1-2 except that the total light transmittance of the transmittance adjusting layer 40 was 30%. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Example 1-2, $R_{SCI}(E)$ was 9.2%, $R_{SCE}(E)$ was 4.9%, and $R_{SCI}(E) / R_{SCE}(E)$ was 1.9.

(Example 1-3)

A decorative layered body 10 was produced in the same manner as in Comparative Example 1-2 except that the total light transmittance of the transmittance adjusting layer 40 was 10%. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Example 1-3, $R_{SCI}(E)$ was 5.1%, $R_{SCE}(E)$ was 1.0%, and $R_{SCI}(E) / R_{SCE}(E)$ was 5.1.

(Example 1-4)

A decorative layered body 10 was produced in the same manner as in Comparative Example 1-2 except that the total light transmittance of the transmittance adjusting layer 40 was 5%. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Example 1-4, $R_{SCI}(E)$ was 4.4%, $R_{SCE}(E)$ was 0.5%, and $R_{SCI}(E) / R_{SCE}(E)$ was 8.8.

(Example 1-5)

A decorative layered body 10 was produced in the same manner as in Comparative Example 1-1 except that titanium oxide was used as the material forming the brightness adjusting layer 30. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Example 1-5, $R_{SCI}(E)$ was 33.4%, $R_{SCE}(E)$ was 24.2%, and $R_{SCI}(E) / R_{SCE}(E)$ was 1.4.

(Example 1-6)

A decorative layered body 10 was produced in the same manner as in Example 1-5 except that the transmittance adjusting layer 40 was provided in the decorative layered body as in Fig. 5. Specifically, the decorative layered body 10 in Example 1-6 has the same structure as the structure of the decorative layered body shown in Fig. 5. The total light transmittance of the transmittance adjusting layer 40 was 80%. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Example 1-6, $R_{SCI}(E)$ was 19.0%, $R_{SCE}(E)$ was 12.7%, and $R_{SCI}(E) / R_{SCE}(E)$ was 1.5.

(Example 1-7)

A decorative layered body 10 was produced in the same manner as in Example 1-6 except that the total light transmittance of the transmittance adjusting layer 40 was 50%. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Example 1-7, $R_{SCI}(E)$ was 10.2%, $R_{SCE}(E)$ was 5.4%, and $R_{SCI}(E) / R_{SCE}(E)$ was 1.9.

(Example 1-8)

A decorative layered body 10 was produced in the same manner as in Example 1-6 except that the total light transmittance of the transmittance adjusting layer 40 was 30%. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Example 1-8, $R_{SCI}(E)$ was 6.2%, $R_{SCE}(E)$ was 1.9%, and $R_{SCI}(E) / R_{SCE}(E)$ was 3.3.

(Example 1-9)

A decorative layered body 10 was produced in the same manner as in Example 1-6 except that the total light transmittance of the transmittance adjusting layer 40 was 10%. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Example 1-9, $R_{SCI}(E)$ was 4.5%, $R_{SCE}(E)$ was 0.4%, and $R_{SCI}(E) / R_{SCE}(E)$ was 11.3.

(Example 1-10)

A decorative layered body 10 was produced in the same manner as in Example 1-6 except that the total light transmittance of the transmittance adjusting layer 40 was 5%. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Example 1-10, $R_{SCI}(E)$ was 4.2%, $R_{SCE}(E)$ was 0.3%, and $R_{SCI}(E) / R_{SCE}(E)$ was 14.0.

(Example 1-11)

A decorative layered body 10 was produced in the same manner as in Comparative Example 1-1 except that the reflective layer 30 was not provided in the decorative layered body 10 and that particles were dispersed in the profiled layer 20. The overall total light reflectance ($R_{SCI}(E)$) and overall diffuse light reflectance ($R_{SCE}(E)$) of the front surface 11 of the decorative layered body 10 were measured in the same manner as in Comparative Example 1-1, and the ratio ($R_{SCI}(E) / R_{SCE}(E)$) of the overall total light reflectance ($R_{SCI}(E)$) to the overall diffuse light reflectance ($R_{SCE}(E)$) was computed. In the decorative layered body 10 in Example 1-11, $R_{SCI}(E)$ was 4.6%, $R_{SCE}(E)$ was 0.9%, and $R_{SCI}(E) / R_{SCE}(E)$ was 5.1.

The appearance of each of the thus-obtained decorative layered bodies 10 in Comparative Examples 1-1 to 1-2 and Examples 1-1 to 1-11 was evaluated. The appearance was evaluated by determining the extent to which the glare on the front surface 11 side of the decorative layered body 10 was reduced compared to that in the decorative layered body 10 in Comparative Example 1-1 and by evaluating the sense of depth when the decorative layered body 10 was viewed from the front surface 11 side.

Table 1 shows the results of the appearance evaluation of the decorative layered bodies 10 in Comparative Examples 1-1 to 1-2 and Examples 1-1 to 1-11. In the "Reduction in glare" column in Table 1, "C" means that the degree of glare is about the same as that in Comparative Example 1-1, and "A" means that the glare is significantly reduced compared to that in Comparative Example 1-1. In the "Sense of depth" column in Table 1, "C" means that the perceived depth is about the same as that in Comparative Example 1-1. "B" means that the perceived depth is deeper than that in Comparative Example 1-1, and "A" means that the perceived depth is much deeper than that in Comparative Example 1-1. Table 1 also shows, in addition to the results for the Examples and Comparative Examples, the total light reflectance ($R_{SCI}$) and diffuse light reflectance ($R_{SCE}$) of the surface of a sheet-like substrate with black printing on the surface and having a total light transmittance of 0% and the ratio ($R_{SCI}/R_{SCE}$) of the total light reflectance ($R_{SCI}$) to the diffuse light reflectance

($R_{SCE}$).

[Table 1]

|  | $R_{SCI}(O)$ (%) | $R_{SCE}(O)$ (%) | $R_{SCI}(O)$ /$R_{SCE}(O)$ | $R_{SCE}(C)$ % | $RSCE(C)$ /$R_{SCE}(O)$ | REDUCTION IN GLARE | SENSE OF DEPTH |
|---|---|---|---|---|---|---|---|
| COMPARATIVE EXAMPLE 2-1 | 97.4 | 100.4 | 1.0 | 4.3 | 0.04 | C | C |
| COMPARATIVE EXAMPLE 2-2 | 50.8 | 49.6 | 1.0 | 2.8 | 0.06 | C | C |
| COMPARATIVE EXAMPLE 2-3 | 27.2 | 273 | 1.0 | 1.1 | 0.04 | C | C |
| EXAMPLE 2-1 | 10.7 | 7.5 | 1.4 | 0.5 | 0.07 | C | B |
| EXAMPLE 2-2 | 5.4 | 1.7 | 3.2 | 0.3 | 0.18 | A | A |
| EXAMPLE 2-3 | 4.4 | 0.5 | 8.8 | 0.3 | 0.60 | A | A |
| EXAMPLE 2-4 | 40.8 | 37.8 | 1.1 | 2.7 | 0.07 | C | B |
| EXAMPLE 2-5 | 22.6 | 19.0 | 1.2 | 1.6 | 0.08 | C | B |
| EXAMPLE 2-6 | 11.5 | 8.2 | 1.4 | 0.9 | 0.11 | A | A |
| EXAMPLE 2-7 | 64 | 2.6 | 2.5 | 0.4 | 0.15 | A | A |
| EXAMPLE 2-8 | 4.6 | 0.6 | 7.7 | 0.3 | 0.50 | A | A |
| EXAMPLE 2-9 | 42 | 0.3 | 16.6 | 0.2 | 0.84 | A | B |
| EXAMPLE 2-10 | 4.9 | 1.0 | 4.7 | 0.7 | 0.67 | A | A |
| * SHEET-LIKE SUBSTRATE WITH BLACK PRINTING (TOTAL LIGHT TRANSMITTANCE: 0%) $R_{SCI}$(%) : 13.41, $R_{SCE}$(%) : 0.57, $R_{SCI}$/$R_{SCE}$:23.5 | | | | | | | |

As can be seen from Table 1, in each decorative layered body 10 in which the overall total light reflectance ($R_{SCI}$(E)) was 35% or less, in which the overall diffuse light reflectance ($R_{SCE}$(E)) was 25% or less, and in which the ratio ($R_{SCI}$(E) / $R_{SCE}$(E)) of the overall total light reflectance ($R_{SCI}$(E)) to the overall diffuse light reflectance ($R_{SCE}$(E)) was 1.3 or more and 15 or less, the perceived depth was deeper than that in Comparative Example 1-1. Moreover, in each decorative layered body 10 in which the overall total light reflectance ($R_{SCI}$(E)) was 12% or less, in which the overall diffuse light reflectance ($R_{SCE}$(E)) was 6% or less, and in which the ratio ($R_{SCI}$(E) / $R_{SCE}$(E)) of the overall total light reflectance ($R_{SCI}$(E)) to the overall diffuse light reflectance ($R_{SCE}$(E)) was 1.5 or more and 6.0 or less, the perceived depth was significantly deeper than that in Comparative Example 1-1.

Next, Examples in which at least 40% of a unit optical element 13 is not included within a virtual circle with the same diameter as the measurement diameter of the spectrocolorimeter will be described.

(Comparative Example 2-1)

A decorative layered body 10 was produced in the same manner as that shown in Fig. 5 except that the transmittance adjusting layer 40 was not provided in the decorative layered body 10. Each unit optical element 13 had a rhombic shape when the decorative layered body 10 was viewed in plan. The length of one of its diagonal lines was 50 mm, and the length of the other diagonal line was 80 mm. Aluminum was used as the material forming the brightness adjusting layer 30.

The measurement diameter / illumination diameter of the spectrocolorimeter were set to $\phi$3 mm/$\phi$6 mm. Then the outer total light reflectance ($R_{SCI}(O)$) and outer diffuse light reflectance ($R_{SCE}(O)$) of the front surface 11 of the decorative layered body 10 were measured, and the ratio ($R_{SCI}(O)$ / $R_{SCE}(O)$) of the outer total light reflectance ($R_{SCI}(O)$) to the outer diffuse light reflectance ($R_{SCE}(O)$) was computed. Moreover, the central diffuse light reflectance ($R_{SCE}(C)$) of the front surface 11 of the decorative layered body 10 was measured, and the ratio ($R_{SCE}(C)$ / $R_{SCE}(O)$) of the central diffuse light reflectance ($R_{SCE}(C)$) to the outer diffuse light reflectance ($R_{SCE}(O)$) was computed. In the decorative layered body 10 in Comparative Example 2-1, $R_{SCI}(O)$ was 97.4%, $R_{SCE}(O)$ was 100.4%, $R_{SCI}(O)$ / $R_{SCE}(O)$ was 1.0, $R_{SCE}(C)$ was 4.3%, and $R_{SCE}(C)$ / $R_{SCE}(O)$ was 0.04.

(Comparative Example 2-2)

A decorative layered body 10 was produced in the same manner as in Comparative Example 2-1 except that the transmittance adjusting layer 40 was provided in the decorative layered body 10 as in Fig. 5. Specifically, the decorative layered body 10 in Comparative Example 2-2 has the same structure as that of the decorative layered body shown in Fig. 5. The total light transmittance of the transmittance adjusting layer 40 was 80%. The outer total light reflectance ($R_{SCI}(O)$) and outer diffuse light reflectance ($R_{SCE}(O)$) of the front surface 11 of the decorative layered body 10 were measured in the same manner as in Comparative Example 2-1, and the ratio ($R_{SCI}(O) / R_{SCE}(O)$) of the outer total light reflectance ($R_{SCI}(O)$) to the outer diffuse light reflectance ($R_{SCE}(O)$) was computed. Moreover, the central diffuse light reflectance ($R_{SCE}(C)$) of the front surface 11 of the decorative layered body 10 was measured in the same manner as in Comparative Example 2-1, and the ratio ($R_{SCE}(C) / R_{SCE}(O)$) of the central diffuse light reflectance ($R_{SCE}(C)$) to the outer diffuse light reflectance ($R_{SCE}(O)$) was computed. In the decorative layered body 10 in Comparative Example 2-2, $R_{SCI}(O)$ was 50.8%, $R_{SCE}(O)$ was 49.6%, $R_{SCI}(O) / R_{SCE}(O)$ was 1.0, $R_{SCE}(C)$ was 2.8%, and $R_{SCE}(C) / R_{SCE}(O)$ was 0.06.

(Comparative Example 2-3)

A decorative layered body 10 was produced in the same manner as in Comparative Example 2-2 except that the total light transmittance of the transmittance adjusting layer 40 was 50%. The outer total light reflectance ($R_{SCI}(O)$) and outer diffuse light reflectance ($R_{SCE}(O)$) of the front surface 11 of the decorative layered body 10 were measured in the same manner as in Comparative Example 2-1, and the ratio ($R_{SCI}(O) / R_{SCE}(O)$) of the outer total light reflectance ($R_{SCI}(O)$) to the outer diffuse light reflectance ($R_{SCE}(O)$) was computed. Moreover, the central diffuse light reflectance ($R_{SCE}(C)$) of the front surface 11 of the decorative layered body 10 was measured in the same manner as in Comparative Example 2-1, and the ratio ($R_{SCE}(C) / R_{SCE}(O)$) of the central diffuse light reflectance ($R_{SCE}(C)$) to the outer diffuse light reflectance ($R_{SCE}(O)$) was computed. In the decorative layered body 10 in Comparative Example 2-3, $R_{SCI}(O)$ was 27.2%, $R_{SCE}(O)$ was 27.3%, $R_{SCI}(O) / R_{SCE}(O)$ was 1.0, $R_{SCE}(C)$ was 1.1%, and $R_{SCE}(C) / R_{SCE}(O)$ was 0.04.

(Example 2-1)

A decorative layered body 10 was produced in the same manner as in Comparative Example 2-2 except that the total light transmittance of the transmittance adjusting layer 40 was 30%. The outer total light reflectance ($R_{SCI}(O)$) and outer diffuse light reflectance ($R_{SCE}(O)$) of the front surface 11 of the decorative layered body 10 were measured in the same manner as in Comparative Example 2-1, and the ratio ($R_{SCI}(O) / R_{SCE}(O)$) of the outer total light reflectance ($R_{SCI}(O)$) to the outer diffuse light reflectance ($R_{SCE}(O)$) was computed. Moreover, the central diffuse light reflectance ($R_{SCE}(C)$) of the front surface 11 of the decorative layered body 10 was measured in the same manner as in Comparative Example 2-1, and the ratio ($R_{SCE}(C) / R_{SCE}(O)$) of the central diffuse light reflectance ($R_{SCE}(C)$) to the outer diffuse light reflectance ($R_{SCE}(O)$) was computed. In the decorative layered body 10 in Example 2-1, $R_{SCI}(O)$ was 10.7%, $R_{SCE}(O)$ was 7.5%, $R_{SCI}(O) / R_{SCE}(O)$ was 1.4, $R_{SCE}(C)$ was 0.5%, and $R_{SCE}(C) / R_{SCE}(O)$ was 0.07.

(Example 2-2)

A decorative layered body 10 was produced in the same manner as in Comparative Example 2-2 except that the total light transmittance of the transmittance adjusting layer 40 was 10%. The outer total light reflectance ($R_{SCI}(O)$) and outer diffuse light reflectance ($R_{SCE}(O)$) of the front surface 11 of the decorative layered body 10 were measured in the same manner as in Comparative Example 2-1, and the ratio ($R_{SCI}(O) / R_{SCE}(O)$) of the outer total light reflectance ($R_{SCI}(O)$) to the outer diffuse light reflectance ($R_{SCE}(O)$) was computed. Moreover, the central diffuse light reflectance ($R_{SCE}(C)$) of the front surface 11 of the decorative layered body 10 was measured in the same manner as in Comparative Example 2-1, and the ratio ($R_{SCE}(C) / R_{SCE}(O)$) of the central diffuse light reflectance ($R_{SCE}(C)$) to the outer diffuse light reflectance ($R_{SCE}(O)$) was computed. In the decorative layered body 10 in Example 2-2, $R_{SCI}(O)$ was 5.4%, $R_{SCE}(O)$ was 1.7%, $R_{SCI}(O) / R_{SCE}(O)$ was 3.2, $R_{SCE}(C)$ was 0.3%, and $R_{SCE}(C) / R_{SCE}(O)$ was 0.18.

(Example 2-3)

A decorative layered body 10 was produced in the same manner as in Comparative Example 2-2 except that the total light transmittance of the transmittance adjusting layer 40 was 5%. The outer total light reflectance ($R_{SCI}(O)$) and outer diffuse light reflectance ($R_{SCE}(O)$) of the front surface 11 of the decorative layered body 10 were measured in the same manner as in Comparative Example 2-1, and the ratio ($R_{SCI}(O) / R_{SCE}(O)$) of the outer total light reflectance ($R_{SCI}(O)$) to the outer diffuse light reflectance ($R_{SCE}(O)$) was computed. Moreover, the central diffuse light reflectance ($R_{SCE}(C)$) of the front surface 11 of the decorative layered body 10 was measured in the same manner as in Comparative Example 2-1, and the ratio ($R_{SCE}(C) / R_{SCE}(O)$) of the central diffuse light reflectance ($R_{SCE}(C)$) to the outer diffuse light reflectance ($R_{SCE}(O)$) was computed. In the decorative layered body 10 in Example 2-3, $R_{SCI}(O)$ was 4.4%, $R_{SCE}(O)$ was 0.5%, $R_{SCI}(O) / R_{SCE}(O)$ was 8.8, $R_{SCE}(C)$ was 0.3%, and $R_{SCE}(C) / R_{SCE}(O)$ was 0.60.

(Example 2-4)

A decorative layered body 10 was produced in the same manner as in Comparative Example 2-1 except that titanium oxide was used as the material forming the brightness adjusting layer 30. The outer total light reflectance ($R_{SCI}(O)$) and outer diffuse light reflectance ($R_{SCE}(O)$) of the front surface 11 of the decorative layered body 10 were measured in the same manner as in Comparative Example 2-1, and the ratio ($R_{SCI}(O) / R_{SCE}(O)$) of the outer total light reflectance ($R_{SCI}(O)$) to the outer diffuse light reflectance ($R_{SCE}(O)$) was computed. Moreover, the central diffuse light reflectance ($R_{SCE}(C)$) of the front surface 11 of the decorative layered body 10 was measured in the same manner as in Comparative Example 2-1, and the ratio ($R_{SCE}(C) / R_{SCE}(O)$) of the central diffuse light reflectance ($R_{SCE}(C)$) to the outer diffuse light reflectance ($R_{SCE}(O)$) was computed. In the decorative layered body 10 in Example 2-4, $R_{SCI}(O)$ was 40.8%, $R_{SCE}(O)$ was 37.8%, $R_{SCI}(O) / R_{SCE}(O)$ was 1.1, $R_{SCE}(C)$ was 2.7%, and $R_{SCE}(C) / R_{SCE}(O)$ was 0.07.

(Example 2-5)

A decorative layered body 10 was produced in the same manner as in Example 2-4 except that the transmittance adjusting layer 40 was provided in the decorative layered body as in Fig. 4. Specifically, the decorative layered body 10 in Example 2-5 has the same structure as that of the decorative layered body shown in Fig. 5. The total light transmittance of the transmittance adjusting layer 40 was 80%. The outer total light reflectance ($R_{SCI}(O)$) and outer diffuse light reflectance ($R_{SCE}(O)$) of the front surface 11 of the decorative layered body 10 were measured in the same manner as in Comparative Example 2-1, and the ratio ($R_{SCI}(O) / R_{SCE}(O)$) of the outer total light reflectance ($R_{SCI}(O)$) to the outer diffuse light reflectance ($R_{SCE}(O)$) was computed. Moreover, the central diffuse light reflectance ($R_{SCE}(C)$) of the front surface 11 of the decorative layered body 10 was measured in the same manner as in Comparative Example 2-1, and the ratio ($R_{SCE}(C) / R_{SCE}(O)$) of the central diffuse light reflectance ($R_{SCE}(C)$) to the outer diffuse light reflectance ($R_{SCE}(O)$) was computed. In the decorative layered body 10 in Example 2-5, $R_{SCI}(O)$ was 22.6%, $R_{SCE}(O)$ was 19.0%, $R_{SCI}(O) / R_{SCE}(O)$ was 1.2, $R_{SCE}(C)$ was 1.6%, and $R_{SCE}(C) / R_{SCE}(O)$ was 0.08.

(Example 2-6)

A decorative layered body 10 was produced in the same manner as in Example 2-5 except that the total light transmittance of the transmittance adjusting layer 40 was 50%. The outer total light reflectance ($R_{SCI}(O)$) and outer diffuse light reflectance ($R_{SCE}(O)$) of the front surface 11 of the decorative layered body 10 were measured in the same manner as in Comparative Example 2-1, and the ratio ($R_{SCI}(O) / R_{SCE}(O)$) of the outer total light reflectance ($R_{SCI}(O)$) to the outer diffuse light reflectance ($R_{SCE}(O)$) was computed. Moreover, the central diffuse light reflectance ($R_{SCE}(C)$) of the front surface 11 of the decorative layered body 10 was measured in the same manner as in Comparative Example 2-1, and the ratio ($R_{SCE}(C) / R_{SCE}(O)$) of the central diffuse light reflectance ($R_{SCE}(C)$) to the outer diffuse light reflectance ($R_{SCE}(O)$) was computed. In the decorative layered body 10 in Example 2-6, $R_{SCI}(O)$ was 11.5%, $R_{SCE}(O)$ was 8.2%, $R_{SCI}(O) / R_{SCE}(O)$ was 1.4, $R_{SCE}(C)$ was 0.9%, and $R_{SCE}(C) / R_{SCE}(O)$ was 0.11.

(Example 2-7)

A decorative layered body 10 was produced in the same manner as in Example 2-5 except that the total light transmittance of the transmittance adjusting layer 40 was 30%. The outer total light reflectance ($R_{SCI}(O)$) and outer diffuse light reflectance ($R_{SCE}(O)$) of the front surface 11 of the decorative layered body 10 were measured in the same manner as in Comparative Example 2-1, and the ratio ($R_{SCI}(O) / R_{SCE}(O)$) of the outer total light reflectance ($R_{SCI}(O)$) to the outer diffuse light reflectance ($R_{SCE}(O)$) was computed. Moreover, the central diffuse light reflectance ($R_{SCE}(C)$) of the front surface 11 of the decorative layered body 10 was measured in the same manner as in Comparative Example 2-1, and the ratio ($R_{SCE}(C) / R_{SCE}(O)$) of the central diffuse light reflectance ($R_{SCE}(C)$) to the outer diffuse light reflectance ($R_{SCE}(O)$) was computed. In the decorative layered body 10 in Example 2-7, $R_{SCI}(O)$ was 6.4%, $R_{SCE}(O)$ was 2.6%, $R_{SCI}(O) / R_{SCE}(O)$ was 2.5, $R_{SCE}(C)$ was 0.4%, and $R_{SCE}(C) / R_{SCE}(O)$ was 0.15.

(Example 2-8)

A decorative layered body 10 was produced in the same manner as in Example 2-5 except that the total light transmittance of the transmittance adjusting layer 40 was 10%. The outer total light reflectance ($R_{SCI}(O)$) and outer diffuse light reflectance ($R_{SCE}$(O)) of the front surface 11 of the decorative layered body 10 were measured in the same manner as in Comparative Example 2-1, and the ratio ($R_{SCI}$(O) / $R_{SCE}$(O)) of the outer total light reflectance ($R_{SCI}$(O)) to the outer diffuse light reflectance ($R_{SCE}$(O)) was computed. Moreover, the central diffuse light reflectance ($R_{SCE}$(C)) of the front surface 11 of the decorative layered body 10 was measured in the same manner as in Comparative Example 2-1, and the ratio ($R_{SCE}$(C) / $R_{SCE}$(O)) of the central diffuse light reflectance ($R_{SCE}$(C)) to the outer diffuse light reflectance ($R_{SCE}$(O)) was computed. In the decorative layered body 10 in Example 2-8, $R_{SCI}$(O) was 4.6%, $R_{SCE}$(O) was 0.6%, $R_{SCI}$(O) / $R_{SCE}$(O) was 7.7, $R_{SCE}$(C) was 0.3%, and $R_{SCE}$(C) / $R_{SCE}$(O) was 0.50.

(Example 2-9)

A decorative layered body 10 was produced in the same manner as in Example 2-5 except that the total light transmittance of the transmittance adjusting layer 40 was 5%. The outer total light reflectance ($R_{SCI}$(O)) and outer diffuse light reflectance ($R_{SCE}$(O)) of the front surface 11 of the decorative layered body 10 were measured in the same manner as in Comparative Example 2-1, and the ratio ($R_{SCI}$(O) / $R_{SCE}$(O)) of the outer total light reflectance ($R_{SCI}$(O)) to the outer diffuse light reflectance ($R_{SCE}$(O)) was computed. Moreover, the central diffuse light reflectance ($R_{SCE}$(C)) of the front surface 11 of the decorative layered body 10 was measured in the same manner as in Comparative Example 2-1, and the ratio ($R_{SCE}$(C) / $R_{SCE}$(O)) of the central diffuse light reflectance ($R_{SCE}$(C)) to the outer diffuse light reflectance ($R_{SCE}$(O)) was computed. In the decorative layered body 10 in Example 2-9, $R_{SCI}$(O) was 4.2%, $R_{SCE}$(O) was 0.3%, $R_{SCI}$(O) / $R_{SCE}$(O) was 16.6, $R_{SCE}$(C) was 0.2%, and $R_{SCE}$(C) / $R_{SCE}$(O) was 0.84.

(Example 2-10)

A decorative layered body 10 was produced in the same manner as in Comparative Example 2-1 except that the reflective layer 30 was not provided in the decorative layered body 10 and that particles were dispersed in the profiled layer 20. The outer total light reflectance ($R_{SCI}$(O)) and outer diffuse light reflectance ($R_{SCE}$(O)) of the front surface 11 of the decorative layered body 10 were measured in the same manner as in Comparative Example 2-1, and the ratio ($R_{SCI}$(O) / $R_{SCE}$(O)) of the outer total light reflectance ($R_{SCI}$(O)) to the outer diffuse light reflectance ($R_{SCE}$(O)) was computed. Moreover, the central diffuse light reflectance ($R_{SCE}$(C)) of the front surface 11 of the decorative layered body 10 was measured in the same manner as in Comparative Example 2-1, and the ratio ($R_{SCE}$(C) / $R_{SCE}$(O)) of the central diffuse light reflectance ($R_{SCE}$(C)) to the outer diffuse light reflectance ($R_{SCE}$(O)) was computed. In the decorative layered body 10 in Example 2-10, $R_{SCI}$(O) was 4.9%, $R_{SCE}$(O) was 1.0%, $R_{SCI}$(O) / $R_{SCE}$(O) was 4.7, $R_{SCE}$(C) was 0.7%, and $R_{SCE}$(C) / $R_{SCE}$(O) was 0.67.

The appearance of each of the thus-obtained decorative layered bodies 10 in Comparative Examples 2-1 to 2-3 and Examples 2-1 to 2-10 was evaluated. The appearance was evaluated by determining the extent to which the glare on the front surface 11 side of the decorative layered body 10 was reduced compared to that in the decorative layered body 10 in Comparative Example 2-1 and by evaluating the sense of depth when the decorative layered body 10 was viewed from the front surface 11 side.

Table 2 shows the results of the appearance evaluation of the decorative layered bodies 10 in Comparative Examples 2-1 to 2-3 and Examples 2-1 to 2-10. In the "Reduction in glare" column in Table 2, "C" means that the degree of glare is about the same as that in Comparative Example 2-1, and "A" means that the glare is significantly reduced compared to that in Comparative Example 2-1. In the "Sense of depth" column in Table 2, "C" means that the perceived depth is about the same as that in Comparative Example 2-1. "B" means that the perceived depth is deeper than that in Comparative Example 2-1, and "A" means that the perceived depth is much deeper than that in Comparative Example 2-1. Table 2 also shows, in addition to the results for the Examples and Comparative Examples, the total light reflectance ($R_{SCI}$) and diffuse light reflectance ($R_{SCE}$) of the surface of a sheet-like substrate with black printing on the surface and having a total light transmittance of 0% and the ratio ($R_{SCI}/R_{SCE}$) of the total light reflectance ($R_{SCI}$) to the diffuse light reflectance ($R_{SCE}$).

[Table 2]

| | $R_{SCI}$(O) (%) | $R_{SCE}$(O) (%) | $R_{SCI}$(O) /$R_{SCE}$(O) | $R_{SCE}$(C) % | $R_{SCE}$(C) /$R_{SCE}$(O) | REDUCTION IN GLARE | SENSE OF DEPTH |
|---|---|---|---|---|---|---|---|
| COMPARATIVE EXAMPLE 2-1 | 97.4 | 100.4 | 1.0 | 4.3 | 0.04 | C | C |
| COMPARATIVE EXAMPLE 2-2 | 50.8 | 49.6 | 1.0 | 28 | 0.06 | C | C |

(continued)

| | $R_{SCI}(O)$ (%) | $R_{SCE}(O)$ (%) | $R_{SCI}(O)$ /$R_{SCE}(O)$ | $R_{SCE}(C)$ % | $R_{SCE}(C)$ /$R_{SCE}(O)$ | REDUCTION IN GLARE | SENSE OF DEPTH |
|---|---|---|---|---|---|---|---|
| COMPARATIVE EXAMPLE 2-3 | 27.2 | 27.3 | 1.0 | 1.1 | 0.04 | C | C |
| EXAMPLE 2-1 | 10.7 | 7.5 | 1.4 | 05 | 0.07 | C | B |
| EXAMPLE 2-2 | 5.4 | 1.7 | 3.2 | 0.3 | 0.18 | A | A |
| EXAMPLE 2-3 | 4.4 | 0.5 | 8.8 | 0.3 | 0.60 | A | A |
| EXAMPLE 2-4 | 40.8 | 37.8 | 1.1 | 2.7 | 0.07 | C | B |
| EXAMPLE 2-5 | 22.6 | 19.0 | 1.2 | 1.6 | 0.08 | C | B |
| EXAMPLE 2-6 | 11.5 | 8.2 | 1.4 | 0.9 | 0.11 | A | A |
| EXAMPLE 2-7 | 6.4 | 2.6 | 2.5 | 0.4 | 0.15 | A | A |
| EXAMPLE 2-8 | 4.6 | 0.6 | 7.7 | 0.3 | 0.50 | A | A |
| EXAMPLE 2-9 | 4.2 | 0.3 | 16.6 | 0.2 | 0.84 | A | B |
| EXAMPLE 3-10 | 4.9 | 1.0 | 4.7 | 0.7 | 0.67 | A | A |
| * SHEET-LIKE SUBSTRATE WITH BLACK PRINTING (TOTAL LIGHT TRANSMITTANCE: 0%) $R_{SCI}$(%) : 13.41, $R_{SCE}$(%) :0.57, $R_{SCI}/R_{SCE}$ :23.5 | | | | | | | |

As can be seen from Table 2, in each decorative layered body 10 in which the outer total light reflectance ($R_{SCI}$(O)) was 45% or less, in which the outer diffuse light reflectance ($R_{SCE}$(O)) was 40% or less, and in which the ratio ($R_{SCI}$(O) / $R_{SCE}$(O)) of the outer total light reflectance ($R_{SCI}$(O)) to the outer diffuse light reflectance ($R_{SCE}$(O)) was 1.1 or more and 18 or less, the perceived depth was deeper than that in Comparative Example 2-1. Moreover, in each decorative layered body 10 in which the ratio ($R_{SCE}$(C) / $R_{SCE}$(O)) of the central diffuse light reflectance ($R_{SCE}$(C)) to the outer diffuse light reflectance ($R_{SCE}$(O)) was 0.1 or more and 0.9 or less, the perceived depth was deeper than that in Comparative Example 2-1. Moreover, in each decorative layered body 10 in which the outer total light reflectance ($R_{SCI}$(O)) was 12 or less, in which the outer diffuse light reflectance ($R_{SCE}$(O)) was 8.5% or less, and in which the ratio ($R_{SCI}$(O) / $R_{SCE}$(O)) of the outer total light reflectance ($R_{SCI}$(O)) to the outer diffuse light reflectance ($R_{SCE}$(O)) was 1.4 or more and 8 or less, the perceived depth was significantly deeper than that in Comparative Example 2-1. In each decorative layered body 10 in which the ratio ($R_{SCE}$(C) / $R_{SCE}$(O)) of the central diffuse light reflectance ($R_{SCE}$(C)) to the outer diffuse light reflectance ($R_{SCE}$(O)) was 0.1 or more and 0.7 or less, the perceived depth was significantly deeper than that in Comparative Example 2-1.

<<<Second embodiment>>>

Referring next to the drawings, a second embodiment of the disclosure will be described.

A decorative member 3 and a decorative layered body 10 shown in Fig. 32 differ from the decorative member 3 and decorative layered body 10 described above mainly in that it is not always necessary for the reflectance of the front surface to meet the requirements for the total light reflectance ($R_{SCI}$) and diffuse light reflectance ($R_{SCE}$) described above. The rest of the structure is substantially the same as that of the decorative member 3 and the decorative layered body 10 shown in Fig. 17. Of course, in the decorative member 3 and the decorative layered body 10 in the embodiment and modifications described below also, the reflectance of the front surface may meet the requirements for the total light reflectance ($R_{SCI}$) and the diffuse light reflectance ($R_{SCE}$).

In the following description and the drawings used for the following description, parts having the same structures as those in the first embodiment described above are denoted by the same symbols as those used for the corresponding parts in the first embodiment, and the redundant description will be omitted.

In the example shown in Fig. 32 also, the decorative member 3 includes the decorative layered body 10 and the molded portion 65. In the example shown in Fig. 32, the decorative layered body 10 has been shaped, and each layer of the decorative layered body 10 has a flat portion 10c and a curved portion 10d. The curved portion 10d is connected circumferentially to the circumferential edge of the flat portion 10c. The flat portion 10c extends two-dimensionally in the X direction (Dx) and Y direction (Dy). The flat portion 10c and the curved portion 10d form a recessed portion that receives part of the molded portion 65. However, the shape of the decorative layered body 10 in the decorative member 3 is not limited to the above shape. The decorative layered body 10 may be flat, as shown in Fig. 2.

<<Decorative layered body>>

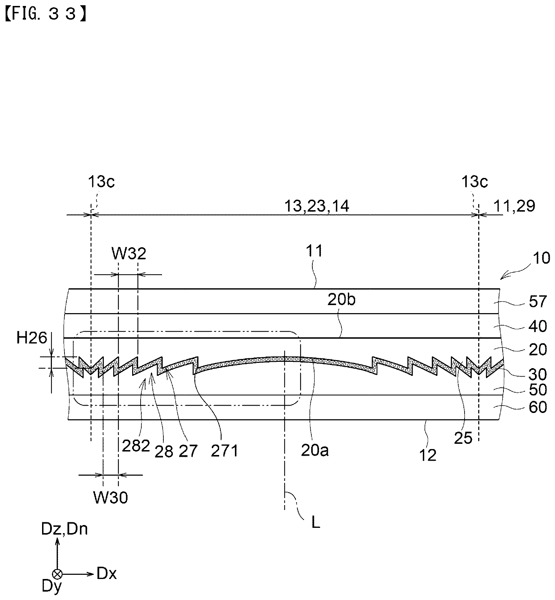

In an example shown in Fig. 33 also, a decorative layered body 10 includes the profiled layer 20 and the brightness adjusting layer 30. In the illustrated example, the decorative layered body 10 further includes the masking layer 60, the filling layer 50, the transmittance adjusting layer 40, and the substrate layer 57. The masking layer 60, the filling layer 50, the brightness adjusting layer 30, the profiled layer 20, the transmittance adjusting layer 40, and the substrate layer 57 are stacked in this order in the direction from the back surface 12 of the decorative layered body 10 to the front surface 11. In the illustrated example, the masking layer 60 forms the back surface 12 of the decorative layered body 10, and the substrate layer 57 forms the front surface 11 of the decorative layered body 10.

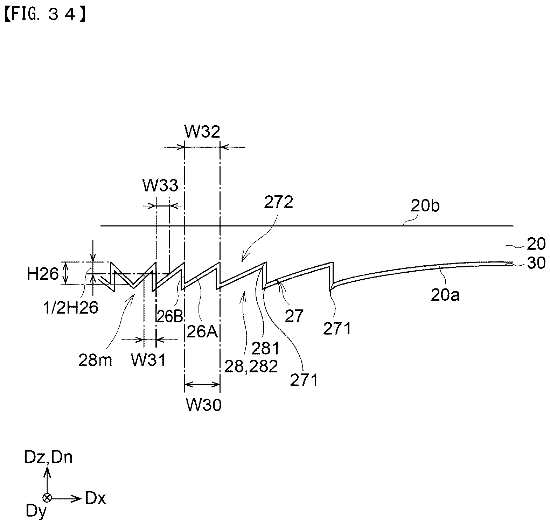

Referring next to Figs. 33 to 35, the profiled layer 20 and the brightness adjusting layer 30 will be described. Fig. 34 is an enlarged view of a portion surrounded by a chain double-dashed line in the cross-sectional view of the decorative layered body 10 shown in Fig. 33. In Fig. 34, the illustration of particles P described later is omitted for the sake of clarity.

<Profiled layer>

As described above, the fine relief structure 25 is formed in the profiled layer 20. As described above, the profiled layer 20 has a relief surface formed by the relief structure 25. The relief structure 25 includes a plurality of protruding portions 27 and a plurality of recessed portions 28 formed between the plurality of protruding portions 27. The apexes 271 of adjacent protruding portions 27 form openings 282 of the recessed portions 28.

As is clearly shown in Fig. 34, each recessed portion 28 is formed by an inclined surface 26A and a connection surface 26B facing each other. The width of each recessed portion 28 decreases as one approaches the bottom 281 of the recessed portion 28. In other words, the width of each protruding portion 27 decreases as one approaches the apex 271 of the protruding portion 27.

The depth of each recessed portion 28 (i.e., the height of each protruding portion 27) is equal to the height H26 of the corresponding inclined surface 26A or the corresponding connection surface 26B. In the second embodiment, H26 may be 5 $\mu$m or less, 3 $\mu$m or less, 1 $\mu$m or less, 0.5 $\mu$m or less, or 0.25 $\mu$m or less.

As described above, each recessed portion 28 has an opening 282 formed by the apexes 271 of adjacent protruding portions 27. In the present description, the width W30 of the opening 282 of each recessed portion 28 (hereinafter simply referred to also as "opening width W30") is the width of the recessed portion 28 at the height level of the apexes 271 of the protruding portions 27. In the illustrated example, the opening width W30 of each recessed portion 28 is measured in a direction in which the inclined surfaces 26A and the connection surfaces 26B are arranged. The opening width W30 is 0.5 $\mu$m or more and 20 $\mu$m or less.

As can be seen from Fig. 33, the opening widths W30 of the recessed portions 28 may vary depending on the distance from the reference line L. Specifically, the opening width W30 may decrease as one moves from the reference line L toward the outside of the unit optical element 13. The outside of the unit optical element 13 is the side away from the reference line L in a direction in which the inclined surfaces 26A and the connection surfaces 26B are arranged. Among the plurality of recessed portions 28 included in the relief structure 25, a recessed portion 28m with the smallest opening width W30 is hereinafter referred to also as the "smallest recessed portion 28m."

In a relief structure 25 in which the plurality of recessed portions 28 have the same opening width W30, all of the recessed portions 28 are the smallest recessed portions 28m. Therefore, in this case, the phrase "the smallest recessed portion 28m (the recessed portion 28 with the smallest opening width W30 among the plurality of recessed portions 28) has an opening width W30 of 0.5 $\mu$m or more and 20 $\mu$m or less" means that all the recessed portions 28 have an opening width W30 of 0.5 $\mu$m or more and 20 $\mu$m or less.

<Brightness adjusting layer>

In the second embodiment, the brightness adjusting layer 30 is a refractive index modulation layer. The brightness adjusting layer 30 contains particles P that reflect light. More specifically, as shown in Fig. 33, the brightness adjusting layer 30 contains a plurality of particles P. In the example shown in Fig. 33, the particles P are formed of a high refractive index material. The high refractive index material used to form the particles P can be, for example, a metal oxide, a metal sulfide, or a metal nitride. More specific examples of the high refractive index material that can be used to form the particles P include titanium oxide, zirconium oxide, silicon oxide, hollow silica, aluminum oxide, zinc oxide, zinc sulfide, and barium titanate.

The average particle diameter of the particles P is sufficiently smaller than the width W31 of each recessed portion 28 at half the height of the recessed portion 28 (see Fig. 34; this width is hereinafter referred to also as the "recessed portion center width W31"). Therefore, the particles P can be distributed even in a narrow portion of the recessed portion 28. As a result, the particles P can be distributed at high density in the relief structure 25. By distributing the particles P over the relief structure 25 at high density, the particles P in the brightness adjusting layer 30 form a reflective interface conforming to the relief structure 25 between the brightness adjusting layer 30 and the profiled layer 20. In this case, each unit optical element 13 provides an optical effect reflecting the relief structure 25 on the light entering from the front surface 11 of the decorative layered body 10.

In the illustrated example, the average particle diameter of the particles P is 100 nm or less. In the illustrated example, a value obtained by dividing each recessed portion center width W31 by the average particle diameter is 15 or more. Since the size of the particles P is small, the particles P can be distributed at high density down to the bottom 281 of each recessed portion 28 of the profiled layer 20. Therefore, each unit optical element 13 can provide an optical effect precisely reflecting the relief structure 25 on the light entering from the front surface 11 of the decorative layered body 10.

In the illustrated example, the profiled layer 20 includes recessed portions 28 with different widths. In the illustrated example, a value obtained by dividing the recessed portion center width W31 of the narrowest recessed portion 28 by the average particle diameter is 15 or more. This allows the particles P to be distributed at high density in all the recessed portions 28 of the profiled layer 20 down to their bottoms 281. Therefore, each unit optical element 13 can provide an optical effect precisely reflecting the relief structure 25 on the light entering from the front surface 11 of the decorative layered body 10.

In the present description, the average particle diameter of the particles P is the maximum width of the particles P in a cross section taken in the thickness direction of the decorative layered body 10, i.e., their maximum length. The particle diameter (nm) of a particle P is the maximum width of the particle P in a cross-section taken in the normal direction Dn normal to the decorative layered body 10, i.e., its maximum length. The average particle diameter (nm) of the particles P is determined by magnifying and observing 30 cross-sectional areas having a length of 500 $\mu$m or more and 1500 $\mu$m or less in a direction orthogonal to the direction normal to the decorative layered body 10, measuring the particle diameter of the largest particle in each cross-sectional area, and then determining the average value (nm) of the measured particle diameters of the 30 particles.

In the present description, the shapes and sizes of the protruding portions 27 and the recessed portions 28 in the relief structure 25 are observed and measured as follows. Specifically, first, the decorative layered body 10 or the decorative member 3 is cut in the stacking direction of the layers forming the decorative layered body 10. Next, the obtained cross-section of the decorative layered body 10 is observed using a digital microscope (product name: VHX-8000 series manufactured by KEYENCE CORPORATION), and the size of each part of the relief structure 25 is measured.

In the illustrated example, the decorative layered body 10 does not include a metal layer for reflecting the light entering the decorative layered body 10. Although the decorative layered body 10 does not include a metal layer, the particles P in the brightness adjusting layer 30 reflect light, and this allows a design corresponding to the relief structure 25 of the profiled layer 20 to be displayed. When the decorative layered body 10 does not include a metal layer, the decorative layered body 10 can be produced easily. In particular, the formation of a defective metal layer that is a problem when the metal layer is formed by a vapor deposition method can be avoided. In addition, when the decorative layered body 10 is shaped to form the curved portion 10d as shown in Fig. 32, whitening or delamination caused by cracking of the metal layer does not occur. Moreover, the particles P described above absorb or transmit part of the light entering the brightness adjusting layer 30. Therefore, the degree of glare of the decorative layered body 10 can be smaller than that when the light is reflected by the metal layer.

The brightness adjusting layer 30 is formed, for example, by coating. In this case, the brightness adjusting layer 30 can be formed, for example, by the following method. Specifically, an ink used to form the brightness adjusting layer and containing particles P is prepared, and the profiled surface 20a is coated with the prepared ink. The brightness adjusting layer 30 can thereby be formed. The ink for forming the brightness adjusting layer may be a mixture of the particles P and a binder resin. Examples of the binder resin that can be used include thermoplastic resins, thermosetting resins, UV curable resins, and ionizing radiation curable resins. A brightness adjusting layer 30 containing a thermoplastic resin as the binder resin is flexible and has stretchability. Therefore, when the decorative layered body 10 is curved or stretched along the surface of the molded portion 65, the brightness adjusting layer 30 can be curved or stretched as desired. In other words, there is little risk that the brightness adjusting layer 30 will prevent the decorative layered body 10 from being curbed or stretched. Alternatively, an ink prepared by dispersing the particles P in a zirconium oxide dispersion (SZR series (product name) manufactured by Sakai Chemical Industry Co., Ltd.) can be used as the ink for forming the brightness adjusting layer. In this case, the light entering the unit optical elements 13 can be effectively reflected by the particles P. Therefore, the reflectance of the decorative layered body 10 can be effectively increased.

The ink for forming the brightness adjusting layer may further contain an extender, a solvent, a stabilizer, a plasticizers, a catalyst, a hardener, a UV absorber, a light stabilizers, etc.

In the example shown in Fig. 33, the brightness adjusting layer 30 does not fill in the surface relief of the profiled surface 20a of the profiled layer 20. In other words, the thickness of the brightness adjusting layer 30 is smaller than the depth H26 of each recessed portion 28. The thickness of the brightness adjusting layer 30 may be smaller than the height H26 of each connection surface 26B. The thickness of the brightness adjusting layer 30 may be less than or equal to half the height H26 of each connection surface 26B, less than or equal to 25% of the height H26 of each connection surface 26B, or less than or equal to 10% of the height H26 of each connection surface 26B. The brightness adjusting layer 30 having the thickness described above has a surface relief corresponding to the surface relief of the profiled surface 20a on the side opposite to the side facing the profiled surface 20a without filling in the surface relief of the profiled surface 20a.

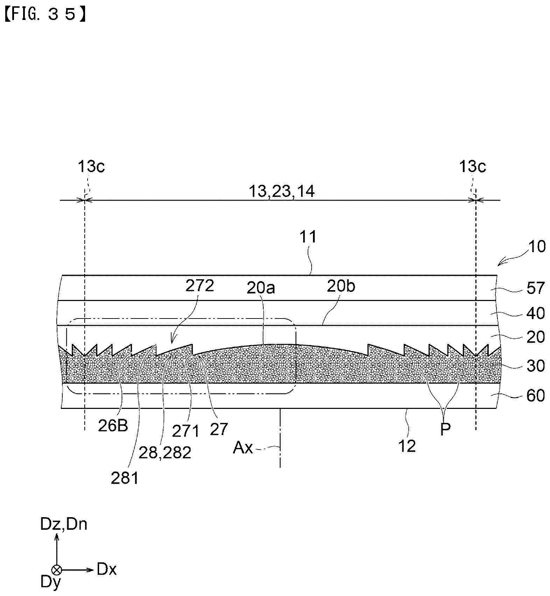

As shown in Fig. 35, the brightness adjusting layer 30 may fill in the surface relief of the profiled surface 20a of the profiled layer 20. In other words, the thickness of the brightness adjusting layer 30 may be more than or equal to the depth H26 of each recessed portion 28. In this case, the decorative layered body 10 need not necessarily include the filling layer 50.

<<Method for producing decorative layered body>>

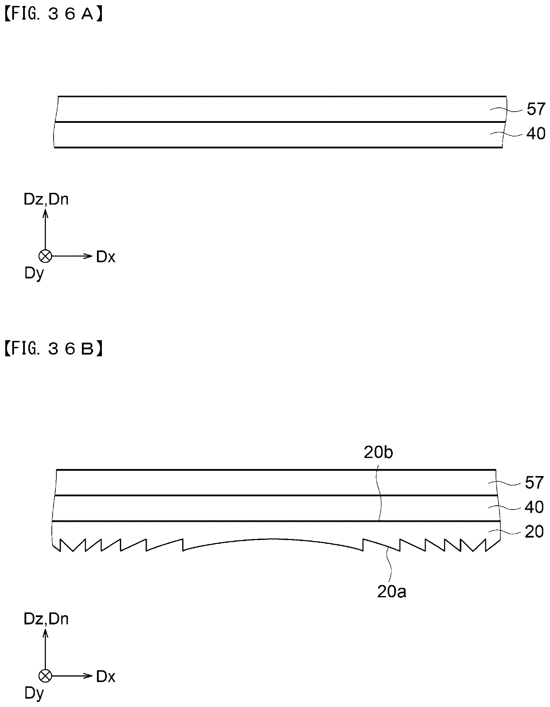

Referring mainly to Figs. 36A to 36D, a method for producing the decorative layered body 10 will be described.

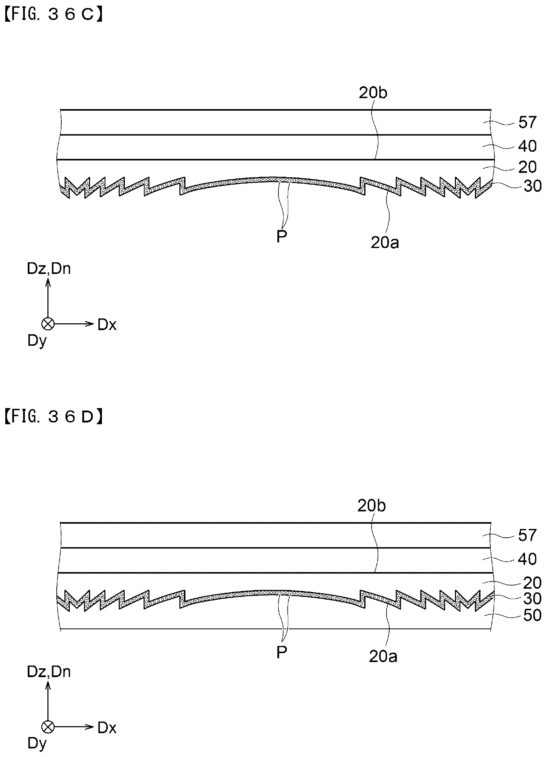

First, as shown in Fig. 36A, the substrate layer 57 is prepared, and the transmittance adjusting layer 40 is formed on the substrate layer 57. Next, as shown in Fig. 36B, the profiled layer 20 is formed on the transmittance adjusting layer 40. Next, as shown in Fig. 36C, the brightness adjusting layer 30 is formed on the profiled surface 20a of the profiled layer 20. Specifically, the ink for forming the brightness adjusting layer is applied to the profiled surface 20a to form an ink layer, and then the ink layer is cured. Next, as shown in Fig. 36D, the filling layer 50 is formed on the brightness adjusting layer 30. Next, the masking layer 60 is formed on the filling layer 50. The decorative layered body 10 shown in Fig. 33 is thereby produced.

In the example shown in Fig. 33, the brightness adjusting layer 30 has a uniform thickness, but this is not a limitation. The thickness of the brightness adjusting layer 30 may be nonuniform.

With the brightness adjusting layer 30 also, the reflectance of the decorative layered body 10 can be adjusted. Therefore, the decorative layered body 10 need not necessarily include the transmittance adjusting layer 40.

When the brightness adjusting layer 30 fills in the surface relief of the profiled layer 20, the particles P can be distributed at high density down to the interface between the profiled surface 20a of the profiled layer 20 and the brightness adjusting layer 30 because the size of the particles P is small as described above. In this case, the brightness adjusting layer 30 has a nonuniform thickness reflecting the relief structure 25. Therefore, the brightness adjusting layer 30 can reflect or absorb the light entering the unit optical elements 13 at a reflectance or absorptance precisely reflecting the relief structure 25, and each unit optical element 13 can express a shade or contrast precisely reflecting the relief structure 25. In this manner, the decorative layered body 10 can display a design reflecting the relief structure 25. Moreover, the decorative layered body 10 can display a different design depending on the direction from which the decorative layered body 10 is observed.

In the illustrated example, the value obtained by dividing the recessed portion center width W31 of the smallest recessed portion 28m by the average particle diameter of the particles P is 15 or more. In this case, the particles P can be distributed at high density in all of the recessed portions 28 of the profiled layer 20. Therefore, each unit optical element 13 can express a shade or contrast precisely reflecting the relief structure 25.

In the examples shown in Figs. 33 and 35, the profiled surface 20a of the profiled layer 20 faces the back surface 12 of the decorative layered body 10, but this is not a limitation. The profiled surface 20a may face the front surface 11 of the decorative layered body 10, as in the decorative layered bodies 10 shown in Figs. 19, 25, and 27.

In the example shown in Fig. 33, the thickness of the brightness adjusting layer 30 is uniform, but this is not a limitation. The thickness of the brightness adjusting layer 30 may be nonuniform.

In the examples shown in Figs. 33 and 35, the decorative layered body 10 includes the substrate layer 57, but this is not a limitation. The decorative layered body 10 need not necessarily include the substrate layer 57. In this case, the decorative layered body may be produced using the substrate 72, as shown, for example, in Figs. 13A to 13F.

<<Modification 1 of second embodiment>>

In the examples shown in Figs. 33 to 36D, the particles P are formed of a high refractive index material, but this is not a limitation. The particles P may be formed of a pigment or a dye.

The following dyes or pigments can be used to form the particles P contained in the brightness adjusting layer 30.

<Dye>

Examples of the dye that can be used to form the particles P include various dyes such as blue dyes, red dyes, green dyes, magenta dyes, yellow dyes, purple dyes, and black dyes.

Examples of the blue dye that can be used include methine-based dyes, anthraquinone-based dyes, azo-based dyes, triarylmethane-based dyes, and phthalocyanine-based dyes.

Examples of the red dye that can be used include azo-based dyes, anthraquinone-based dyes, and perinone-based dyes.

Examples of the green dye that can be used include triphenylmethane-based basic dyes and phthalocyanine-based dyes.

Examples of the magenta dye that can be used include fuchsine and anthraquinone-based dyes.

Examples of the yellow dye that can be used include azo-based dyes, anthraquinone-based dyes, methine-based dyes, quinophthalone-based dyes, and pyrazolone-based dyes.

Examples of the purple dye that can be used include azo-based dyes, anthraquinone-based dyes, azine-based dyes, and quinoline-based dyes.

Examples of the black dye that can be used include disazo dyes, metal-containing azo dyes, anthraquinone dyes, monoazo dyes, hydroxy ketone dyes, and sulfide dyes.

<Pigment>

Examples of the pigment that can be used to form the particles P include various pigments such as light absorptive pigments and light reflective pigments.

Examples of the light absorptive pigment that can be used include various color pigments such as red pigments, yellow pigments, blue pigments, green pigments, purple pigments, and black pigments. The color pigment that can be used is an organic pigment, an inorganic pigment, or a composite metal oxide pigment.

Examples of the red pigment that can be used include diketopyrrolopyrrole-based pigments, anthraquinone-based pigments, perylene-based pigments, iron oxide pigments, titanium-based complex oxide pigments, and quinacridone.

Examples of the yellow pigment that can be used include isoindolinone-based pigments, anthraquinone-based pigments, iron oxide pigments, titanium yellow, and condensed azo-based pigments.

Examples of the blue pigment that can be used include copper phthalocyanine-based pigments, anthraquinone-based pigments, cobalt blue, cobalt-based pigments, and phthalocyanine.

Examples of the green pigment that can be used include phthalocyanine-based pigments, isoindolinone-based pigments, cobalt blue, and cobalt-based pigments.

Examples of the purple pigment that can be used include quinacridone-based pigments and dioxazine-based pigments.

Examples of the black pigment that can be used include titanium black (such as substoichiometric titanium oxides and titanium oxynitride), carbon black, ceramic black, bone black, and perylene black.

Examples of the light reflective pigment that can be used include various pigments such as white pigments and luster pigments.

Examples of the white pigment that can be used include titanium oxide, silica, talc, kaolin, clay, mica, zinc sulfide, zinc white, barium sulfate, calcium carbonate, and calcium hydroxide.

Examples of the luster pigment that can be used include metallic scales and pearl pigments.

Examples of the material that can be used to form the metallic scales include metals and alloys such as aluminum, gold, silver, brass, titanium, chromium, nickel, nickel-chromium , and stainless steel.

The pearl pigment is obtained by coating a scale-like base such as mica, aluminum, or glass with a colorless high refractive index material such as titanium dioxide, a high refractive index color material such as ferric oxide, or another pigment. Examples of the pearl pigment include white pearl pigments, interference pearl pigments, and colored pearl pigments.

The brightness adjusting layer 30 may further contain, in addition to the pigment or dye described above, a toning pigment or a toning dye. For example, when the brightness adjusting layer 30 is colored black and the black pigment or dye is reddish, the brightness adjusting layer 30 may further contain any of the above-described blue pigments and dyes and the above-described green pigments and dyes as a toning pigment or a toning dye. Examples of the toning pigment that can be used in this case include, in addition to the blue and green pigments, various coloring pigments such as the red pigments, yellow pigments, magenta pigments, and purple pigments described above. Moreover, examples of the toning dye that can be used in this case include, in addition to the blue and green dyes described above, various dyes such as the red dyes, magenta dyes, yellow dyes, and purple dyes described above. For example, the brightness adjusting layer 30 may contain carbon black and a phthalocyanine-based pigment.

Alternatively, the brightness adjusting layer 30 may contain any of the above-described color pigments and dyes other than the black pigments and black dyes so as to be colored black.

Even when the brightness adjusting layer 30 contains particles P formed of a pigment or dye, the brightness adjusting layer 30 is formed, for example, by coating. In this case, the brightness adjusting layer 30 can be formed, for example, by the following method. Specifically, an ink containing particles P and used to form the brightness adjusting layer is prepared, and the profiled surface 20a is coated with the prepared ink. The brightness adjusting layer 30 can thereby be formed. The ink for forming the brightness adjusting layer may be, for example, a mixture of the particles P and a binder resin. Examples of the binder resin that can be used include transparent UV curable resins, transparent ionizing radiation curable resins, transparent thermoplastic resins, and transparent thermosetting resins. Alternatively, an ink prepared by

**EP 4 545 290 A1**

dispersing the particles P in a zirconium oxide dispersion (SZR series (product name) manufactured by Sakai Chemical Industry Co., Ltd.) can be used as the ink for forming the brightness adjusting layer. In this case, the light entering the unit optical elements 13 can be effectively reflected by the particles P. Therefore, the reflectance of the decorative layered body 10 can be effectively increased.

Even when the brightness adjusting layer 30 contains the particles P formed of a pigment or dye, the ink for forming the brightness adjusting layer may further contain an extender, a solvent, a stabilizer, a plasticizers, a catalyst, a hardener, a UV absorber, a light stabilizers, etc.

In the present modification, H26 may be 10 µm or less, 5 µm or less, 3 µm or less, 1 µm or less, 0.5 µm or less, or 0.25 µm or less.

In the present modification, the opening width W30 is 0.5 µm or more and 20 µm or less.

In the present modification, the average particle diameter of the particles P is 300 nm or less. A value obtained by dividing each recessed portion center width W31 by the average particle diameter is 15 or more. Since the size of the particles P is small, the particles P can be distributed at high density down to the bottoms 281 of the recessed portions 28 of the profiled layer 20. Therefore, each unit optical element 13 can provide an optical effect precisely reflecting the relief structure 25 on the light entering the decorative layered body 10.

In the present modification, a value obtained by dividing the recessed portion center width W31 of the smallest recessed portion 28m by the average particle diameter is 15 or more. In this case, the particles P can be distributed at high density down to the bottoms 281 of all the recessed portions 28 of the profiled layer 20. Therefore, each unit optical element 13 can provide an optical effect precisely reflecting the relief structure 25 on the light entering the decorative layered body 10.

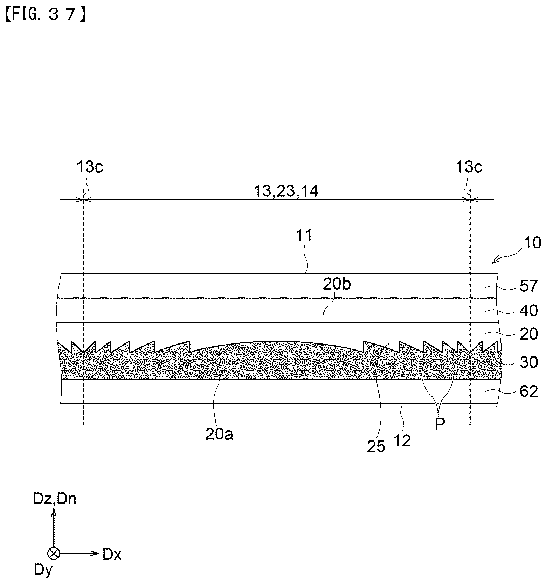

In the present modification, the decorative layered body 10 may further include an additional brightness adjusting layer 62 in addition to the brightness adjusting layer 30. As shown in Fig. 37, the additional brightness adjusting layer 62 may be disposed outward of the profiled layer 20 on the back surface 12 side of the decorative layered body 10. The additional brightness adjusting layer 62 may be formed using the same material as the material of the brightness adjusting layer 30 serving as the reflective layer or the refractive index modulation layer described above by the same method as that for the brightness adjusting layer 30. The additional brightness adjusting layer 62 may contain the light-reflective pigment described above.

In the present modification, by changing the thickness of the brightness adjusting layer 30 (in particular, its thickness on the inclined surfaces 26A), the reflectance of the decorative layered body 10 can be adjusted.

Examples in which, for example, both the brightness adjusting layer 30 and the masking layer 60 contain a black pigment such as carbon black will be described.

In this case, the decorative layered body 10 shown in Fig. 33 was produced with the thickness of the brightness adjusting layer 30 set to 100 nm, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 9.1\%,$$

$$R_{SCE}(E) = 3.4\%,$$

and

$$R_{SCI}(E) / R_{SCE}(E) = 2.7.$$

Next, the decorative layered body 10 shown in Fig. 33 was produced with the thickness of the brightness adjusting layer 30 set to 200 nm, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 7.1\%,$$

$$R_{SCE}(E) = 2.0\%,$$

and

$$R_{SCI}(E) / R_{SCE}(E) = 3.5.$$

Next, the decorative layered body 10 shown in Fig. 33 was produced with the thickness of the brightness adjusting layer 30 set to 1 $\mu$m, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 5.5\%,$$

$$R_{SCE}(E) = 0.94\%,$$

and

$$R_{SCI}(E) / R_{SCE}(E) = 5.9.$$

Next, the decorative layered body 10 shown in Fig. 33 was produced with the thickness of the brightness adjusting layer 30 set to 2 $\mu$m to 3 $\mu$m, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 4.5\%,$$

$$R_{SCE}(E) = 0.6\%,$$

and

$$R_{SCI}(E) / R_{SCE}(E) = 7.6.$$

Examples in which, for example, the brightness adjusting layer 30 contains a black pigment such as carbon black and the masking layer 60 contains a high-brightness pigment such as an aluminum pigment or a vapor-deposited metal will be described.

In this case, the decorative layered body 10 shown in Fig. 33 was produced with the thickness of the brightness adjusting layer 30 set to 100 nm, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 28.0\%,$$

$$R_{SCE}(E) = 13.1\%,$$

and

$$R_{SCI}(E) / R_{SCE}(E) = 2.1.$$

Next, the decorative layered body 10 shown in Fig. 33 was produced with the thickness of the brightness adjusting layer 30 set to 200 nm, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 17.5\%,$$

$$R_{SCE}(E) = 3.4\%,$$

and

$$R_{SCI}(E) / R_{SCE}(E) = 5.2.$$

Next, the decorative layered body 10 shown in Fig. 33 was produced with the thickness of the brightness adjusting layer 30 set to 1 $\mu$m, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 9.6\%,$$

$$R_{SCE}(E) = 1.6\%,$$

and

$$R_{SCI}(E) / R_{SCE}(E) = 5.8.$$

Next, the decorative layered body 10 shown in Fig. 33 was produced with the thickness of the brightness adjusting layer 30 set to 2 $\mu$m to 3 $\mu$m, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 4.6\%,$$

$$R_{SCE}(E) = 0.6\%,$$

and

$$R_{SCI}(E) / R_{SCE}(E) = 7.6.$$

Examples in which, for example, the brightness adjusting layer 30 contains a yellow pigment such as titanium yellow and the masking layer 60 contains a black pigment such as carbon black will be described.

In this case, the decorative layered body 10 shown in Fig. 33 was produced with the thickness of the brightness adjusting layer 30 set to 200 nm, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 13.2\%,$$

$$R_{SCE}(E) = 6.4\%,$$

and

$$R_{SCI}(E) / R_{SCE}(E) = 2.1.$$

Next, the decorative layered body 10 shown in Fig. 33 was produced with the thickness of the brightness adjusting layer 30 set to 400 nm, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 12.7\%,$$

$$R_{SCE}(E) = 6.3\%,$$

and

$$R_{SCI}(E) / R_{SCE}(E) = 2.0.$$

Next, the decorative layered body 10 shown in Fig. 33 was produced with the thickness of the brightness adjusting layer 30 set to 1 nm, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 12.7\%,$$

$$R_{SCE}(E) = 6.4\%,$$

and

$$R_{SCI}(E) / R_{SCE}(E) = 2.0.$$

Next, the decorative layered body 10 shown in Fig. 33 was produced with the thickness of the brightness adjusting layer 30 set to 3 $\mu$m to 4 $\mu$m, and the overall total light reflectance ($R_{SCI}(E)$) and the overall diffuse light reflectance ($R_{SCE}(E)$) were measured. Then the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) were the following values:

$$R_{SCI}(E) = 13.4\%,$$

$$R_{SCE}(E) = 8.2\%,$$

and

$$R_{SCI}(E) / R_{SCE}(E) = 2.0.$$

In the present modification also, the profiled surface 20a of the profiled layer 20 may face the back surface 12 of the decorative layered body 10 or may face the front surface 11.

In the present modification also, the thickness of the brightness adjusting layer 30 may be nonuniform.

In the present modification also, the decorative layered body 10 need not necessarily include the substrate layer 57. In this case, the decorative layered body may be produced using the substrate 72, as shown, for example, in Figs. 13A to 13F.

<<Modification 2 of second embodiment>>

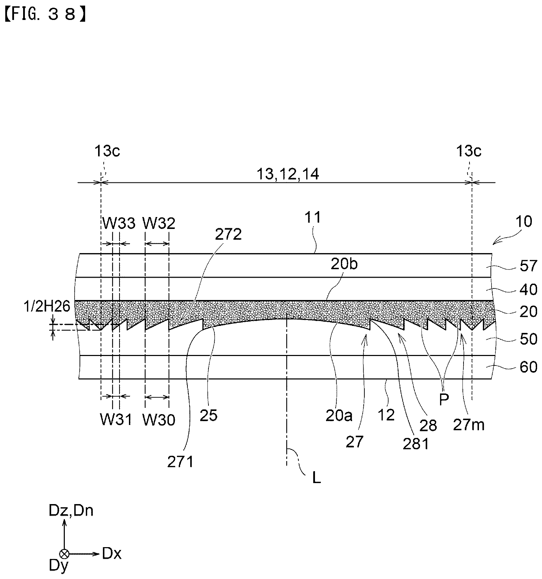

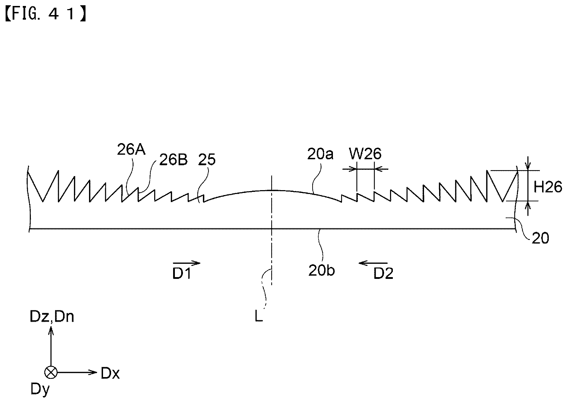

As shown in Fig. 38, the profiled layer 20 may contain particles P formed of a pigment and/or a dye. In this case, the decorative layered body 10 need not necessarily include the brightness adjusting layer 30. In the example shown in Fig. 41, the profiled layer 20 contains a plurality of particles P formed of a dye or a pigment.

In the present modification, the height H26 of each protruding portion 27 is 10 $\mu$m or less. The height H26 may be 5 $\mu$m or less, 3 $\mu$m or less, 1 $\mu$m or less, 0.5 $\mu$m or less, or 0.25 $\mu$m or less.

In this example, the width of a base portion 272 of each protruding portion 27 is the width of the protruding portion 27 at the height level of the bottoms 281 of the recessed portions 28. In the present description, the width W32 of the base portion 272 (hereinafter referred to simply as the "base width W32") is measured in a direction in which the inclined surfaces 26A and the connection surfaces 26B are arranged. As can be seen from Fig. 41, the base widths W32 of the protruding portions 27 may vary depending on the distance from the reference line L. Specifically, the base width W32 may decrease as one moves from the reference line L to the outside of the unit optical element 13. In the following description, a protruding portion 27m with the smallest base width W32 among the plurality of protruding portions 27 included in the relief structure 25 is referred to also as the "smallest protruding portion 27m."

The base width W32 of the smallest protruding portion 27m is 0.5 $\mu$m or more and 20 $\mu$m or less. In a relief structure 25 in which all of the plurality of protruding portions 27 have the same base width W32, all of the protruding portions 27 are the smallest protruding portions 27m. Therefore, in this case, the phrase "the smallest protruding portion 27m (the protruding portion 27 with the smallest base width W32 among the plurality of protruding portions 27) has a base width W32 of 0.5 $\mu$m or more and 20 $\mu$m or less" means that the bases portions 272 of all the protruding portions 27 have a width W26 of 0.5 $\mu$m or more and 20 $\mu$m or less.

The average particle diameter of the particles P is sufficiently smaller than the width W33 of each protruding portion 27 at half the height of the protruding portion 27 (this width is hereinafter referred to also as the "protruding portion center width W33"). Therefore, the particles P can be distributed even in narrow portions of the protruding portions 27. In this case, the particles P can be distributed in the relief structure 25 (in other words, in the protruding portions 27) at high density. By distributing the particles P at high density in the relief structure 25, the decorative layered body 10 can display a shade or contrast reflecting the relief structure 25. More specifically, the decorative layered body 10 can reflect the light entering the unit optical element 13 by the particles P in the profiled layer 20 with an intensity reflecting the relief structure 25. In this manner, the decorative layered body 10 can display a design reflecting the relief structure 25. Moreover, the decorative layered body 10 can display a different design depending on the direction from which the decorative layered body 10 is observed.

In the illustrated example, the average particle diameter of the particles P is 300 nm or less. Moreover, in the illustrated example, a value obtained by dividing each protruding portion center width W33 by the average particle diameter is 15 or more. Since the size of the particles P is small, the particles P can be distributed at high density down to the interface between the profiled layer 20 and the filling layer 50. Therefore, each unit optical element 13 can express a shade or contrast precisely reflecting the relief structure 25.

In the illustrated example, a value obtained by dividing the protruding portion center width W33 of the smallest protruding portion 27m by the average particle diameter is 15 or more. In this case, the particles P can be distributed at high density even in all the protruding portions 27 of the profiled layer 20. Therefore, each unit optical element 13 can express a shade or contrast precisely reflecting the relief structure 25.

In a relief structure 25 in which all the plurality of protruding portions 27 have the same protruding portion center width W33, all the protruding portions 27 are the smallest protruding portions 27m. Therefore, in this case, the phrase "the value obtained by dividing the protruding portion center width W33 of the smallest protruding portion 27m by the average particle diameter is 15 or more" means that the value obtained by dividing the protruding portion center width W33 of any of the protruding portions 27 by the average particle diameter is 15 or more.

In the example shown in Fig. 41 also, the decorative layered body 10 does not include a metal layer for reflecting light entering the decorative layered body 10. Even when the decorative layered body 10 does not include a metal layer, the particles P in the profiled layer 20 reflect light, and a design corresponding to the relief structure 25 of the profiled layer 20 can thereby by displayed. In the example shown in Fig. 41 also, the decorative layered body 10 can be produced easily because the decorative layered body 10 does not include a metal layer. In particular, the formation of a defective metal layer that is a problem when the metal layer is formed by a vapor deposition method can be avoided. In addition, when the decorative layered body 10 is shaped to form the curved portion 10d as shown in Fig. 32, whitening or delamination caused by cracking of the metal layer does not occur. Moreover, the particles P described above absorb or transmit part of the light entering the decorative layered body 10. Therefore, the degree of glare of the decorative layered body 10 can be smaller than that when the light is reflected by the metal layer.

The profiled layer 20 shown in Fig. 41 can be formed by using, as a precursor material for the profiled layer 20, a mixture of the above-described particles P and a binder resin. Examples of the binder resin that can be used include thermoplastic resins, thermosetting resins, UV curable resins, and ionizing radiation curable resins. A profiled layer 20 containing a UV curable resin or an electron beam curable resin as the binder resin is flexible and has stretchability. Therefore, when the decorative layered body 10 is curved or stretched along the surface of the molded portion 65, the profiled layer 20 can be curved or stretched as desired. In other words, there is little risk that the profiled layer 20 will prevent the decorative layered body 10 from being curbed or stretched.

The precursor material for the profiled layer 20 may further contain an extender, a solvent, a stabilizer, a plasticizers, a catalyst, a hardener, a UV absorber, a light stabilizers, etc.

In the present modification also, the profiled surface 20a of the profiled layer 20 may face the back surface 12 of the decorative layered body 10 or may face the front surface 11.

In the present modification also, the decorative layered body 10 may include the additional brightness adjusting layer 62. The additional brightness adjusting layer 62 may be disposed outward of the profiled layer 20 on the back surface 12 side of the decorative layered body 10, as in the example shown in Fig. 37.

In the present modification also, the decorative layered body 10 need not necessarily include the substrate layer 57. In this case, the decorative layered body may be produced using the substrate 72 as shown, for example, in Figs. 13A to 13F.

<<Modification 3 of second embodiment>>

In the example shown in Fig. 38, the profiled layer 20 contains the particles P formed of a pigment and/or a dye, but this is not a limitation. The profiled layer 20 may contain particles P that reflect light. More specifically, the profiled layer 20 may contain a plurality of particles P. The particles P may be formed of a high refractive index material. Examples of the high refractive index material that can be used to form the particles P include metal oxides, metal sulfides, and metal nitrides. More specific examples of the high refractive index material that can be used to form the particles P include titanium oxide, zirconium oxide, silicon oxide, hollow silica, aluminum oxide, zinc oxide, zinc sulfide, and barium titanate.

In the present modification, the height H26 of each protruding portion 27 is 5 $\mu$m or less. The height H26 may be 5 $\mu$m or less, 3 $\mu$m or less, 1 $\mu$m or less, 0.5 $\mu$m or less, or 0.25 $\mu$m or less. Moreover, the base width W32 of each protruding portion 27 may be 0.5 $\mu$m or more and 20 $\mu$m or less. In the present modification also, the base width W32 of the smallest protruding portion 27m is 0.5 $\mu$m or more and 20 $\mu$m or less.

In the present modification also, the average particle diameter of the particles P is sufficiently smaller than each protruding portion center width W33. Therefore, the particles P can be distributed even in narrow portions of the protruding portions 27. As a result, the particles P can be distributed at high density in the relief structure 25 (in other words, in the protruding portions 27). By distributing the particles P over the relief structure 25 at high density, the decorative layered body 10 can display a shade or contrast reflecting the relief structure 25. More specifically, the decorative layered body 10 can reflect the light entering the unit optical element 13 by the particles P in the profiled layer 20 with an intensity reflecting the relief structure 25. In this manner, the decorative layered body 10 can display a design reflecting the relief structure 25. Moreover, the decorative layered body 10 can display a different design depending on the direction from which the decorative layered body 10 is observed.

In the present modification, the average particle diameter of the particles P is 100 nm or less. In the illustrated example, a value obtained by dividing each protruding portion center width W33 by the average particle diameter is 15 or more. Since the size of the particles P is small, the particles P can be distributed at high density down to the interface between the profiled layer 20 and the filling layer 50. Therefore, each unit optical element 13 can express a shade or contrast precisely reflecting the relief structure 25.

In the present modification also, a value obtained by dividing the protruding portion center width W33 of the smallest protruding portion 27m by the average particle diameter may be 15 or more. In this case, the particles P can be distributed at high density even in all the protruding portions 27 of the profiled layer 20. Therefore, each unit optical element 13 can express a shade or contrast precisely reflecting the relief structure 25.

In the present modification also, the decorative layered body 10 does not include a metal layer for reflecting light entering the decorative layered body 10. Even when the decorative layered body 10 does not include a metal layer, the particles P in the profiled layer 20 reflect light, and a design corresponding to the relief structure 25 of the profiled layer 20 can thereby by displayed. In the present modification also, since the decorative layered body 10 does not include a metal layer, the decorative layered body 10 can be produced easily. In particular, the formation of a defective metal layer that is a problem when the metal layer is formed using a vapor deposition method can be avoided. In addition, when the decorative layered body 10 is shaped to form the curved portion 10d as shown in Fig. 32, whitening or delamination caused by cracking of the metal layer does not occur. Moreover, the particles P described above absorb or transmit part of the light entering the decorative layered body 10. Therefore, the degree of glare of the decorative layered body 10 can be smaller than that when the light is reflected by the metal layer.

In the present modification also, the profiled layer 20 can be formed using, as a precursor material for the profiled layer 20, a mixture of the above-described particles P and a binder resin. Examples of the binder resin that can be used include thermoplastic resins, thermosetting resins, UV curable resins, and ionizing radiation curable resins.

In the present modification also, the profiled surface 20a of the profiled layer 20 may face the back surface 12 of the decorative layered body 10 or may face the front surface 11.

In the present modification also, the decorative layered body 10 need not necessarily include the substrate layer 57. In this case, the decorative layered body may be produced, for example, using the substrate 72, as shown in Figs. 13A to 13F.

<<<Additional modifications>>>

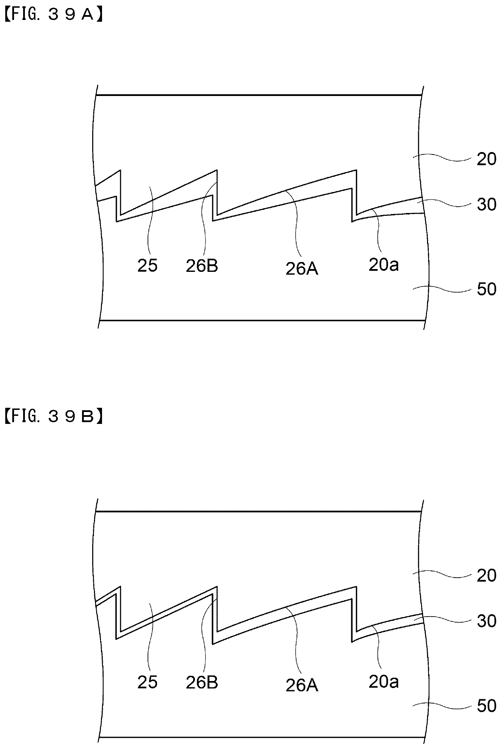

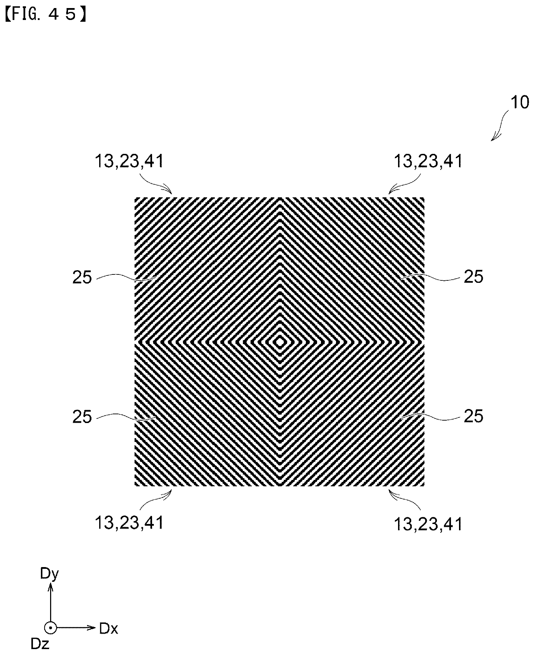

Referring next to Figs. 39A to 48, additional modifications of the first and second embodiments described above will be described. In Figs. 39A to 48, the same parts as those shown in Figs. 1 to 41 are denoted by the same symbols, and their detailed descriptions will be omitted.

As shown in Figs. 39A and 39B, the thickness of the brightness adjusting layer 30 on the inclined surfaces 26A may be nonuniform. In this manner, the reflectance of the decorative layered body 10 can be reduced. This is due to the following reason.

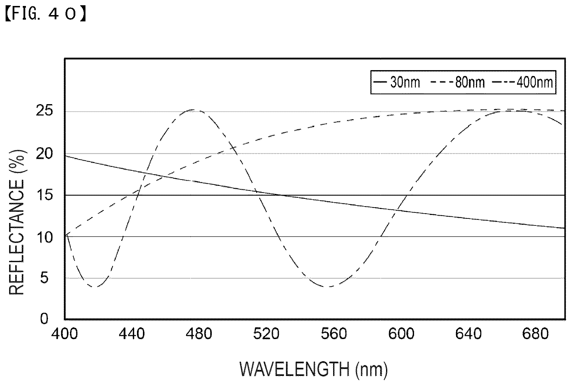

As shown in Fig. 40, visible light entering the decorative layered body 10 is reflected at different reflectances depending on the thickness of the brightness adjusting layer 30. Fig. 40 shows the visible light reflectances of brightness adjusting layers 30 having different thicknesses when the brightness adjusting layers 30 are formed from a metal material. In Fig. 40, the horizontal axis represents the wavelength of visible light, and the vertical axis represents reflectance. In Fig. 40, the solid line shows the reflectance when the brightness adjusting layer 30 has a uniform thickness of 30 nm. The broken line shows the reflectance when the brightness adjusting layer 30 has a uniform thickness of 80 nm, and the dash-dot line shows the reflectance when the brightness adjusting layer 30 has a uniform thickness of 400 nm. When the brightness adjusting layer 30 is formed by vapor deposition of a metal material, the thickness of the brightness adjusting layer 30 is about 80 nm. In this case, as shown in Fig. 40, in the wavelength range of about 450 nm or more, the brightness adjusting layer 30 reflects the light entering the decorative layered body 10 with high reflectance. However, when the thickness of the brightness adjusting layer 30 on the inclined surfaces 26A is nonuniform as shown in Figs. 39A and 39B, e.g., when the thickness varies in the range of about 30 nm to about 400 nm, the reflectance of portions of the brightness adjusting layer 30 that have a thickness of about 30 nm or about 400 nm is high in the wavelength range of about 450 nm or more, but the reflectance of portions of the brightness adjusting layer 30 having a thickness of about 30 nm and/or the reflectance of portions having a thickness of about 400 nm are low in the wavelength range of about 450 nm or more. Therefore, the overall reflectance of the brightness adjusting layer 30 in the entire visible light wavelength range is reduced. In particular, when the brightness adjusting layer 30 is formed by vapor deposition of a metal material, the glare of the decorative layered body 10 can be reduced.

When the thickness of the brightness adjusting layer 30 on the inclined surfaces 26A is nonuniform, the light transmittance of the brightness adjusting layer 30 can be adjusted by utilizing the nonuniformity. In this case, the color tone of the decorative layered body 10 that is imparted by the colors of layers observed through the brightness adjusting layer 30 or the color of the molded portion 65 can be adjusted. In particular, when the layers disposed outward of the brightness adjusting layer 30 on the back surface 12 side of the decorative layered body 10 and the molded portion 65 are colored black, the blackness of the decorative layered body 10 can be effectively enhanced. Moreover, when the brightness adjusting layer 30 is colored as in the second embodiment, the overall color tone of the brightness adjusting layer 30 can be adjusted, and therefore the color tone of the decorative layered body 10 can be adjusted.

When the thickness of the brightness adjusting layer 30 on the inclined surfaces 26A is nonuniform as described above, the reflectance of the decorative layered body 10 can be adjusted, and the color tone of the decorative layered body 10 can also be adjusted.

As shown in Fig. 39A, the thickness of the brightness adjusting layer 30 may be nonuniform on each inclined surface 26A. More specifically, the brightness adjusting layer 30 on each inclined surface 26A may have a portion with a large thickness and a portion with a small thickness. Alternatively, as shown in Fig. 39B, the thicknesses of the brightness adjusting layer 30 on different inclined surfaces 26A may differ from each other. More specifically, the thickness of the brightness adjusting layer 30 on an inclined surface 26A may differ from the thickness of the brightness adjusting layer 30 on another inclined surface 26A.

To effectively reduce the reflectance of the brightness adjusting layer 30, the difference t1 - t2 between the thickness t1 of a portion of the brightness adjusting layer 30 that has the largest thickness and the thickness t2 of a portion of the brightness adjusting layer 30 that has the smallest thickness is preferably 100 nm or more, more preferably 200 nm or more, and still more preferably 300 nm or more.

As described above, the thickness of the brightness adjusting layer 30 can be measured by cutting the decorative layered body 10 in the thickness direction and observing the image of a cross-section of the decorative layered body 10 using a scanning electron microscope.

<Modifications of relief structure>

In the example shown in Fig. 5, the inclined surfaces 26A correspond to a plurality of lens surfaces obtained by dividing the lens surface of a curved surface lens into a plurality of sections having the same thickness along planes perpendicular to the thickness direction (optical axis direction) of the curved surface lens. Therefore, the standard deviation of the pitches W26 of the inclined surfaces 26A on at least one side of the reference line L (e.g., the left side in Fig. 5) is larger than 5 $\mu$m. The standard deviation of the heights H26 of the inclined surfaces 26A on at least one side of the reference line L is 1 $\mu$m or less. However, this is not a limitation.

As shown in Fig. 41, the inclined surfaces 26A may correspond to a plurality of lens surfaces obtained by dividing the lens surface of a curved surface lens into a plurality of sections with different thicknesses along planes perpendicular to the thickness direction (optical axis direction) of the curved surface lens. In this case also, each unit optical element 13 exhibits the same optical function as that of the curved surface lens or an optical function corresponding to the optical function of the curved surface lens. In this case also, the plurality of inclined surfaces 26A are arranged in the direction toward the reference line L.

In the example shown in Fig. 41, the unit profiled element 23 has the following additional feature. In a cross section of the unit optical element 13 taken in the arrangement direction the plurality of inclined surfaces 26A, the standard deviation of the pitches W26 of the inclined surfaces 26A on at least one side (e.g., the left side in Fig. 41) of the reference line L is 5 μm or less. The pitches W26 may be equal to each other. Moreover, the standard deviation of the heights H26 of the inclined surfaces 26A on at least one side of the reference line L is larger than 1 μm. Moreover, as shown in Fig. 41, when a plurality of inclined surfaces 26A are present also on the other side of the reference line L (e.g., on the right side in Fig. 41) in the cross section, the standard deviation of the pitches W26 of the inclined surfaces 26A on the other side of the reference line L is 5 μm or less. The pitches W26 may be equal to each other. Moreover, the standard deviation of the heights H26 of the inclined surfaces 26A on the other side of the reference line L is larger than 1 μm. In the example shown in Fig. 41, the height H26 increases as one moves away from the reference line L on both the one and the other sides of the reference line L.

In the example shown in Fig. 41, the unit profiled element 23 has the following additional features in addition to or in place of the above-described features. Specifically, in the above cross-section, the difference between the maximum and minimum values of the inclined surface angles θA of the inclined surfaces 26A on at least one side of the reference line L is more than 1°. Moreover, as shown in Fig. 41, when a plurality of inclined surfaces 26A are present also on the other side of the reference line L in the above cross section, the difference between the maximum and minimum values of the inclined surface angles θA of the inclined surfaces 26A on the other side of the reference line L is more than 1°. In the example shown in Fig. 41, the inclined surface angle θA decreases as one moves away from the reference line L on both the one and the other sides of the reference line L.

In the examples described above, the inclined surfaces 26A correspond to a plurality of lens surfaces obtained by dividing the lens surface of a curved surface lens, but this is not a limitation.

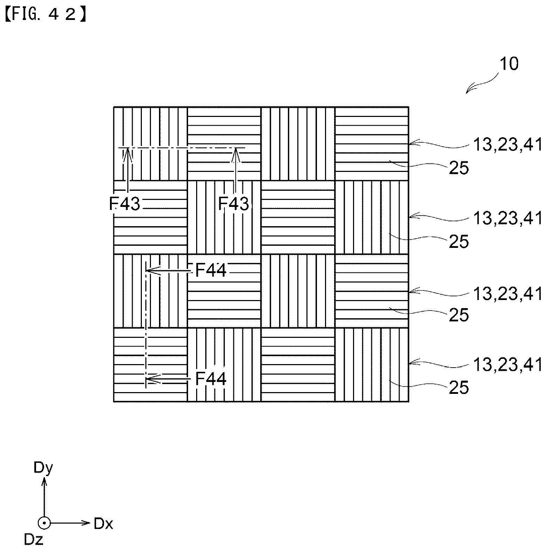

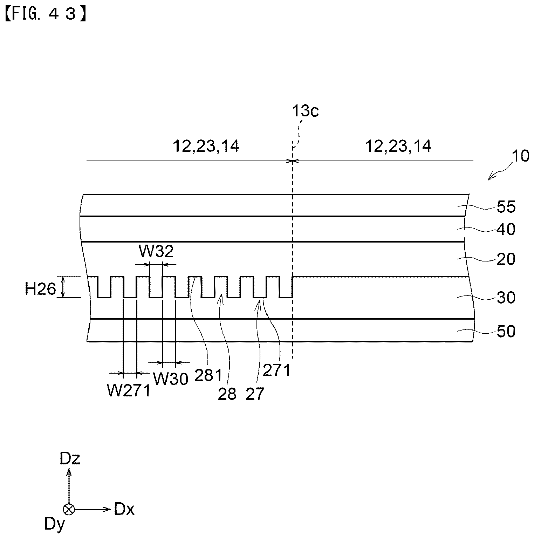

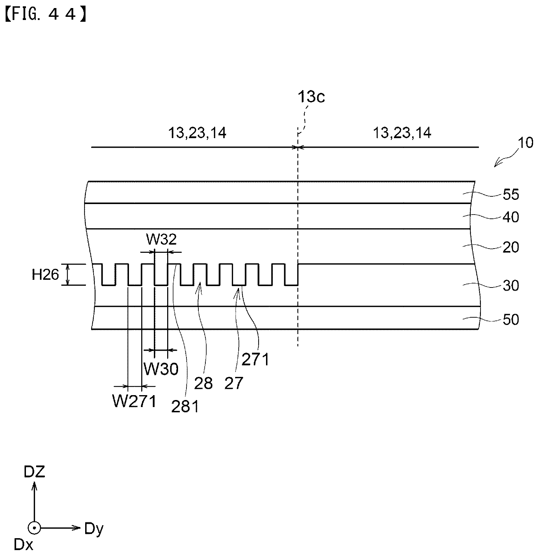

As shown in Figs. 42 to 48, the relief structure 25 of the profiled layer 20 may be a relief structure including groups of parallel straight lines or groups of parallel curved lines when the profiled layer 20 is viewed in plan. Among Figs. 42 to 48, Fig. 42 is a plan view of the decorative layered body 10 in which the relief structure 25 includes groups of parallel straight lines when the profiled layer 20 is viewed in plan. Figs. 43 and 44 are cross-sectional views taken along line F43-F43 and line F44-F44, respectively, in Fig. 42.

In the example shown in Fig. 42, the profiled layer 20 includes a plurality of unit profiled elements 23 each having a fine relief structure 25 including a group of parallel straight lines in plan. Light reflected by the decorative layered body 10 including this profiled layer 20 can display a design reflecting the groups of parallel straight lines formed in the relief structures 25. The decorative layered body 10 can express a different design depending on the direction from which the decorative layered body 10 is observed. In the illustrated example, the extending directions of groups of parallel straight lines in adjacent unit profiled elements 23 in plan view differ from each other. With the decorative layered body 10 including the profiled layer 20 described above, a complicated design can be expressed because adjacent unit optical elements 13 reflect light differently. Moreover, the groups of parallel straight lines extending in different directions allow a sense of three-dimensionality to be expressed.

In the illustrated example, the width of each recessed portion 28 is constant in the thickness direction of the profiled layer 20. In other words, the width of each protruding portion 27 is constant in the thickness direction of the profiled layer 20.

As shown in Figs. 43 and 42, the opening widths W30 of the recessed portions 28 and the widths W271 of the apexes 271 of the protruding portions 27 in the groups of parallel straight lines can be appropriately set according to the design to be expressed by the decorative layered body 10. Moreover, the opening widths W30 of the recessed portions 28 in each group of parallel straight lines may be equal to each other or different from each other within the plane of the corresponding unit profiled element 23. Similarly, the widths W271 of the apexes 271 of the protruding portions 27 in each group of parallel straight lines may be equal to each other or different from each other within the plane of the corresponding unit profiled element 23. In the illustrated example, the opening widths W30 of the plurality of recessed portions 28 are the same, and the widths W271 of the apexes 271 of the plurality of protruding portions 27 are also the same. Therefore, in the illustrated example, all of the recessed portions 28 are the smallest recessed portions 28m described above, and all of the protruding portions 27 are the smallest protruding portions 27m described above.

When the profiled layer 20 in the present modification is applied to the second embodiment or modification 1 or 2 of the second embodiment described above, it is preferable that the depth H26 of each recessed portion 28 is within the numerical range described above. Moreover, when the profiled layer 20 in the present modification is applied to the second embodiment or modification 1 of the second embodiment described above, it is preferable that the opening width W30 of the smallest recessed portion 28m is within the numerical range described above. When the profiled layer 20 of the present modification is applied to modification 2 of the second embodiment described above, it is preferable than the base width W32 of the smallest protruding portion 27m is within the numerical range described above.

From the viewpoint of expressing a sense of three-dimensionality more effectively while the thickness of the decorative layered body 10 is reduced, the opening width W30 of the smallest recessed portion 28m and the width W271 of the apex 271 of the smallest protruding portion 27m are preferably 20 $\mu$m or less and 0.5 $\mu$m or more, more preferably 15 $\mu$m or less and 5 $\mu$m or more, and still more preferably 12.5 $\mu$m or less and 8 $\mu$m or more.

When the profiled layer 20 in the present modification is applied to the second embodiment or modification 1 of the second embodiment described above, it is preferable that a value obtained by dividing the recessed portion center width W31 of each the recessed portion 28 by the average particle diameter is 15 or more. In this case, it is more preferable that a value obtained by dividing the recessed portion center width W31 of the smallest recessed portion 28m by the average particle diameter is 15 or more. Since the size of the particles P is small, the particles P can be distributed at high density down to the interface between the profiled surface 20a of the profiled layer 20 and a layer facing the profiled surface 20a. In the illustrated example, the width of each recessed portion 28 is constant in the thickness direction of the profiled layer 20, and therefore the recessed portion center width W31 of each recessed portion 28 is equal to the opening width W30 of the recessed portion 28.

When the profiled layer 20 in the present modification is applied to modification 2 of the second embodiment described above, it is preferable that a value obtained by dividing the protruding portion center width W33 of each protruding portion 27 by the average particle diameter is 15 or more. In this case, it is more preferable that a value obtained by dividing the protruding portion center width W33 of the smallest protruding portion 27m by the average particle diameter is 15 or more. Since the size of the particles P is small, the particles P can be distributed at high density down to the profiled surface 20a of the profiled layer 20. In the illustrated example, the width of each protruding portions 27 is constant in the thickness direction of the profiled layer 20, and therefore the protruding portion center width W33 of each protruding portion 27 is equal to the base width W32 of the protruding portion 27.

When the decorative member 3 is disposed so as to face the sensor 5, the opening widths W30 of the recessed portions 28 and the widths W271 of the apexes 271 of the protruding portions 27 are preferably 100 $\mu$m or less, from the viewpoint of allowing electromagnetic waves emitted from the sensor 5 to pass through the decorative member 3 with high transmittance. Moreover, from the viewpoint of preventing the occurrence of prismatic light on the surface of the decorative layered body 10, the opening widths W30 of the recessed portions 28 and the widths W271 of the apexes 271 of the protruding portions 27 are preferably 10 $\mu$m or more.

In the illustrated example, the opening widths W30 and the recessed portion center widths W31 of the recessed portions 28, the widths W271 of the apexes 271 of the protruding portions 27, and the protruding portion center widths W33 of the protruding portions 27 in each group of parallel straight lines are measured in the arrangement direction of the plurality of recessed portions 28 and the plurality of protruding portions 27 forming the group of parallel straight lines.

In the example shown in Fig. 42, each unit profiled element 23 has a rectangular shape when the profiled layer 20 is viewed in plan, and the extending direction of the parallel straight lines is a direction along one of the sides of the unit profiled element 23, but this is not a limitation. As shown in Fig. 51, the extending direction of a group of parallel straight lines may be a direction intersecting sides of the unit profiled elements 23 when the profiled layer 20 is viewed in plan. The shape of each unit profiled element 23 in plan view is not limited to the rectangular shape shown in Figs. 42 and 51. Other polygonal shapes such as triangular, pentagonal, hexagonal, and octagonal shapes, shapes obtained by chamfering the corners of polygonal shapes, shapes including curved outlines such as circular shapes and elliptical shapes, etc., can be used as the shape of the unit profiled elements 23 in plan view.

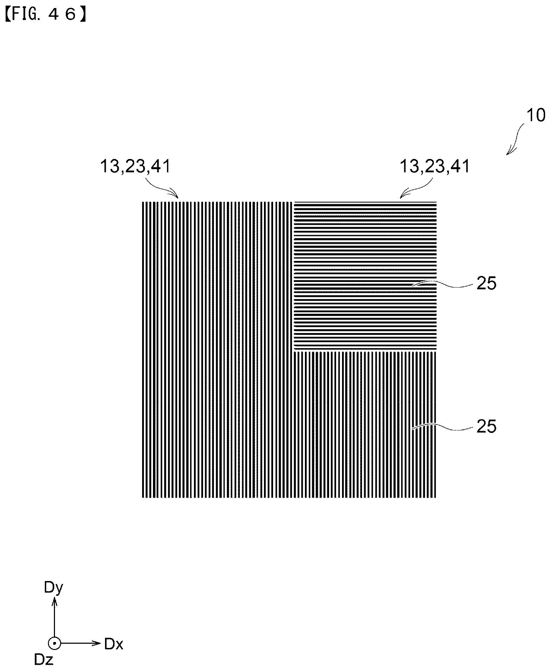

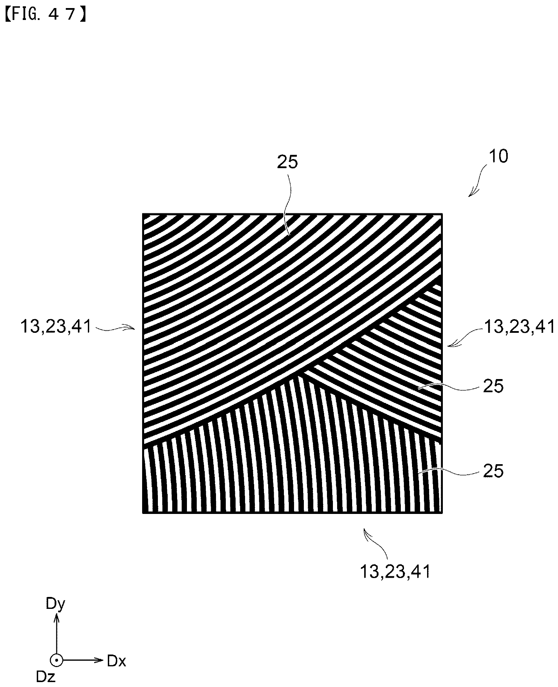

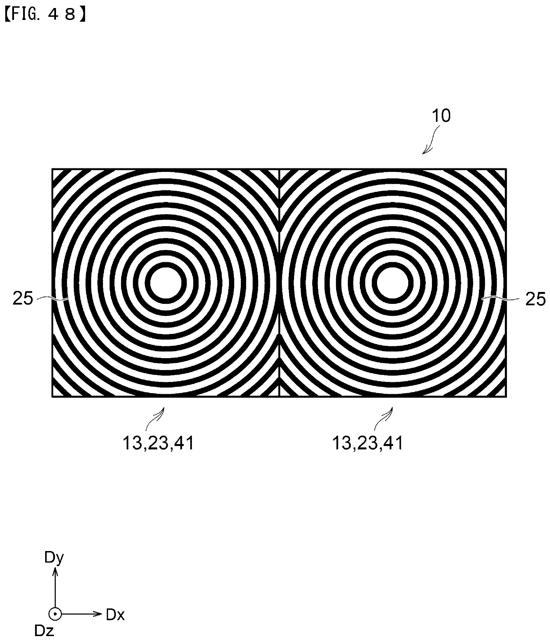

As shown in Fig. 46, the plurality of unit profiled elements 23 may have mutually different shapes. Moreover, as shown in Fig. 47, each unit profiled element 23 may have a relief structure 25 formed so as to include a group of parallel curved lines in plan view. In particular, when the relief structure 25 formed in each unit profiled element 23 includes a group of concentric circles in plan view as shown in Fig. 48, the unit optical element 13 can display a design similar to that of the unit optical elements 13 shown by solid lines in Fig. 4. The profiled layer 20 may include unit profiled elements 23 each including a surface relief forming a group of parallel straight lines in plan view and unit profiled elements 23 each including a surface relief forming a group of parallel curved lines in plan view.

The relief structure 25 of the profiled layer 20 may form an embossed hologram. In this case, the decorative layered body 10 can display a design corresponding to the design expressed by the embossed hologram of the profiled layer 20.

As has been described, one decorative layered body 10 in the first embodiment includes a profiled layer 20. The profiled layer 20 has a profiled surface 20a having a relief structure 25 formed thereon. The decorative layered body 10 includes at least one unit optical element 13. The unit optical element 13 reflects, refracts, and/or diffracts incident light according to the relief structure 25. In the unit optical element 13, the profiled surface 20a includes a plurality of inclined surfaces 26A and a plurality of connection surfaces 26B connecting adjacent ones of the inclined surfaces 26A. The plurality of inclined surfaces 26A are arranged in a direction toward a reference line L extending in a normal direction Dn normal to the decorative layered body 10. The plurality of inclined surfaces 26A are inclined toward the reference line L. An angle $\theta$A is the angle of an inclined surface 26A with respect to the normal direction Dn. An angle $\theta$B is the angle of a connection surface 26B with respect to the normal direction Dn. The angle $\theta$A of each inclined surface 26A is larger than the angles $\theta$B of connection surfaces 26B connected to the inclined surface 26A. Each unit optical element 13 has a central region 13a that is a region including the reference line L. Each unit optical element 13 has an outer region 13b. The outer region 13b of the unit optical element 13 is located between the central region 13a of the unit optical element 13 and its edge portion 13c in a direction in which the inclined surfaces 26A and the connection surfaces 26B are arranged.

In the outer region 13b, the total light reflectance and the diffuse light reflectance measured from a side of one surface 11 of the decorative layered body 10 according to JIS Z 8722:2009 are referred to as outer total light reflectance ($R_{SCI}(O)$) and outer diffuse light reflectance ($R_{SCE}(O)$), respectively. In this case, the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \leq 45\%,$$

$$R_{SCE}(O) \leq 40\%,$$

and

$$1.1 \leq R_{SCI}(O) / R_{SCE}(O) \leq 18.$$

In this case, the apparent thickness of the decorative layered body 10 can be perceived so as to be larger than the actual thickness in an effective manner, and a rich design expression with a sense of luxury can be achieved.

In the decorative layered body 10 in the first embodiment, the profiled layer 20 has a lens structure. In this case, the inclined surfaces 26A are lens surfaces, and the connection surfaces 26B are rising surfaces.

In the decorative layered body 10 in the first embodiment, the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \leq 12\%,$$

$$R_{SCE}(O) \leq 8.5\%,$$

and

$$1.4 \leq R_{SCI}(O) / R_{SCE}(O) \leq 8.$$

In this case, the apparent thickness of the decorative layered body 10 can be perceived so as to be much larger than the actual thickness, and a rich design expression with a sense of luxury can be achieved.

In the decorative layered body 10 in the first embodiment, the diffuse light reflectance measured from one surface 11 side of the decorative layered body 10 according to JIS Z 8722:2009 in the central region 13a is referred to as central diffuse light reflectance ($R_{SCE}(C)$), and the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.9.$$

In this case, the apparent thickness of the decorative layered body 10 can be perceived so as to be larger than the actual thickness in an effective manner, and a rich design expression with a sense of luxury can be achieved.

In the decorative layered body 10 in the first embodiment, the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.7.$$

In this case, the apparent thickness of the decorative layered body 10 can be perceived so as to be much larger than the actual thickness, and a rich design expression with a sense of luxury can be achieved.

Another decorative layered body 10 in the first embodiment includes a profiled layer 20. The profiled layer 20 has a profiled surface 20a having a relief structure 25 formed thereon. The decorative layered body 10 includes at least one unit optical element 13. The unit optical element 13 reflects, refracts, and/or diffracts incident light according to the relief structure 25. In the unit optical element 13, the profiled surface 20a includes a plurality of inclined surfaces 26A and a plurality of connection surfaces 26B connecting adjacent ones of the inclined surfaces 26A. The plurality of inclined surfaces 26A are arranged in a direction toward a reference line L extending in a normal direction Dn normal to the decorative layered body 10. The plurality of inclined surfaces 26A are inclined toward the reference line L. An angle θA is the angle of an inclined surface 26A with respect to the normal direction Dn. An angle θB is the angle of a connection surface 26B with respect to the normal direction Dn. The angle θA of each inclined surface 26A is larger than the angles θB of connection surfaces 26B connected to the inclined surface 26A. Each unit optical element 13 has a central region 13a that is a region including the reference line L. Each unit optical element 13 has an outer region 13b. The outer region 13b of the unit optical element 13 is located between the central region 13a of the unit optical element 13 and its edge portion 13c in a direction in which the inclined surfaces 26A and the connection surfaces 26B are arranged.

The diffuse light reflectance measured from a side of one surface 11 of the decorative layered body 10 according to JIS Z 8722:2009 in the outer region 13b is referred to as outer diffuse light reflectance ($R_{SCE}(O)$), and the diffuse light reflectance measured from a side of the one surface 11 according to JIS Z 8722:2009 in the central region 13a is referred to as central diffuse light reflectance ($R_{SCE}(C)$). In this case, the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.9.$$

In this case, the apparent thickness of the decorative layered body 10 can be perceived so as to be larger than the actual thickness in an effective manner, and a rich design expression with a sense of luxury can be achieved.

In the decorative layered body 10 in the first embodiment, the profiled layer 20 has a lens structure. The inclined surfaces 26A are lens surfaces. The connection surfaces 26B are rising surfaces.

In the decorative layered body 10 in the first embodiment, the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.7.$$

In this case, the apparent thickness of the decorative layered body 10 can be perceived so as to be much larger than the actual thickness, and a rich design expression with a sense of luxury can be achieved.

Another decorative layered body 10 in the first embodiment includes a profiled layer 20. The profiled layer 20 has a profiled surface 20a having a relief structure 25 formed thereon. The decorative layered body 10 includes at least one unit optical element 13. The unit optical element 13 reflects, refracts, and/or diffracts incident light according to the relief structure 25. In the unit optical element 13, the profiled surface 20a includes a plurality of inclined surfaces 26A and a plurality of connection surfaces 26B connecting adjacent ones of the inclined surfaces 26A. The plurality of inclined surfaces 26A are arranged in a direction toward a reference line L extending in a normal direction Dn normal to the decorative layered body 10. The plurality of inclined surfaces 26A are inclined toward the reference line L. An angle θA is the angle of an inclined surface 26A with respect to the normal direction Dn. An angle θB is the angle of a connection surface 26B with respect to the normal direction Dn. The angle θA of each inclined surface 26A is larger than the angles θB of connection surfaces 26B connected to the inclined surface 26A.

The total light reflectance and the diffuse light reflectance measured from a side of one surface 11 of the decorative layered body 10 according to JIS Z 8722:2009 in a region that includes at least 40% of the unit optical element 13 when the decorative layered body 10 is viewed in plan are referred to as overall total light reflectance ($R_{SCI}(E)$) and overall diffuse light reflectance ($R_{SCE}(E)$), respectively. In this case, the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) satisfy the following formulas:

$$R_{SCI}(E) \leq 35\%,$$

$$R_{SCE}(E) \leq 25\%,$$

and

$$1.3 \leq R_{SCI}(E) / R_{SCE}(E) \leq 15.$$

In this case, the apparent thickness of the decorative layered body 10 can be perceived so as to be larger than the actual thickness in an effective manner, and a rich design expression with a sense of luxury can be achieved.

In the decorative layered body 10 in the first embodiment, the profiled layer 20 has a lens structure. The inclined surfaces 26A are lens surfaces. The connection surfaces 26B are rising surfaces.

In the decorative layered body 10 in the first embodiment, the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) satisfy the following formulas:

$$R_{SCI}(E) \leq 12\%,$$

$$R_{SCE}(E) \leq 6\%,$$

and

$$1.5 \leq R_{SCI}(E) / R_{SCE}(E) \leq 6.$$

In this case, the apparent thickness of the decorative layered body 10 can be perceived so as to be much larger than the actual thickness, and a rich design expression with a sense of luxury can be achieved.

The decorative layered body 10 in the first embodiment further includes a transmittance adjusting layer 40 for adjusting visible light transmittance. The transmittance adjusting layer 40 is disposed outward of the profiled layer 20 on a side of the one surface 11 side of the decorative layered body 10.

In this case, the total light reflectance and the diffuse light reflectance can be easily adjusted.

The decorative layered body 10 in the first embodiment further includes a brightness adjusting layer 30 covering the profiled surface 20a of the profiled layer 20. The brightness adjusting layer 30 is a reflective layer.

In this case, a reflective interface corresponding to the relief structure 25 can be easily formed between the brightness adjusting layer 30 and a layer adjacent to the brightness adjusting layer 30 (e.g., the profiled layer 20 or a filling layer 50). Moreover, the total light reflectance and the diffuse light reflectance can be easily adjusted.

The decorative layered body 10 in the first embodiment further includes a brightness adjusting layer 30 that covers the profiled surface 20a of the profiled layer 20. The brightness adjusting layer 30 is a refractive index modulation layer having a refractive index different from the refractive index of the profiled surface 20a.

In this case, a reflective interface corresponding to the relief structure 25 can be easily formed between the profiled layer 20 and the brightness adjusting layer 30. Moreover, the total light reflectance and the diffuse light reflectance can be easily adjusted.

The decorative layered body 10 in the first embodiment further include a brightness adjusting layer 30 and a filling layer 50. The brightness adjusting layer 30 covers the profiled surface 20a of the profiled layer 20. A surface of the brightness adjusting layer 30 that is opposite to its surface facing the profiled layer 20 has a surface relief corresponding to the relief structure 25 of the profiled surface 20a. The filling layer 50 fills in the surface relief of the brightness adjusting layer 30. The brightness adjusting layer 30 is a refractive index modulation layer having a refractive index different from the refractive index of the filling layer 50.

In this case, a reflective interface corresponding to the relief structure 25 can be easily formed between the profiled layer 20 and the filling layer 50. Moreover, the total light reflectance and the diffuse light reflectance can be easily adjusted.

The decorative layered body 10 in the first embodiment further includes a brightness adjusting layer 30 that covers the profiled surface 20a of the profiled layer 20. The brightness adjusting layer 30 contains a high refractive index material.

In this case, a reflective interface corresponding to the relief structure 25 can be easily formed between the brightness adjusting layer 30 and a layer adjacent to the brightness adjusting layer 30 (e.g., the profiled layer 20 or the filling layer 50). Moreover, the total light reflectance and the diffuse light reflectance can be easily adjusted.

In the decorative layered body 10 in the first embodiment, the high refractive index material includes titanium oxide, zirconium oxide, or silicon oxide.

In this case, the difference between the refractive index of the brightness adjusting layer 30 and the refractive index of the layer adjacent to the brightness adjusting layer 30 (e.g., the profiled layer 20 or the filling layer 50) can be sufficiently large. Therefore, a richer design expression can be achieved.

The decorative layered body 10 in the first embodiment further includes a brightness adjusting layer 30 that covers the profiled surface 20a of the profiled layer 20. The brightness adjusting layer 30 contains a pigment and/or a dye.

In this case, a reflective interface corresponding to the relief structure 25 can be easily formed between the brightness adjusting layer 30 and a layer adjacent to the brightness adjusting layer 30 (e.g., the profiled layer 20 or the filling layer 50). Moreover, the total light reflectance and the diffuse light reflectance can be easily adjusted. In addition, a color corresponding to the pigment and/or the dye can be imparted to the decorative layered body 10.

In the decorative layered body 10 in the first embodiment, the profiled layer 20 contains a pigment and/or a dye.

In this case, a reflective interface corresponding to the relief structure 25 can be easily formed between the profiled layer 20 and a layer adjacent to the profiled layer 20 (e.g., the filling layer 50). Moreover, the total light reflectance and the diffuse light reflectance can be easily adjusted. In addition, a color corresponding to the pigment and/or the dye can be imparted to the decorative layered body 10.

In the decorative layered body 10 in the first embodiment, the pigment is a light reflective pigment or a light absorptive pigment.

In the decorative layered body 10 in the first embodiment, the pigment includes carbon black, an inorganic pigment, a phthalocyanine-based pigment, a quinacridone-based pigment, an isoindolinone-based pigment, a condensed azo-based pigment, a dioxazine-based pigment, an iron oxide pigment, or a composite metal oxide pigment.

The decorative layered body 10 in the first embodiment further includes a brightness adjusting layer 30 that covers the profiled surface 20a of the profiled layer 20. A surface of the brightness adjusting layer 30 that is opposite to its surface facing the profiled layer 20 has a surface relief corresponding to the relief structure 25 of the profiled surface 20a.

In this case, a reflective interface corresponding to the relief structure 25 can be easily formed between the brightness adjusting layer 30 and a layer (e.g., the filling layer 50) adjacent to the surface of the brightness adjusting layer 30 that is opposite to its surface facing the profiled layer 20. Moreover, the total light reflectance and the diffuse light reflectance can be easily adjusted.

In this case, the average thickness of the brightness adjusting layer 30 may be less than or equal to 50% of the height H25 of the relief structure 25.

The decorative layered body 10 in the first embodiment further includes a brightness adjusting layer 30 and an additional brightness adjusting layer 62. The brightness adjusting layer 30 covers the profiled surface 20a of the profiled layer 20. The additional brightness adjusting layer 62 is disposed between the other surface 12 of the decorative layered body 10 and both the brightness adjusting layer 30 and the profiled layer 20.

In this case, the total light reflectance and the diffuse light reflectance can be adjusted not only by the brightness adjusting layer 30 but also by the additional brightness adjusting layer 62.

The transfer sheet 70 in the first embodiment includes a substrate 72 and the decorative layered body 10. With the transfer sheet 70, a decorative member 3 including the decorative layered body 10 can be easily produced.

In the transfer sheet 70 in the first embodiment, the decorative layered body 10 includes a release layer 55 that forms a surface of the decorative layered body 10 that is in contact with the substrate 72 (the surface is the front surface 11 in the example shown in Fig. 13F). In this case, the decorative layered body 10 can be easily separated from the substrate 72.

One decorative member 3 in the first embodiment includes a molded portion 65 and the decorative layered body 10. The decorative layered body 10 covers at least part of the molded portion 65. With this decorative member 3, a rich design expression with a sense of luxury can be achieved.

The mobile body 1 in the first embodiment includes the decorative layered body 10. With this mobile body 1, a rich design expression with a sense of luxury can be achieved.

Another decorative member 3 in the first embodiment includes a decorative layered body 10. The decorative layered body 10 includes a profiled layer 20. The profiled layer 20 has a profiled surface 20a having a relief structure 25 formed thereon. The decorative layered body 10 includes at least one unit optical element 13. The unit optical element 13 reflects, refracts, and/or diffracts incident light according to the relief structure 25. In the unit optical element 13, the profiled surface 20a includes a plurality of inclined surfaces 26A and a plurality of connection surfaces 26B connecting adjacent ones of the inclined surfaces 26A. The plurality of inclined surfaces 26A are arranged in a direction toward a reference line L extending in a normal direction Dn normal to the decorative layered body 10. The plurality of inclined surfaces 26A are inclined toward the reference line L. An angle $\theta A$ is the angle of an inclined surface 26A with respect to the normal direction Dn. An angle $\theta B$ is the angle of a connection surface 26B with respect to the normal direction Dn. The angle $\theta A$ of each inclined surface 26A is larger than the angles $\theta B$ of connection surfaces 26B connected to the inclined surface 26A. Each unit optical element 13 has a central region 13a that is a region including the corresponding reference line L. Each unit optical element 13 has an outer region 13b. The outer region 13b of the unit optical element 13 is located between the central region 13a of the unit optical element 13 and its edge portion 13c in a direction in which the inclined surfaces 26A and the connection surfaces 26B are arranged.

The total light reflectance and the diffuse light reflectance measured from a front surface 3a side of the decorative member 3 according to JIS Z 8722:2009 in a region that overlaps the outer region 13b when the decorative layered body 10 is viewed in plan are referred to as outer total light reflectance ($R_{SCI}(O)$) and outer diffuse light reflectance ($R_{SCE}(O)$), respectively. In this case, the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \leq 45\%,$$

$$R_{SCE}(O) \leq 40\%,$$

and

$$1.1 \leq R_{SCI}(O) / R_{SCE}(O) \leq 18.$$

In this case, the apparent thickness of the decorative layered body 10 can be perceived so as to be larger than the actual thickness in an effective manner, and a rich design expression with a sense of luxury can be achieved.

In the decorative member 3 in the first embodiment, the profiled layer 20 has a lens structure. In this case, the inclined surfaces 26A are lens surfaces, and the connection surfaces 26B are rising surfaces.

In the decorative member 3 in the first embodiment, the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \leq 12\%,$$

$$R_{SCE}(O) \leq 8.5\%,$$

and

$$1.4 \leq R_{SCI}(O) / R_{SCE}(O) \leq 8.$$

In this case, the apparent thickness of the decorative layered body 10 can be perceived so as to be much larger than the actual thickness, and a rich design expression with a sense of luxury can be achieved.

In the decorative member 3 in the first embodiment, the diffuse light reflectance measured from the front surface 3a side of the decorative member 3 according to JIS Z 8722:2009 in a region that overlaps the central region 13a of the unit optical element 13 when the decorative layered body 10 is viewed in plan is referred to as central diffuse light reflectance ($R_{SCE}(C)$). In this case, the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.9.$$

In this case, the apparent thickness of the decorative layered body 10 can be perceived so as to be larger than the actual thickness in an effective manner, and a rich design expression with a sense of luxury can be achieved.

In the decorative member 3 in the first embodiment, the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.7.$$

In this case, the apparent thickness of the decorative layered body 10 can be perceived so as to be much larger than the actual thickness, and a rich design expression with a sense of luxury can be achieved.

Another decorative member 3 in the first embodiment includes a decorative layered body 10. The decorative layered body 10 includes a profiled layer 20. The profiled layer 20 has a profiled surface 20a having a relief structure 25 formed thereon. The decorative layered body 10 includes at least one unit optical element 13. The unit optical element 13 reflects, refracts, and/or diffracts incident light according to the relief structure 25. In the unit optical element 13, the profiled surface 20a includes a plurality of inclined surfaces 26A and a plurality of connection surfaces 26B connecting adjacent ones of the inclined surfaces 26A. The plurality of inclined surfaces 26A are arranged in a direction toward a reference line L extending in a normal direction Dn normal to the decorative layered body 10. The plurality of inclined surfaces 26A are inclined toward the reference line L. An angle θA is the angle of an inclined surface 26A with respect to the normal direction Dn. An angle θB is the angle of a connection surface 26B with respect to the normal direction Dn. The angle θA of each inclined surface 26A is larger than the angles θB of connection surfaces 26B connected to the inclined surface 26A. Each unit optical element 13 has a central region 13a including the reference line L. Each unit optical element 13 has an outer region 13b. The outer region 13b of the unit optical element 13 is located between the central region 13a of the unit optical element 13 and its edge portion 13c in a direction in which the inclined surfaces 26A and the connection surfaces 26B are arranged.

The diffuse light reflectance measured from the front surface 3a side of the decorative member 3 according to JIS Z 8722:2009 in a region that overlaps the outer region 13b when the decorative layered body 10 is viewed in plan is referred to as outer diffuse light reflectance ($R_{SCE}(O)$). The diffuse light reflectance measured from the front surface 3a side according to JIS Z 8722:2009 in a region that overlaps the central region 13a when the decorative layered body 10 is viewed in plan is referred to as central diffuse light reflectance ($R_{SCE}(C)$). In this case, the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.9.$$

In this case, the apparent thickness of the decorative layered body 10 can be perceived so as to be larger than the actual thickness in an effective manner, and a rich design expression with a sense of luxury can be achieved.

In the decorative member 3 in the first embodiment, the profiled layer 20 has a lens structure. The inclined surfaces 26A are lens surfaces. The connection surfaces 26B are rising surfaces.

In the decorative member 3 in the first embodiment, the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.7.$$

In this case, the apparent thickness of the decorative layered body 10 can be perceived so as to be much larger than the actual thickness, and a rich design expression with a sense of luxury can be achieved.

Another decorative member 3 in the first embodiment includes a decorative layered body 10. The decorative layered body 10 includes a profiled layer 20. The profiled layer 20 has a profiled surface 20a having a relief structure 25 formed thereon. The decorative layered body 10 includes at least one unit optical element 13. The unit optical element 13 reflects, refracts, and/or diffracts incident light according to the relief structure 25. In the unit optical element 13, the profiled surface 20a includes a plurality of inclined surfaces 26A and a plurality of connection surfaces 26B connecting adjacent ones of the inclined surfaces 26A. The plurality of inclined surfaces 26A are arranged in a direction toward a reference line L extending in a normal direction Dn normal to the decorative layered body 10. The plurality of inclined surfaces 26A are inclined toward the reference line L. An angle $\theta A$ is the angle of an inclined surface 26A with respect to the normal direction Dn. An angle $\theta B$ is the angle of a connection surface 26B with respect to the normal direction Dn. The angle $\theta A$ of each inclined surface 26A is larger than the angles $\theta B$ of connection surfaces 26B connected to the inclined surface 26A.

The total light reflectance and the diffuse light reflectance measured from a front surface 3a side of the decorative member 3 according to JIS Z 8722:2009 in a region that includes at least 40% of the unit optical element 13 when the decorative layered body 10 is viewed in plan are referred to as overall total light reflectance ($R_{SCI}(E)$) and overall diffuse light reflectance ($R_{SCE}(E)$), respectively. In this case, the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) satisfy the following formulas:

$$R_{SCI}(E) \leq 35\%,$$

$$R_{SCE}(E) \leq 25\%,$$

and

$$1.3 \leq R_{SCI}(E) / R_{SCE}(E) \leq 15.$$

In this case, the apparent thickness of the decorative layered body 10 can be perceived so as to be larger than the actual thickness in an effective manner, and a rich design expression with a sense of luxury can be achieved.

In the decorative member 3 in the first embodiment, the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) satisfy the following formulas:

$$R_{SCI}(E) \leq 12\%,$$

$$R_{SCE}(E) \leq 6\%,$$

and

$$1.5 \leq R_{SCI}(E) / R_{SCE}(E) \leq 6.$$

In this case, the apparent thickness of the decorative layered body 10 can be perceived so as to be much larger than the actual thickness, and a rich design expression with a sense of luxury can be achieved.

The decorative member 3 in the first embodiment includes a molded portion 65. The molded portion 65 is disposed outward of the decorative layered body 10 on the front surface 3a side of the decorative member 3. The molded portion 65 adjusts visible light transmittance.

In this case, the total light reflectance and the diffuse light reflectance can be easily adjusted.

In the decorative member 3 in the first embodiment, the decorative layered body 10 further includes a transmittance adjusting layer 40 for adjusting the visible light transmittance. The transmittance adjusting layer 40 is disposed outward to the profiled layer 20 on the front surface 3a side of the decorative member 3.

In this case, the total light reflectance and the diffuse light reflectance can be easily adjusted.

In the decorative member 3 in the first embodiment, the decorative layered body 10 further includes a brightness adjusting layer 30 that covers the profiled surface 20a of the profiled layer 20. The brightness adjusting layer 30 is a reflective layer.

In this case, a reflective interface corresponding to the relief structure 25 can be easily formed between the brightness adjusting layer 30 and a layer adjacent to the brightness adjusting layer 30 (e.g., the profiled layer 20 or a filling layer 50). Moreover, the total light reflectance and the diffuse light reflectance can be easily adjusted.

In the decorative member 3 in the first embodiment, the decorative layered body 10 further includes a brightness adjusting layer 30 that covers the profiled surface 20a of the profiled layer 20. The brightness adjusting layer 30 is a refractive index modulation layer having a refractive index different from the refractive index of the profiled surface 20a.

In this case, a reflective interface corresponding to the relief structure 25 can be easily formed between the profiled layer 20 and the brightness adjusting layer 30. Moreover, the total light reflectance and the diffuse light reflectance can be easily adjusted.

In the decorative member 3 in the first embodiment, the decorative layered body 10 further includes a brightness adjusting layer 30 and a filling layer 50. The brightness adjusting layer 30 covers the profiled surface 20a of the profiled layer 20. A surface of the brightness adjusting layer 30 that is opposite to its surface facing the profiled layer 20 has a surface relief corresponding to the relief structure 25 of the profiled surface 20a. The filling layer 50 fills in the surface relief of the brightness adjusting layer 30. The brightness adjusting layer 30 is a refractive index modulation layer having a refractive index different from the refractive index of the filling layer 50.

In this case, a reflective interface corresponding to the relief structure 25 can be easily formed between the profiled layer 20 and the filling layer 50. Moreover, the total light reflectance and the diffuse light reflectance can be easily adjusted.

In the decorative member 3 in the first embodiment, the decorative layered body 10 further includes a brightness adjusting layer 30 that covers the profiled surface 20a of the profiled layer 20. The brightness adjusting layer 30 contains a high refractive index material.

In this case, a reflective interface corresponding to the relief structure 25 can be easily formed between the brightness adjusting layer 30 and a layer adjacent to the brightness adjusting layer 30 (e.g., the profiled layer 20 or the filling layer 50). Moreover, the total light reflectance and the diffuse light reflectance can be easily adjusted.

In the decorative member 3 in the first embodiment, the high refractive index material includes titanium oxide, zirconium oxide, or silicon oxide.

In this case, the difference between the refractive index of the brightness adjusting layer 30 and the refractive index of a layer adjacent to the brightness adjusting layer 30 (e.g., the profiled layer 20 or the filling layer 50) can be sufficiently large. Therefore, a rich design expression can be achieved.

In the decorative member 3 in the first embodiment, the decorative layered body 10 further includes a brightness adjusting layer 30 that covers the profiled surface 20a of the profiled layer 20. The brightness adjusting layer 30 contains a pigment and/or a dye.

In this case, a reflective interface corresponding to the relief structure 25 can be easily formed between the brightness adjusting layer 30 and a layer adjacent to the brightness adjusting layer 30 (e.g., the profiled layer 20 or the filling layer 50). Moreover, the total light reflectance and the diffuse light reflectance can be easily adjusted. In addition, a color corresponding to the pigment and/or the dye can be imparted to the decorative layered body 10.

In the decorative member 3 in the first embodiment, the profiled layer 20 contains a pigment and/or a dye.

In this case, a reflective interface corresponding to the relief structure 25 can be easily formed between the profiled layer 20 and a layer adjacent to the profiled layer 20 (e.g., the filling layer 50). Moreover, the total light reflectance and the diffuse light reflectance can be easily adjusted. In addition, a color corresponding to the pigment and/or the dye can be imparted to the decorative layered body 10.

In the decorative member 3 in the first embodiment, the pigment is a light reflective pigment or a light absorptive pigment.

In the decorative member 3 in the first embodiment, the pigment includes carbon black, an inorganic pigment, a phthalocyanine-based pigment, a quinacridone-based pigment, an isoindolinone-based pigment, a condensed azo-based pigment, a dioxazine-based pigment, an iron oxide pigment, or a composite metal oxide pigment.

In the decorative member 3 in the first embodiment, the decorative layered body 10 further includes a brightness adjusting layer 30 that covers the profiled surface 20a of the profiled layer 20. A surface of the brightness adjusting layer 30 that is opposite to its surface facing the profiled layer 20 has a surface relief corresponding to the relief structure 25 of the profiled surface 20a.

In this case, a reflective interface corresponding to the relief structure 25 can be easily formed between the brightness adjusting layer 30 and a layer (e.g., the filling layer 50) adjacent to the surface of the brightness adjusting layer 30 that is opposite to its surface facing the profiled layer 20. Moreover, the total light reflectance and the diffuse light reflectance can be easily adjusted.

In this case, the average thickness of the brightness adjusting layer 30 may be less than or equal to 50% of the height H25 of the relief structure 25.

In the decorative member 3 in the first embodiment, the decorative layered body 10 further includes a brightness adjusting layer 30 and an additional brightness adjusting layer 62. The brightness adjusting layer 30 covers the profiled surface 20a of the profiled layer 20. The additional brightness adjusting layer 62 is disposed outward of the brightness adjusting layer 30 and the profiled layer 20 on a side of the other surface 12 of the decorative layered body 10.

In this case, the total light reflectance and the diffuse light reflectance can be adjusted not only by the brightness adjusting layer 30 but also by the additional brightness adjusting layer 62.

The mobile body 1 in the first embodiment includes the decorative member 3. With this mobile body 1, a rich design expression with a sense of luxury can be achieved.

As described above, one decorative layered body 10 in the second embodiment includes a first layer 20 and a second layer 30. The first layer 20 has a relief structure 25. The second layer 30 covers a relief surface 20a of the relief structure 25. The relief structure 25 includes a plurality of protruding portions 27 and recessed portions 28 formed between the protruding portions 27. The depth of each recessed portion 28 is 10 $\mu$m or less. The width W30 of each recessed portion 28 at the height level of the apexes 271 of the protruding portions 27 is 20 $\mu$m or less. The second layer 30 contains a plurality of particles P. The average particle diameter of the particles P is 300 nm or less.

In this decorative layered body 10, light is reflected by the particles P in the second layer 30, and the design characteristics of the decorative layered body 10 can thereby be improved. Therefore, this decorative layered body 10 need not necessarily include a metal layer. In this case, the formability of the decorative layered body 10 can be improved. In this decorative layered body 10, the size of the particles P is sufficiently smaller than the size of the surface relief of the relief structure 25. Therefore, the particles P in the second layer 30 can be distributed at high density on the relief structure 25. As a result, the particles P in the second layer 30 form a reflective interface reflecting the relief structure 25 between the second layer 30 and a layer adjacent to the second layer 30 (e.g., the profiled layer 20 or a filling layer 50). Therefore, the decorative layered body 10 exerts an optical effect reflecting the relief structure 25 on light entering through a front surface 11 of the decorative layered body 10. Since the size of the surface relief of the relief structure 25 is sufficiently small, a sense of three-dimensionality at least as deep as the depth H26 of each recessed portion 28 (the height of each protruding portion 27) of the relief structure 25 of the first layer 20 can be expressed in an effective manner while the thickness of the first layer 20 (i.e., the decorative layered body 10) is reduced. Therefore, a rich design expression with a sense of luxury can be achieved.

In the decorative layered body 10 in the second embodiment, the depth H26 of each recessed portion 28 is 5 $\mu$m or less, and the average particle diameter of the particles P is 100 nm or less. In this case also, the size of the particles P is sufficiently smaller than the size of the surface relief of the relief structure 25. Therefore, the particles P in the second layer 30 can be distributed at high density on the relief structure 25.

A value obtained by dividing the width W31 of each recessed portion 28 at half the depth of the recessed portion 28 by the average particle diameter of the particles P is 15 or more.

In this case, the particles P can be distributed at high density on the bottoms 281 of the recessed portions 28 of the first layer 20 or in the recessed portions 28. With this decorative layered body 10, a design expression precisely reflecting the relief structure 25 can be achieved.

In the decorative layered body 10 in the second embodiment, the second layer 30 further contains a binder resin.

In the decorative layered body 10 in the second embodiment, a surface of the second layer 30 that is opposite to its surface facing the first layer 20 has a surface relief corresponding to the relief structure 25.

In this case, a reflective interface corresponding to the relief structure 25 can be easily formed between the second layer 30 and a layer (e.g., a filling layer 50) adjacent to the surface opposite to the surface facing the first layer 20. Moreover, the total light reflectance and the diffuse light reflectance can be easily adjusted.

In this case, the average thickness of the second layer 30 may be less than or equal to 50% of the height H25 of the relief structure 25.

In the decorative layered body 10 in the second embodiment, the second layer 30 is a brightness adjusting layer. The decorative layered body 10 further includes an additional brightness adjusting layer 62.

In this case, the total light reflectance and the diffuse light reflectance can be adjusted not only by the brightness adjusting layer 30 but also by the additional brightness adjusting layer 62.

Another decorative layered body 10 in the second embodiment includes a layer 20 having a relief structure 25. The relief structure 25 includes a plurality of protruding portions 27 and a plurality of recessed portions 28 formed between the protruding portions 27. The height H27 of each protruding portion 27 is 10 μm or less. Each protruding portion 27 has a base width W32 that is the width of the protruding portion 27 at the height level of bottoms 281 of the recessed portions 28. Among the plurality of protruding portions 27, the base width W32 of a protruding portion 27 having the smallest base width W32 is 20 μm or less. The layer 20 contains a plurality of particles P. The average particle diameter of the particles P is 300 nm or less.

In this decorative layered body 10, the particles P in the layer 20 reflect light, and the design characteristics of the decorative layered body 10 can thereby be improved. Therefore, this decorative layered body 10 need not necessarily include a metal layer. In this case, the formability of the decorative layered body 10 can be improved. In this decorative layered body 10, the size of the particles P is smaller than the size of the surface relief of the relief structure 25. Therefore, the particles P can be distributed even in narrow portions of the protruding portions 27 of the layer 20. As a result, the particles P can be distributed at high density in the relief structure 25 (in other words, in the protruding portions 27). Since the particles P are distributed at high density in the relief structure 25, the decorative layered body 10 can display a shade or contrast reflecting the relief structure 25. More specifically, the decorative layered body 10 can reflect the light entering a unit optical element 13 by the particles P in the profiled layer 20 with an intensity reflecting the relief structure 25. Therefore, the decorative layered body 10 exerts an optical effect reflecting the relief structure 25 on the light entering through the front surface 11 of the decorative layered body 10. The size of the surface relief of the relief structure 25 is sufficiently small. Therefore, a sense of three-dimensionality at least as deep as the height H25 of the relief structure 25 of the layer 20 can be displayed effectively while the thickness of the layer 20 (i.e., the decorative layered body 10) is reduced. In this manner, a rich design expression with a sense of luxury can be achieved. Moreover, the decorative layered body 10 can display a different design depending on the direction from which the decorative layered body 10 is observed.

In the decorative layered body 10 in the second embodiment, the height of each protruding portion 27 is 5 μm or less. The average particle diameter of the particles P is 100 nm or less.

In this case also, the size of the particles P is sufficiently smaller than the size of the surface relief of the relief structure 25. Therefore, the particles P in the second layer 30 can be distributed at high density on the relief structure 25.

In the decorative layered body 10 in the second embodiment, a value obtained by dividing the width of each protruding portion 27 at half the height of the protruding portion by the average particle diameter of the particles is 15 or more.

In this case, the particles P can be distributed at high density up to the apex 271 of each protruding portion 27. With this decorative layered body 10, a design expression precisely reflecting the relief structure 25 can be achieved.

In the decorative layered body 10 in the second embodiment, the layer 20 further contains a binder resin.

In the decorative layered body 10 in the second embodiment, the decorative layered body 10 includes at least one unit optical element 13. The unit optical element 13 reflects, refracts, and/or diffracts incident light according to the relief structure 25. In the unit optical element 13, the relief surface 20a of the relief structure includes a plurality of inclined surfaces 26A and a plurality of connection surfaces 26B connecting adjacent ones of the inclined surfaces 26A. The plurality of inclined surfaces 26A are arranged in a direction toward a reference line L extending in a normal direction Dn normal to the decorative layered body 10. The plurality of inclined surfaces 26A are inclined toward the reference line L. An angle θA is the angle of an inclined surface 26A with respect to the normal direction Dn. An angle θB is the angle of a connection surface 26B with respect to the normal direction Dn. The angle θA of each inclined surface 26A is larger than the angles θB of connection surfaces 26B connected to the inclined surface 26A.

With this decorative layered body 10, a sense of three-dimensionality (a sense of depth) at least as deep as the height H25 of the relief structure 25 can be expressed. In this manner, a sense of three-dimensionality as thick as or above the layer 20 can be expressed while the thickness of the layer 20 is reduced, and a rich design expression with a sense of luxury can be achieved.

In the decorative layered body 10 in the second embodiment, the relief structure 25 is a lens structure. In this case, the inclined surfaces 26A are lens surfaces, and the connection surfaces 26B are rising surfaces.

In the decorative layered body 10 in the second embodiment, the relief structure 25 includes a group of parallel straight lines or a group of parallel curved lines when the decorative layered body 10 is viewed in plan.

With this decorative layered body 10 also, a sense of three-dimensionality (a sense of depth) at least as deep as the height H25 of the relief structure 25 can be expressed. In this manner, a sense of three-dimensionality as thick as or above the layer 20 can be expressed while the thickness of the layer 20 is reduced, and a rich design expression with a sense of luxury can be achieved.

In the decorative layered body 10 in the second embodiment, the relief structure 25 forms an embossed hologram.

With this decorative layered body 10 also, a sense of three-dimensionality (a sense of depth) at least as deep as the height H25 of the relief structure 25 can be expressed. In this manner, a sense of three-dimensionality as thick as or above the thickness of the layer 20 can be expressed while the thickness of the layer 20 is reduced, and a rich design expression with a sense of luxury can be achieved.

In the decorative layered body 10 in the second embodiment, the particles P are formed of a high refractive index material.

In this case, a reflective interface corresponding to the relief structure 25 can be easily formed between the layer 20 or 30 containing the particles P and a layer adjacent to the layer 20 or 30 (e.g., between the layer 20 and a layer 50 or between the layer 30 and the layer 20 or 50). Moreover, the total light reflectance and the diffuse light reflectance can be easily adjusted.

In the decorative layered body 10 in the second embodiment, the high refractive index material includes titanium oxide, zirconium oxide, or silicon oxide.

In this case, the difference between the refractive index of the layer 20 or 30 containing the particles P and the refractive index of a layer adjacent to the layer 20 or 30 can be sufficiently large. Therefore, a richer design expression can be achieved.

In the decorative layered body 10 in the second embodiment, the particles P include a pigment and/or a dye.

In this case, a reflective interface corresponding to the relief structure 25 can be easily formed between the layer 20 or 30 containing the particles P and a layer adjacent to the layer 20 or 30 (e.g., between the layer 20 and the layer 50 or between the layer 30 and the layer 20 or 50). Moreover, the total light reflectance and the diffuse light reflectance can be easily adjusted. In addition, a color corresponding to the color of the pigment and/or the dye can be imparted to the layer 20 or 30 containing the particles P.

In the decorative layered body 10 in the second embodiment, the pigment is a light reflective pigment or a light absorptive pigment.

In the decorative layered body 10 in the second embodiment, the particles P include carbon black, an inorganic pigment, an iron oxide pigment, or a composite metal oxide pigment.

The transfer sheet 7 in the second embodiment includes a substrate 72 and the decorative layered body 10. With this transfer sheet 70, a decorative member 3 including the decorative layered body 10 can be easily produced.

The decorative member 3 in the second embodiment includes a molded portion 65 and the decorative layered body 10. The decorative layered body 10 covers at least part of the molded portion 65. With this decorative member 3, a rich design expression with a sense of luxury can be achieved.

The mobile body 1 in the second embodiment includes the decorative layered body 10. In this mobile body 1, a rich design expression with a sense of luxury can be achieved.

Decorative layered bodies 10 in the first and second embodiments each include a profiled layer 20 having a relief structure 25 and a brightness adjusting layer 30 that covers a relief surface 20a of the relief structure 25. The relief structure 25 includes a plurality of protruding portions 27 and recessed portions 28 formed between the plurality of protruding portions 27. The thickness of the brightness adjusting layer 30 is smaller than the depth H26 of each recessed portion 28. The brightness adjusting layer 30 has a nonuniform thickness.

In this case, the reflectance of each decorative layered body 10 can be reduced.

The decorative layered bodies 10 in the first and second embodiments each include at least one unit optical element 13. The unit optical element 13 reflects, refracts, and/or diffracts incident light according to the relief structure 25. In the unit optical element 13, the relief surface 20a of the relief structure 25 includes a plurality of inclined surfaces 26A and a plurality of connection surfaces 26B connecting adjacent ones of the inclined surfaces 26A. The plurality of inclined surfaces 26A are arranged in a direction toward a reference line L extending in a normal direction Dn normal to the decorative layered body 10. The plurality of inclined surfaces 26A are inclined toward the reference line L. An angle $\theta A$ is the angle of an inclined surface 26A with respect to the normal direction Dn. An angle $\theta B$ is the angle of a connection surface 26B with respect to the normal direction Dn. The angle $\theta A$ of each inclined surface 26A is larger than the angles $\theta B$ of connection surfaces 26B connected to the inclined surface 26A. The brightness adjusting layer 30 on one of the inclined surfaces 26A has a first thickness t1. The brightness adjusting layer 30 on another one of the inclined surfaces 26A has a second thickness t2. The first thickness t1 differs from the second thickness t2.

In the decorative layered bodies 10 in the first and second embodiments, the relief structure 25 is a lens structure. In this case, the inclined surfaces 26A are lens surfaces. The connection surfaces 26B are rising surfaces.

In the decorative layered bodies 10 in the first and second embodiments, the absolute difference between the first thickness t1 and the second thickness t2 is 100 nm or more. In this case, the reflectance of the brightness adjusting layer 30 can be effectively reduced.

The decorative layered bodies 10 in the first and second embodiments each include at least one unit optical element 13. The unit optical element 13 reflects, refracts, and/or diffracts incident light according to the relief structure 25. In the unit optical element 13, the relief surface 20a of the relief structure 25 includes a plurality of inclined surfaces 26A and a plurality of connection surfaces 26B connecting adjacent ones of the inclined surfaces 26A. The plurality of inclined surfaces 26A are arranged in a direction toward a reference line L extending in a normal direction Dn normal to the decorative layered body 10. The plurality of inclined surfaces 26A are inclined toward the reference line L. An angle $\theta A$ is

70

the angle of an inclined surface 26A with respect to the normal direction Dn. An angle θB is the angle of a connection surface 26B with respect to the normal direction Dn. The angle θA of each inclined surface 26A is larger than the angles θB of connection surfaces 26B connected to the inclined surface 26A. The thickness of the brightness adjusting layer 30 on one of the inclined surfaces 26A is nonuniform.

In the decorative layered bodies 10 in the first and second embodiments, the relief structure 25 is a lens structure. In this case, the inclined surfaces 26A are lens surfaces. The connection surfaces 26B are rising surfaces.

In the first, the absolute difference between the maximum and minimum values of the thickness of the brightness adjusting layer 30 on one of the inclined surfaces 26A is 100 nm or more. In this case, the reflectance of the brightness adjusting layer 30 can be effectively reduced.

In the decorative layered bodies 10 in the first and second embodiments, a surface of the brightness adjusting layer 30 that is opposite to its surface facing the profiled layer 20 has a surface relief corresponding to the relief structure 25.

In this case, a reflective interface corresponding to the relief structure 25 can be easily formed between the brightness adjusting layer 30 and a layer (e.g., a filling layer 50) adjacent to the surface of the brightness adjusting layer 30 that is opposite to its surface facing the profiled layer 20. Moreover, the total light reflectance and the diffuse light reflectance can be easily adjusted.

In this case, the average thickness of the brightness adjusting layer 30 may be less than or equal to 50% of the height H25 of the relief structure 25.

In the decorative layered body 10 in the second embodiment, the decorative layered body 10 further includes an additional brightness adjusting layer 62.

In this case, the total light reflectance and the diffuse light reflectance can be adjusted not only by the brightness adjusting layer 30 but also by the additional brightness adjusting layer 62.

The transfer sheet 70 in the second embodiment includes a substrate 72 and the decorative layered body 10. With this transfer sheet 70, a decorative member 3 including the decorative layered body 10 can be easily produced.

The decorative member 3 in the second embodiment includes a molded portion 65 and the decorative layered body 10. The decorative layered body 10 covers at least part of the molded portion 65. With this decorative member 3, a rich design expression with a sense of luxury can be achieved.

The mobile body 1 in the second embodiment includes the decorative layered body 10. In this mobile body 1, a rich design expression with a sense of luxury can be achieved.

The modifications of the first embodiment have been described. However, of course, some of the components disclosed in the first embodiment and the modifications can be appropriately combined as needed. Moreover, some components may be eliminated from the components disclosed in the first embodiment and the modifications.

The modifications of the second embodiment have been described. However, of course, some of the components disclosed in the second embodiment and the modifications can be appropriately combined as needed. Moreover, some components may be eliminated from the components disclosed in the second embodiment and the modifications.

Moreover, the first embodiment and the second embodiment can be combined together. Some of the components disclosed in the first embodiment and the modifications thereof and the second embodiment and the modifications thereof can be appropriately combined as needed. Moreover, some components may be eliminated from the components disclosed in the first embodiment and the modifications thereof and the second embodiment and the modifications thereof.

Reference Signs List

3: decorative member, 10: decorative layered body, 13: unit optical element, 20: profiled layer, 23: unit profiled element, 25: relief structure, 26A: inclined surface, 26B: connection surface, 27: protruding portion, 28: recessed portion, 30: brightness adjusting layer, 40: transmittance adjusting layer, 41: unit adjusting element, 50: filling layer, 55: functional layer, 57: substrate layer, 58: backer layer, 60: masking layer, 62: additional brightness adjusting layer, 65: molded portion, P: particle

**Claims**

1. A decorative layered body (10) comprising a profiled layer (20) having a profiled surface (20a) on which a relief structure (25) is formed,

   wherein the decorative layered body (10) includes at least one unit optical element (13) that reflects, refracts, and/or diffracts incident light according to the relief structure (25),
   wherein, in the at least one unit optical element (13), the profiled surface (20a) includes a plurality of inclined surfaces (26A) arranged in a direction toward a reference line (L) extending in a normal direction normal to the decorative layered body (10) and inclined toward the reference line (L) and a plurality of connection surfaces

(26B) connecting adjacent ones of the inclined surfaces (26A),

wherein an angle ($\theta$A) of each of the inclined surfaces (26A) with respect to the normal direction (Dn) is larger than angles ($\theta$B), with respect to the normal direction (Dn), of corresponding ones of the connection surfaces (26B) that are connected to the each of the inclined surfaces (26A),

wherein each of the at least one unit optical element (13) includes a central region (13a) that is a region including the reference line (L) and an outer region (13b) that is located between the central region (13a) and an edge portion of the each of the at least one unit optical element (13) in a direction in which the inclined surfaces (26A) and the connection surfaces (26B) are arranged,

wherein a total light reflectance and a diffuse light reflectance measured from a side of one surface (11) of the decorative layered body (10) according to JIS Z 8722:2009 in the outer region (13b) are referred to as outer total light reflectance ($R_{SCI}$(O)) and outer diffuse light reflectance ($R_{SCE}$(O)), respectively, and wherein the outer total light reflectance ($R_{SCI}$(O)), the outer diffuse light reflectance ($R_{SCE}$(O)), and the ratio ($R_{SCI}$(O) / $R_{SCE}$(O)) of the outer total light reflectance ($R_{SCI}$(O)) to the outer diffuse light reflectance ($R_{SCE}$(O)) satisfy the following formulas:

$$R_{SCI}(O) \leq 45\%,$$

$$R_{SCE}(O) \leq 40\%,$$

and

$$1.1 \leq R_{SCI}(O) / R_{SCE}(O) \leq 18.$$

2. The decorative layered body (10) according to claim 1, wherein the profiled layer (20) has a lens structure, wherein the inclined surfaces (26A) are lens surfaces, and wherein the connection surfaces (26B) are rising surfaces.

3. The decorative layered body (10) according to claim 1 or 2, wherein the outer total light reflectance ($R_{SCI}$(O)), the outer diffuse light reflectance ($R_{SCE}$(O)), and the ratio ($R_{SCI}$(O) / $R_{SCE}$(O)) of the outer total light reflectance ($R_{SCI}$(O)) to the outer diffuse light reflectance ($R_{SCE}$(O)) satisfy the following formulas:

$$R_{SCI}(O) \leq 12\%,$$

$$R_{SCE}(O) \leq 8.5\%,$$

and

$$1.4 \leq R_{SCI}(O) / R_{SCE}(O) \leq 8.$$

4. The decorative layered body (10) according to any one of claims 1 to 3, wherein a diffuse light reflectance measured from a side of the one surface (11) of the decorative layered body (10) according to JIS Z 8722:2009 in the central region (13a) is referred to as central diffuse light reflectance ($R_{SCE}$(C)), and wherein the ratio ($R_{SCE}$(C) / $R_{SCE}$(O)) of the central diffuse light reflectance ($R_{SCE}$(C)) to the outer diffuse light reflectance ($R_{SCE}$(O)) satisfies the following formula:

$$0.1 \leq R_{SCE}(C) / R_{SCE}(O) \leq 0.9.$$

5. The decorative layered body (10) according to claim 4, wherein the ratio ($R_{SCE}$(C) / $R_{SCE}$(O)) of the central diffuse light reflectance ($R_{SCE}$(C)) to the outer diffuse light reflectance ($R_{SCE}$(O)) satisfies the following formula:

$$0.1 \leq R_{SCE}(C) / R_{SCE}(O) \leq 0.7.$$

6. A decorative layered body (10) comprising a profiled layer (20) having a profiled surface (20a) on which a relief structure (25) is formed,

wherein the decorative layered body (10) includes at least one unit optical element (13) that reflects, refracts, and/or diffracts incident light according to the relief structure (25),

wherein, in the at least one unit optical element (13), the profiled surface (20a) includes a plurality of inclined surfaces (26A) arranged in a direction toward a reference line (L) extending in a normal direction (Dn) normal to the decorative layered body (10) and inclined toward the reference line (L) and a plurality of connection surfaces (26B) connecting adjacent ones of the inclined surfaces (26A),

wherein an angle ($\theta$A) of each of the inclined surfaces (26A) with respect to the normal direction (Dn) is larger than angles ($\theta$B), with respect to the normal direction (Dn), of corresponding ones of the connection surfaces (26B) that are connected to the each of the inclined surfaces (26A),

wherein each of the at least one unit optical element (13) includes a central region (13a) that is a region including the reference line (L) and an outer region (13b) that is located between the central region (13a) and an edge portion of the each of the at least one unit optical element (13) in a direction in which the inclined surfaces (26A) and the connection surfaces (26B) are arranged,

wherein a diffuse light reflectance measured from one side of the decorative layered body (10) according to JIS Z 8722:2009 in the outer region (13b) is referred to as outer diffuse light reflectance ($R_{SCE}$(O)), wherein a diffuse light reflectance measured from a side of the one surface (11) according to JIS Z 8722:2009 in the central region (13a) is referred to as central diffuse light reflectance ($R_{SCE}$(C)), and wherein the ratio ($R_{SCE}$(C) / $R_{SCE}$(O)) of the central diffuse light reflectance ($R_{SCE}$(C)) to the outer diffuse light reflectance ($R_{SCE}$(O)) satisfies the following formula:

$$0.1 \leq R_{SCE}(C) / R_{SCE}(O) \leq 0.9.$$

7. The decorative layered body (10) according to claim 6, wherein the profiled layer (20) has a lens structure, wherein the inclined surfaces (26A) are lens surfaces, and wherein the connection surfaces (26B) are rising surfaces.

8. The decorative layered body (10) according to claim 6 or 7, wherein the ratio ($R_{SCE}$(C) / $R_{SCE}$(O)) of the central diffuse light reflectance ($R_{SCE}$(C)) to the outer diffuse light reflectance ($R_{SCE}$(O)) satisfies the following formula:

$$0.1 \leq R_{SCE}(C) / R_{SCE}(O) \leq 0.7.$$

9. A decorative layered body (10) comprising a profiled layer (20) having a profiled surface (20a) on which a relief structure (25) is formed,

wherein the decorative layered body (10) includes at least one unit optical element (13) that reflects, refracts, and/or diffracts incident light according to the relief structure (25),

wherein, in the at least one unit optical element (13), the profiled surface (20a) includes a plurality of inclined surfaces (26A) arranged in a direction toward a reference line (L) extending in a normal direction (Dn) normal to the decorative layered body (10) and inclined toward the reference line (L) and a plurality of connection surfaces (26B) connecting adjacent ones of the inclined surfaces (26A),

wherein an angle ($\theta$A) of each of the inclined surfaces (26A) with respect to the normal direction (Dn) is larger than angles ($\theta$B), with respect to the normal direction (Dn), of corresponding ones of the connection surfaces (26B) that are connected to the each of the inclined surfaces (26A),

wherein a total light reflectance and a diffuse light reflectance measured from one surface (11) of the decorative layered body (10) according to JIS Z 8722:2009 in a region that includes at least 40% of the at least one unit optical element (13) when the decorative layered body (10) is viewed in plan are referred to as overall total light reflectance ($R_{SCI}$(E)) and overall diffuse light reflectance ($R_{SCE}$(E)), respectively, and wherein the overall total light reflectance ($R_{SCI}$(E)), the overall diffuse light reflectance ($R_{SCE}$(E)), and the ratio ($R_{SCI}$(E) / $R_{SCE}$(E)) of the overall total light reflectance ($R_{SCI}$(E)) to the overall diffuse light reflectance ($R_{SCE}$(E)) satisfy the following formulas:

$$R_{SCI}(E) \leq 35\%,$$

$$R_{SCE}(E) \leq 25\%,$$

and

$$1.3 \leq R_{SCI}(E) / R_{SCE}(E) \leq 15.$$

10. The decorative layered body (10) according to claim 9, wherein the profiled layer (20) has a lens structure, wherein the inclined surfaces (26A) are lens surfaces, and wherein the connection surfaces (26B) are rising surfaces.

11. The decorative layered body (10) according to claim 9 or 10, wherein the overall total light reflectance ($R_{SCI}(E)$), the overall diffuse light reflectance ($R_{SCE}(E)$), and the ratio ($R_{SCI}(E) / R_{SCE}(E)$) of the overall total light reflectance ($R_{SCI}(E)$) to the overall diffuse light reflectance ($R_{SCE}(E)$) satisfy the following formulas:

$$R_{SCI}(E) \leq 12\%,$$

$$R_{SCE}(E) \leq 6\%,$$

and

$$1.5 \leq R_{SCI}(E) / R_{SCE}(E) \leq 6.$$

12. The decorative layered body (10) according to any one of claims 1 to 11, further comprising a transmittance adjusting layer (40) that is disposed outward of the profiled layer (20) on a side of the one surface (11) of the decorative layered body (10) and adjusts visible light transmittance.

13. The decorative layered body (10) according to any one of claims 1 to 12, further comprising a brightness adjusting layer (30) that covers the profiled surface (20a) of the profiled layer (20),
wherein the brightness adjusting layer (30) is a reflective layer.

14. The decorative layered body (10) according to any one of claims 1 to 12, further comprising a brightness adjusting layer (30) that covers the profiled surface (20a) of the profiled layer (20),
wherein the brightness adjusting layer (30) is a refractive index modulation layer having a refractive index different from a refractive index of the profiled surface (20a).

15. The decorative layered body (10) according to any one of claims 1 to 12, further comprising:

a brightness adjusting layer (30) that covers the profiled surface (20a) of the profiled layer (20) and whose surface opposite to a surface facing the profiled layer (20) has a surface relief corresponding to the relief structure (25) of the profiled surface (20a); and
a filling layer (50) that fills in the surface relief of the brightness adjusting layer (30),
wherein the brightness adjusting layer (30) is a refractive index modulation layer having a refractive index different from a refractive index of the filling layer (50).

16. The decorative layered body (10) according to any one of claims 1 to 12, further comprising a brightness adjusting layer (30) that covers the profiled surface (20a) of the profiled layer (20),
wherein the brightness adjusting layer (30) contains a high refractive index material.

17. The decorative layered body (10) according to claim 16, wherein the high refractive index material includes titanium oxide, zirconium oxide, or silicon oxide.

18. The decorative layered body (10) according to any one of claims 1 to 12, further comprising a brightness adjusting layer (30) that covers the profiled surface (20a) of the profiled layer (20),
wherein the brightness adjusting layer (30) contains a pigment and/or a dye.

19. The decorative layered body (10) according to any one of claims 1 to 18, wherein the profiled layer (20) contains a pigment and/or a dye.

20. The decorative layered body (10) according to claim 18 or 19, wherein the pigment is a light reflective pigment or a light absorptive pigment.

21. The decorative layered body (10) according to any one of claims 18 to 20, wherein the pigment includes carbon black, an inorganic pigment, a phthalocyanine-based pigment, a quinacridone-based pigment, an isoindolinone-based pigment, a condensed azo-based pigment, a dioxazine-based pigment, an iron oxide pigment, or a composite metal oxide pigment.

22. The decorative layered body (10) according to any one of claims 16 to 21, further comprising a brightness adjusting layer (30) that covers the profiled surface (20a) of the profiled layer (20),
wherein a surface of the brightness adjusting layer (30) that is opposite to a surface facing the profiled layer (20) has a surface relief corresponding to the relief structure (25).

23. The decorative layered body (10) according to claim 22, wherein the brightness adjusting layer (30) has an average thickness less than or equal to 50% of a height of the relief structure (25).

24. The decorative layered body (10) according to any one of claims 1 to 23, further comprising:

a brightness adjusting layer (30) that covers the profiled surface (20a) of the profiled layer (20); and
an additional brightness adjusting layer (62) disposed outward of the brightness adjusting layer (30) and the profiled layer (20) on a side of the other surface (12) of the decorative layered body (10).

25. A transfer sheet (70) comprising:

a substrate (72); and
the decorative layered body (10) according to any one of claims 1 to 24.

26. The transfer sheet (70) according to claim 25, wherein the decorative layered body (10) includes a release layer (55) that forms a surface of the decorative layered body (10) that is in contact with the substrate (72).

27. A decorative member (3) comprising:

a molded portion (65); and
the decorative layered body (10) according to any one of claims 1 to 24, the decorative layered body (10) covering at least part of the molded portion (65).

28. A mobile body (1) comprising the decorative layered body (10) according to any one of claims 1 to 24.

29. A decorative member (3) comprising a decorative layered body (10) including a profiled layer (20),

wherein the profiled layer (20) has a profiled surface (20a) on which a relief structure (25) is formed,
wherein the decorative layered body (10) includes at least one unit optical element (13) that reflects, refracts, and/or diffracts incident light according to the relief structure (25),
wherein, in the at least one unit optical element (13), the profiled surface (20a) includes a plurality of inclined surfaces (26A) arranged in a direction toward a reference line (L) extending in a normal direction (Dn) normal to the decorative layered body (10) and inclined toward the reference line (L) and a plurality of connection surfaces (26B) connecting adjacent ones of the inclined surfaces (26A),
wherein an angle ($\theta$A) of each of the inclined surfaces (26A) with respect to the normal direction (Dn) is larger than angles ($\theta$B), with respect to the normal direction (Dn), of corresponding ones of the connection surfaces (26B) that are connected to the each of the inclined surfaces (26A),
wherein each of the at least one unit optical element (13) includes a central region (13a) that is a region including the reference line (L) and an outer region (13b) that is located between the central region (13a) and an edge portion of the each of the at least one unit optical element (13) in a direction in which the inclined surfaces (26A) and the connection surfaces (26B) are arranged,
wherein a total light reflectance and a diffuse light reflectance measured from a front surface (3a) of the decorative member (3) according to JIS Z 8722:2009 in a region that overlaps the outer region (13b) when the decorative layered body (10) is viewed in plan are referred to as outer total light reflectance ($R_{SCI}(O)$) and outer diffuse light reflectance ($R_{SCE}(O)$), respectively, and wherein the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \leq 45\%,$$

$$R_{SCE}(O) \leq 40\%,$$

and

$$1.1 \leq R_{SCI}(O) / R_{SCE}(O) \leq 18.$$

30. The decorative member (3) according to claim 29, wherein the profiled layer (20) has a lens structure, wherein the inclined surfaces (26A) are lens surfaces, and wherein the connection surfaces (26B) are rising surfaces.

31. The decorative member (3) according to claim 29 or 30, wherein the outer total light reflectance ($R_{SCI}(O)$), the outer diffuse light reflectance ($R_{SCE}(O)$), and the ratio ($R_{SCI}(O) / R_{SCE}(O)$) of the outer total light reflectance ($R_{SCI}(O)$) to the outer diffuse light reflectance ($R_{SCE}(O)$) satisfy the following formulas:

$$R_{SCI}(O) \leq 12\%,$$

$$R_{SCE}(O) \leq 8.5\%,$$

and

$$1.4 \leq R_{SCI}(O) / R_{SCE}(O) \leq 8.$$

32. The decorative member (3) according to any one of claims 29 to 31, wherein a diffuse light reflectance measured from the front surface (3a) of the decorative member (3) according to JIS Z 8722:2009 in a region that overlaps the central region (13a) of the at least one unit optical element (13) when the decorative layered body (10) is viewed in plan is referred to as central diffuse light reflectance ($R_{SCE}(C)$), and wherein the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.9.$$

33. The decorative member (3) according to claim 32, wherein the ratio ($R_{SCE}(C) / R_{SCE}(O)$) of the central diffuse light reflectance ($R_{SCE}(C)$) to the outer diffuse light reflectance ($R_{SCE}(O)$) satisfies the following formula:

$$0.1 \leq R_{SCE}(C) / R_{SCE}(O) \leq 0.7.$$

34. A decorative member (3) comprising a decorative layered body (10) including a profiled layer (20),

wherein the profiled layer (20) has a profiled surface (20a) on which a relief structure (25) is formed,
wherein the decorative layered body (10) includes at least one unit optical element (13) that reflects, refracts, and/or diffracts incident light according to the relief structure (25),
wherein, in the at least one unit optical element (13), the profiled surface (20a) includes a plurality of inclined surfaces (26A) arranged in a direction toward a reference line (L) extending in a normal direction (Dn) normal to the decorative layered body (10) and inclined toward the reference line (L) and a plurality of connection surfaces (26B) connecting adjacent ones of the inclined surfaces (26A),
wherein an angle ($\theta$A) of each of the inclined surfaces (26A) with respect to the normal direction (Dn) is larger than angles ($\theta$B), with respect to the normal direction (Dn), of corresponding ones of the connection surfaces (26B) that are connected to the each of the inclined surfaces (26A),
wherein each of the at least one unit optical element (13) includes a central region (13a) that is a region including the reference line (L) and an outer region (13b) that is located between the central region (13a) and an edge portion of the each of the at least one unit optical element (13) in a direction in which the inclined surfaces (26A) and the connection surfaces (26B) are arranged,
wherein a diffuse light reflectance measured from a front surface (3a) of the decorative member (3) according to JIS Z 8722:2009 in a region that overlaps the outer region (13b) when the decorative layered body (10) is viewed in plan is referred to as outer diffuse light reflectance ($R_{SCE}(O)$), wherein a diffuse light reflectance measured from the front surface side according to JIS Z 8722:2009 in a region that overlaps the central region (13a) when the decorative layered body (10) is viewed in plan is referred to as central diffuse light reflectance ($R_{SCE}(C)$), and wherein the ratio ($R_{SCE}$(C) / $R_{SCE}$(O)) of the central diffuse light reflectance ($R_{SCE}$(C)) to the outer diffuse light reflectance ($R_{SCE}$(O)) satisfies the following formula:

$$0.1 \le R_{SCE}(C) / R_{SCE}(O) \le 0.9.$$

35. The decorative member (3) according to claim 34, wherein the profiled layer (20) has a lens structure,
wherein the inclined surfaces (26A) are lens surfaces, and wherein the connection surfaces (26B) are rising surfaces.

36. The decorative member (3) according to claim 34 or 35, wherein the ratio ($R_{SCE}$(C) / $R_{SCE}$(O)) of the central diffuse light reflectance ($R_{SCE}$(C)) to the outer diffuse light reflectance ($R_{SCE}$(O)) satisfies the following formula:

$$0.1 \le R_{SCE}(C) / R_{SCE}(O) \le 0.7.$$

37. A decorative member (3) comprising a decorative layered body (10) including a profiled layer (20),

wherein the profiled layer (20) has a profiled surface (20a) on which a relief structure (25) is formed,
wherein the decorative layered body (10) includes at least one unit optical element (13) that reflects, refracts, and/or diffracts incident light according to the relief structure (25),
wherein, in the at least one unit optical element (13), the profiled surface (20a) includes a plurality of inclined surfaces (26A) arranged in a direction toward a reference line (L) extending in a normal direction (Dn) normal to the decorative layered body (10) and inclined toward the reference line (L) and a plurality of connection surfaces (26B) connecting adjacent ones of the inclined surfaces (26A),
wherein an angle ($\theta$A) of each of the inclined surfaces (26A) with respect to the normal direction (Dn) is larger than angles ($\theta$B), with respect to the normal direction (Dn), of corresponding ones of the connection surfaces (26B) that are connected to the each of the inclined surfaces (26A),
wherein a total light reflectance and a diffuse light reflectance measured from a front surface (3a) of the decorative member (3) according to JIS Z 8722:2009 in a region that includes at least 40% of the at least one unit optical element (13) when the decorative layered body (10) is viewed in plan are referred to as overall total light reflectance ($R_{SCI}$(E)) and overall diffuse light reflectance ($R_{SCE}$(E)), respectively, and wherein the overall total light reflectance ($R_{SCI}$(E)), the overall diffuse light reflectance ($R_{SCE}$(E)), and the ratio ($R_{SCI}$(E) / $R_{SCE}$(E)) of the overall total light reflectance ($R_{SCI}$(E)) to the overall diffuse light reflectance ($R_{SCE}$(E)) satisfy the following formulas:

$$R_{SCI}(E) \le 35\%,$$

$$R_{SCE}(E) \le 25\%,$$

and

$$1.3 \le R_{SCI}(E) / R_{SCE}(E) \le 15.$$

38. The decorative member (3) according to claim 37, wherein the overall total light reflectance ($R_{SCI}$(E)), the overall diffuse light reflectance ($R_{SCE}$(E)), and the ratio ($R_{SCI}$(E) / $R_{SCE}$(E)) of the overall total light reflectance ($R_{SCI}$(E)) to the overall diffuse light reflectance ($R_{SCE}$(E)) satisfy the following formulas:

$$R_{SCI}(E) \le 12\%,$$

$$R_{SCE}(E) \le 6\%,$$

and

$$1.5 \le R_{SCI}(E) / R_{SCE}(E) \le 6.$$

39. The decorative member (3) according to any one of claims 29 to 38, further comprising a molded portion (65) disposed outward of the decorative layered body (10) on a side of the front surface (3a) of the decorative member (3), wherein the molded portion (65) adjusts visible light transmittance.

40. The decorative member (3) according to any one of claims 29 to 38, wherein the decorative layered body (10) further includes a transmittance adjusting layer (40) that is disposed outward of the profiled layer (20) on a side of the front surface (3a) of the decorative member (3) and adjusts visible light transmittance.

41. The decorative member (3) according to any one of claims 29 to 40, wherein the decorative layered body (10) further include a brightness adjusting layer (30) that covers the profiled surface (20a) of the profiled layer (20), and wherein the brightness adjusting layer (30) is a reflective layer.

42. The decorative member (3) according to any one of claims 29 to 40, wherein the decorative layered body (10) further includes a brightness adjusting layer (30) that covers the profiled surface (20a) of the profiled layer (20), and wherein the brightness adjusting layer (30) is a refractive index modulation layer having a refractive index different from a refractive index of the profiled layer (20).

43. The decorative member (3) according to any one of claims 29 to 40, wherein the decorative layered body (10) further includes:

a brightness adjusting layer (30) that covers the profiled surface (20a) of the profiled layer (20) and whose surface opposite to a surface facing the profiled layer (20) has a surface relief corresponding to the relief structure (25) of the profiled surface (20a); and
a filling layer (50) that fills in the surface relief of the brightness adjusting layer (30), and
wherein the brightness adjusting layer (30) is a refractive index modulation layer having a refractive index different from a refractive index of the filling layer (50).

44. The decorative member (3) according to any one of claims 29 to 40, wherein the decorative layered body (10) further includes a brightness adjusting layer (30) that covers the profiled surface (20a) of the profiled layer (20), and wherein the brightness adjusting layer (30) contains a high refractive index material.

45. The decorative member (3) according to claim 44, wherein the high refractive index material includes titanium oxide, zirconium oxide, or silicon oxide.

46. The decorative member (3) according to any one of claims 29 to 40, wherein the decorative layered body (10) further includes a brightness adjusting layer (30) that covers the profiled surface (20a) of the profiled layer (20), and wherein the brightness adjusting layer (30) contains a pigment and/or a dye.

47. The decorative member (3) according to any one of claims 29 to 40, wherein the profiled layer (20) contains a pigment and/or a dye.

48. The decorative member (3) according to claim 46 or 47, wherein the pigment is a light reflective pigment or a light absorptive pigment.

49. The decorative member (3) according to any one of claims 46 to 48, wherein the pigment includes carbon black, an inorganic pigment, a phthalocyanine-based pigment, a quinacridone-based pigment, an isoindolinone-based pigment, a condensed azo-based pigment, a dioxazine-based pigment, an iron oxide pigment, or a composite metal oxide pigment.

50. The decorative member (3) according to any one of claims 44 to 49, wherein the decorative layered body (10) further includes a brightness adjusting layer (30) that covers the profiled surface (20a) of the profiled layer (20), and wherein a surface of the brightness adjusting layer (30) that is opposite to a surface facing the profiled layer (20) has a surface relief corresponding to the relief structure (25).

51. The decorative member (3) according to claim 50, wherein the brightness adjusting layer (30) has an average thickness less than or equal to 50% of a height of the relief structure (25).

52. The decorative member (3) according to any one of claims 29 to 51, wherein the decorative layered body (10) further includes:

a brightness adjusting layer (30) that covers the profiled surface (20a) of the profiled layer (20); and
an additional brightness adjusting layer (62) disposed outward of the brightness adjusting layer (30) and the profiled layer (20) on a side of the other surface (12) of the decorative layered body (10).

53. A mobile body (1) comprising the decorative member (3) according to any one of claims 29 to 52.

54. A decorative layered body (10) comprising:

a first layer (20) having a relief structure (25); and
a second layer (30) that covers a relief surface (20a) of the relief structure (25),
wherein the relief structure (25) includes a plurality of protruding portions (27) and recessed portions (28) formed between the plurality of protruding portions (27),
wherein a depth of each of the recessed portions (28) is 10 $\mu$m or less,
wherein a width of each of the recessed portions (28) at a height level of apexes (271) of the protruding portions (27) is 20 $\mu$m or less,
wherein the second layer (30) contains a plurality of particles (P), and
wherein the particles (P) have an average particle diameter of 300 nm or less.

55. The decorative layered body (10) according to claim 54, wherein the depth of each of the recessed portions (28) is 5 $\mu$m or less, and
wherein the average particle diameter of the particles (P) is 100 nm or less.

56. The decorative layered body (10) according to claim 54 or 55, wherein a value obtained by dividing the width of each of the recessed portions (28) at half the depth of the each of the recessed portions (28) by the average particle diameter of the particles (P) is 15 or more.

57. The decorative layered body (10) according to any one of claims 54 to 56, wherein the second layer (30) further contains a binder resin.

58. The decorative layered body (10) according to any one of claims 54 to 57, wherein a surface of the second layer (30) that is opposite to a surface facing the first layer (20) has a surface relief corresponding to the relief structure (25).

59. The decorative layered body (10) according to claim 58, wherein the second layer (30) has an average thickness less than or equal to 50% of a height of the relief structure (25).

60. The decorative layered body (10) according to any one of claims 54 to 59, wherein the second layer (30) is a brightness adjusting layer (30), and
wherein the decorative layered body (10) further comprises an additional brightness adjusting layer (62).

61. A decorative layered body (10) comprising

a layer having a relief structure (25),
wherein the relief structure (25) includes a plurality of protruding portions (27) and a plurality of recessed portions (28) formed between the plurality of protruding portions (27),
wherein a height of each of the protruding portions (27) is 10 $\mu$m or less,
wherein each of the protruding portions (27) has a base width that is a width of the each of the protruding portions (27) at a height level of bottoms (281) of the recessed portions (28),
wherein the base width of a protruding portion (27) with the smallest base width among the plurality of protruding portions (27) is 20 $\mu$m or less,
wherein the layer contains a plurality of particles (P), and
wherein the particles (P) have an average particle diameter of 300 nm or less.

62. The decorative layered body (10) according to claim 61, wherein the height of each of the protruding portions (27) is 5 $\mu$m or less, and
wherein the average particle diameter of the particles (P) is 100 nm or less.

63. The decorative layered body (10) according to claim 61 or 62, wherein a value obtained by dividing the width of each of the protruding portions (27) at half the height of the each of the protruding portions (27) by the average particle diameter of the particles (P) is 15 or more.

64. The decorative layered body (10) according to any one of claims 61 to 63, wherein the layer further contains a binder resin.

65. The decorative layered body (10) according to any one of claims 54 to 64, wherein the decorative layered body (10) includes at least one unit optical element (13) that reflects, refracts, and/or diffracts incident light according to the relief structure (25),

wherein, in the at least one unit optical element (13), a relief surface (20a) of the relief structure (25) includes a plurality of inclined surfaces (26A) arranged in a direction toward a reference line (L) extending in a normal direction (Dn) normal to the decorative layered body (10) and inclined toward the reference line (L) and a plurality of connection surfaces (26B) connecting adjacent ones of the inclined surfaces (26A),

wherein an angle ($\theta$A) of each of the inclined surfaces (26A) with respect to the normal direction (Dn) is larger than angles ($\theta$B), with respect to the normal direction (Dn), of corresponding ones of the connection surfaces (26B) that are connected to the each of the inclined surfaces (26A).

66. The decorative layered body (10) according to claim 65, wherein the relief structure (25) is a lens structure,

wherein the inclined surfaces (26A) are lens surfaces, and
wherein the connection surfaces (26B) are rising surfaces.

67. The decorative layered body (10) according to any one of claims 54 to 64, wherein the relief structure (25) includes a group of parallel straight lines or a group of parallel curved lines when the decorative layered body (10) is viewed in plan.

68. The decorative layered body (10) according to any one of claims 54 to 64, wherein the relief structure (25) forms an embossed hologram.

69. The decorative layered body (10) according to any one of claims 54 to 68, wherein the particles (P) include a high refractive index material.

70. The decorative layered body (10) according to claim 69, wherein the high refractive index material includes titanium oxide, zirconium oxide, or silicon oxide.

71. The decorative layered body (10) according to any one of claims 54 to 68, wherein the particles (P) include a pigment and/or a dye.

72. The decorative layered body (10) according to claim 71, wherein the pigment is a light reflective pigment or a light absorptive pigment.

73. The decorative layered body (10) according to claim 71 or 72, wherein the particles (P) include carbon black, an inorganic pigment, an iron oxide pigment, or a composite metal oxide pigment.

74. A transfer sheet (70) comprising:

a substrate (72); and
the decorative layered body (10) according to any one of claims 54 to 73.

75. A decorative member (3) comprising:

the decorative layered body (10) according to any one of claims 54 to 73; and
a molded portion (65) facing one surface (11) of the decorative layered body (10).

76. A mobile body (1) comprising the decorative layered body (10) according to any one of claims 54 to 73.

77. A decorative layered body (10) comprising:

a profiled layer (20) having a relief structure (25); and

a brightness adjusting layer (30) that covers a relief surface (20a) of the relief structure (25),

wherein the relief structure (25) includes a plurality of protruding portions (27) and a plurality of recessed portions (28) formed between the plurality of protruding portions (27),

wherein the brightness adjusting layer (30) has a thickness smaller than a depth of each of the recessed portions (28), and

wherein the thickness of the brightness adjusting layer (30) is nonuniform.

78. The decorative layered body (10) according to claim 77, wherein the decorative layered body (10) includes at least one unit optical element (13) that reflects, refracts, and/or diffracts incident light according to the relief structure (25),

wherein, in the at least one unit optical element (13), the relief surface (20a) of the relief structure (25) includes a plurality of inclined surfaces (26A) arranged in a direction toward a reference line (L) extending in a normal direction (Dn) normal to the decorative layered body (10) and inclined toward the reference line (L) and a plurality of connection surfaces (26B) connecting adjacent ones of the inclined surfaces (26A),

wherein an angle ($\theta$A) of each of the inclined surfaces (26A) with respect to the normal direction (Dn) is larger than angles ($\theta$B), with respect to the normal direction (Dn), of corresponding ones of the connection surfaces (26B) that are connected to the each of the inclined surfaces (26A),

wherein the brightness adjusting layer (30) on one of the inclined surfaces (26A) has a first thickness (t1),

wherein the brightness adjusting layer (30) on another one of the inclined surfaces (26A) has a second thickness (t2), and

wherein the first thickness (t1) differs from the second thickness (t2).

79. The decorative layered body (10) according to claim 78, wherein the relief structure (25) is a lens structure,

wherein the inclined surfaces (26A) are lens surfaces, and

wherein the connection surfaces (26B) are rising surfaces.

80. The decorative layered body (10) according to claim 78 or 79, wherein the absolute difference between the first thickness (t1) and the second thickness (t2) is 100 nm or more.

81. The decorative layered body (10) according to claim 77, wherein the decorative layered body (10) includes at least one unit optical element (13) that reflects, refracts, and/or diffracts incident light according to the relief structure (25),

wherein, in the at least one unit optical element (13), the relief surface (20a) of the relief structure (25) includes a plurality of inclined surfaces (26A) arranged in a direction toward a reference line (L) extending in a normal direction (Dn) normal to the decorative layered body (10) and inclined toward the reference line (L) and a plurality of connection surfaces (26B) connecting adjacent ones of the inclined surfaces (26A),

wherein an angle ($\theta$A) of each of the inclined surfaces (26A) with respect to the normal direction (Dn) is larger than angles ($\theta$B), with respect to the normal direction (Dn), of corresponding ones of the connection surfaces (26B) that are connected to the each of the inclined surfaces (26A), and

wherein the thickness of the brightness adjusting layer (30) on one of the inclined surfaces (26A) is nonuniform.

82. The decorative layered body (10) according to claim 79, wherein the relief structure (25) is a lens structure,

wherein the inclined surfaces (26A) are lens surfaces, and

wherein the connection surfaces (26B) are rising surfaces.

83. The decorative layered body (10) according to claim 81 or 82, wherein the absolute difference between maximum and minimum values of the thickness of the brightness adjusting layer (30) on the one of the inclined surfaces (26A) is 100 nm or more.

84. The decorative layered body (10) according to any one of claims 80 to 82, wherein a surface of the brightness adjusting layer (30) that is opposite to a surface facing the profiled layer (20) has a surface relief corresponding to the relief structure (25).

85. The decorative layered body (10) according to claim 84, wherein the brightness adjusting layer (30) has an average thickness less than or equal to 50% of a height of the relief structure (25).

86. The decorative layered body (10) according to any one of claims 77 to 85, further comprising an additional brightness adjusting layer (62).

87. A transfer sheet (70) comprising:

a substrate (72); and
the decorative layered body (10) according to any one of claims 77 to 86.

88. A decorative member (3) comprising:

the decorative layered body (10) according to any one of claims 77 to 86; and
a molded portion (65) facing one surface (11) of the decorative layered body (10).

89. A mobile body (1) comprising the decorative layered body (10) according to any one of claims 77 to 86.

【FIG. 1】

1

II

II

2,3,10

【FIG. 2】

【FIG. 3】

【FIG. 4】

【FIG. 5】

【FIG. 6】

【FIG. 7】

【FIG. 8】

【FIG. 9】

【FIG. 1 0】

【FIG. 1 1】

【FIG. 1 2 】

【FIG. 1 3 A】

【FIG. 1 3 B】

【FIG. 1 3 C】

【FIG. 1 3 D】

20b

72
55
40
29(20)
100

26B  26A  25  20a

Dz,Dn

Dy  → Dx

【FIG. 1 3 E】

20b

72
55
40
20
30

20a

Dz,Dn

Dy  → Dx

【FIG. 1 3 F】

【FIG. 1 4】

【FIG. 1 5】

10

13,23

11

55

24

20

22

30

50

26,26A          25          26,26B    12

Dz,Dn

Dx

Dy

【FIG. 1 6】

10

13,23

11

55
22
30
50

26,26A    25    26,26B    12

Dz,Dn

Dx

Dy

【FIG. 1 7】

【FIG. 1 8 A】

57

40

Dz,Dn

Dy ⊗ → Dx

【FIG. 1 8 B】

20b

57

40

29(20)

26B   26A   25   20a

Dz,Dn

Dy ⊗ → Dx

【FIG. 1 8 C】

20b

57

40

20

30

26B 26A 25 20a

Dz,Dn

Dy ⊗ → Dx

【FIG. 1 8 D】

11 20b 10

57

40

20

30

50

26B 26A 25 20a 12

Dz,Dn

Dy ⊗ → Dx

【FIG. 1 9】

【FIG. 2 0】

【FIG. 2 1】

【FIG. 2 2 A】

【FIG. 2 2 B】

EP 4 545 290 A1

【FIG. 2 3】

109

【FIG. 2 4】

【FIG. 25】

【FIG. 2 6 A】

20a  25  26A  26B

29(20)

57

20b

Dz,Dn

Dy ⊗ →Dx

【FIG. 2 6 B】

20a  25  26A  26B

30

20

57

20b

Dz,Dn

Dy ⊗ →Dx

【FIG. 2 6 C】

20a  25  26A  26B

50
30
20

57

Dz,Dn

20b

Dy ⊗ → Dx

【FIG. 2 6 D】

10

11  20a  25  26A  26B

40
50
30
20

57

20b

12

Dz,Dn

Dy ⊗ → Dx

【FIG. 2 7】

【FIG. 28 A】

20a  25  26A  26B

29(20)
55
72

20b

Dz,Dn

Dy ⊗ → Dx

【FIG. 28 B】

20a  25  26A  26B

30
20
55
72

20b

Dz,Dn

Dy ⊗ → Dx

[FIG. 2 8 C]

20a  25  26A  26B

50
30
20
55
72

20b

Dz,Dn

Dy ⊗ →Dx

[FIG. 2 8 D]

20a  25  26A  26B

40
50
30
20
55
72

20b

Dz,Dn

Dy ⊗ →Dx

【FIG. 28E】

20a  25  26A  26B

59
40
50
30
20
55
72

20b

Dz,Dn

Dy ⊗ → Dx

【FIG. 28F】

70

20a  25  26A  26B  11

58
59
40
50
30
20
55
72

10

20b  12

Dz,Dn

Dy ⊗ → Dx

【FIG. 2 9】

【FIG. 30】

【FIG. 3 1 A】

【FIG. 3 1 B】

【FIG. 3 2】

【FIG. 3 3】

【FIG. 3 4】

【FIG. 3 5】

【FIG. 3 6 A】

57
40

Dz,Dn

Dx
Dy

【FIG. 3 6 B】

20b

57
40
20

20a

Dz,Dn

Dx
Dy

【FIG. 3 6 C】

【FIG. 3 6 D】

【FIG. 3 7】

【FIG. 3 8】

【FIG. 3 9 A】

【FIG. 3 9 B】

【FIG. 4 O】

【FIG. 4 1】

【FIG. 4 2】

【FIG. 4 3 】

【FIG. 4 4 】

【FIG. 4 5】

【FIG. 4 6】

【FIG. 4 7】

【FIG. 4 8】

## INTERNATIONAL SEARCH REPORT

| International application No. |
| --- |
| **PCT/JP2023/021434** |

**A. CLASSIFICATION OF SUBJECT MATTER**

*B32B 7/023*(2019.01)i; *B29C 45/14*(2006.01)i; *B29C 51/08*(2006.01)i; *B32B 3/30*(2006.01)i; *B32B 27/00*(2006.01)i; *B60R 13/00*(2006.01)i; *G02B 3/08*(2006.01)i; *G02B 5/02*(2006.01)i; *G02B 5/10*(2006.01)i; *G02B 5/32*(2006.01)i
FI:   B32B7/023; B29C45/14; B29C51/08; B32B27/00 E; B60R13/00; G02B3/08; G02B5/02 B; G02B5/02 C; G02B5/32; B32B3/30; G02B5/10 A

According to International Patent Classification (IPC) or to both national classification and IPC

**B. FIELDS SEARCHED**

Minimum documentation searched (classification system followed by classification symbols)

B32B3/30; B32B7/023; B32B27/00; B29C45/14; B29C51/08; B60R13/00; G02B3/08; G02B5/02; G02B5/10; G02B5/32

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2001-4839 A (NIPPON MITSUBISHI OIL CORP.) 12 January 2001 (2001-01-12) claims, paragraphs [0001]-[0010], [0020]-[0030], [0042]-[0111] | 1, 2, 12, 19-21, 25-30, 39, 40, 47-49, 53 |
| A | | 3-5, 13-18, 22-24, 31-33, 41-46, 50-52 |
| Y | JP 2015-114464 A (ASAHI KASEI E-MATERIALS CORP.) 22 June 2015 (2015-06-22) claims, paragraphs [0001]-[0018], [0075]-[0118], [0165]-[0167], [0204]-[0287], [0361], [0417]-[0524], fig. 1-3, 11-16 | 1-3, 12, 14, 16-21, 25-31, 39, 40, 42, 44-49, 53 |
| A | | 4-5, 13, 15, 22-24, 32, 33, 41, 43, 50-52 |
| Y | JP 2013-77022 A (SEIKO EPSON CORP.) 25 April 2013 (2013-04-25) paragraphs [0039], [0055]-[0057], fig. 4 | 1-3, 12, 14, 16-21, 25-31, 39, 40, 42, 44-49, 53 |

☑ Further documents are listed in the continuation of Box C.   ☑ See patent family annex.

| | |
| --- | --- |
| * Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **22 August 2023** | **05 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="2" align="center"><strong>INTERNATIONAL SEARCH REPORT</strong></td><td>International application No.<br><strong>PCT/JP2023/021434</strong></td></tr>
</table>

**C. DOCUMENTS CONSIDERED TO BE RELEVANT**

| Category* | Citation of document, with indication, where appropriate, of the relevant passages | Relevant to claim No. |
|---|---|---|
| Y | JP 2002-342969 A (KONICA CORP.) 29 November 2002 (2002-11-29)<br>paragraphs [0014]-[0016], [0028]-[0030], fig. 1, 2 | 1-3, 12, 14, 16-21, 25-31, 39, 40, 42, 44-49, 53 |
| A | JP 2021-160181 A (NITTO DENKO CORP.) 11 October 2021 (2021-10-11)<br>entire text | 1-5, 12-33, 39-53 |
| A | JP 2010-123878 A (DAINIPPON PRINTING CO., LTD.) 03 June 2010 (2010-06-03)<br>entire text | 1-5, 12-33, 39-53 |
| A | JP 2013-525836 A (FLEX LIGHTING II, LLC) 20 June 2013 (2013-06-20)<br>entire text | 1-5, 12-33, 39-53 |
| A | JP 2016-33659 A (SUMITOMO CHEMICAL CO., LTD.) 10 March 2016 (2016-03-10)<br>entire text | 1-5, 12-33, 39-53 |
| A | WO 2017/195697 A1 (ASAHI GLASS CO., LTD.) 16 November 2017 (2017-11-16)<br>entire text | 1-5, 12-33, 39-53 |
| A | US 2019/0331959 A1 (VISTEON GLOBAL TECHNOLOGIES, INC.) 31 October 2019 (2019-10-31)<br>entire text | 1-5, 12-33, 39-53 |
| A | US 2020/0408954 A1 (CORNING INCORPORATED) 31 December 2020 (2020-12-31)<br>entire text | 1-5, 12-33, 39-53 |
| P, A | JP 2023-72971 A (NITTO DENKO CORP.) 25 May 2023 (2023-05-25)<br>entire text | 1-5, 12-33, 39-53 |

Form PCT/ISA/210 (second sheet) (January 2015)

**INTERNATIONAL SEARCH REPORT**

| International application No. |
| --- |
| **PCT/JP2023/021434** |

**Box No. III      Observations where unity of invention is lacking (Continuation of item 3 of first sheet)**

This International Searching Authority found multiple inventions in this international application, as follows:

(i) The number of inventions indicated below in the international application that are set forth in the claims is six, and the claims are classified into
invention 1: claims 1-5, 12-33 and 39-53,
invention 2: claims 6-8 and 34-36,
invention 3: claims 9-11 and 37-38,
invention 4: claims 54-60 and 65-76,
invention 5: claims 61-64, and
invention 6: claims 77-89.

(ii) For the reasons indicated below, this international application is considered to not conform to the requirement for unity of invention (Enforcement Ordinance Article 13 (PCT Rules 13.1, 13.2 and 13.3)).
1. Determination of the main invention
The invention in claim 1 has the STF wherein "where the total reflectance and the diffuse reflectance as measured pursuant to JIS Z 8722:2009 from the side of one surface of the decorated multilayer article in the outer region are respectively designated as outer total reflectance ($R_{SCI}(O)$) and outer diffuse reflectance ($R_{SCE}(O)$), the outer total reflectance ($R_{SCI}(O)$), the outer diffuse reflectance ($R_{SCE}(O)$) and the ratio ($R_{SCI}(O)/R_{SCE}(O)$) of the outer total reflectance ($R_{SCI}(O)$) to the outer diffuse reflectance ($R_{SCE}(O)$) respectively fulfill formulae indicated below: $R_{SCI}(O) \leq 45\%$, $R_{SCE}(O) \leq 40\%$ and $1.1 \leq R_{SCI}(O)/R_{SCE}(O) \leq 18$".
Claims 2-5, 12-33 and 39-53 share the same STF with the above STF, and are thus classified as the main invention.
Claims 6-11, 34-38 and 54-89 do not share a same or corresponding STF with the above STF, and are not inventions that are substantially identical thereto or similarly closely related thereto, and are thus not classified as the main invention.

2. Additional invention 1
Additional invention 1 is identified for claims 6-11, 34-38 and 54-89 remaining after excluding the inventions in the claims classified as the main invention.
The invention in claim 6 has the STF wherein "where the diffuse reflectance as measured pursuant to JIS Z 8722:2009 from one side of the decorated multilayer article in the outer region is designated as outer diffuse reflectance ($R_{SCE}(O)$) and the diffuse reflectance as measured pursuant to JIS Z 8722:2009 from the side of one surface in the central region is designated as central diffuse reflectance ($R_{SCE}(C)$), the ratio ($R_{SCE}(C)/R_{SCE}(O)$) of the central diffuse reflectance ($R_{SCE}(C)$) to the outer diffuse reflectance ($R_{SCE}(O)$) fulfills formula indicated below: $0.1 \leq R_{SCE}(C)/R_{SCE}(O) \leq 0.9$".
Claims 7-8 and 34-36 share the same STF with the STF of claim 6 and are thus classified as additional invention 1.
Claims 9-11, 37-38 and 54-89 do not share a same or corresponding STF with the STF of claim 6, and are not inventions that are substantially identical thereto or similarly closely related thereto, and are thus not classified as the additional invention 1.

3. Additional invention 2
Additional invention 2 is identified for claims 9-11, 37-38 and 54-89 remaining after excluding the inventions in the claims classified as the main invention and the additional invention 1.
The invention in claim 9 has the STF wherein "where the total reflectance and the diffuse reflectance as measured pursuant to JIS Z 8722:2009 from the side of one surface of the decorated multilayer article in the region that includes at least 40% of the unit optical element in a planar view of the decorated multilayer article are respectively designated as the entire total reflectance ($R_{SCI}(E)$) and the entire diffuse reflectance ($R_{SCE}(E)$), the entire total reflectance ($R_{SCI}(E)$), the entire diffuse reflectance ($R_{SCE}(E)$) and the ratio ($R_{SCI}(E)/R_{SCE}(E)$) of the entire total reflectance ($R_{SCI}(E)$) to the entire diffuse reflectance ($R_{SCE}(E)$) respectively fulfill formulae indicated below: $R_{SCI}(E) \leq 35\%$, $R_{SCE}(E) \leq 25\%$ and $1.3 \leq R_{SCI}(E)/R_{SCE}(E) \leq 15$".
Claims 10-11 and 37-38 share the same STF with the STF of claim 9 and are thus classified as additional invention 2.
Claims 54-89 do not share a same or corresponding STF with the STF of claim 9, and are not inventions that are substantially identical thereto or similarly closely related thereto, and are thus not classified as the additional invention 2.

Form PCT/ISA/210 (continuation of first sheet) (January 2015)

## INTERNATIONAL SEARCH REPORT

International application No.

**PCT/JP2023/021434**

| Box No. III | Observations where unity of invention is lacking (Continuation of item 3 of first sheet) |

4. Additional invention 3

Additional invention 3 is identified for claims 54-89 remaining after excluding the inventions in the claims classified as the main invention and the additional inventions 1 and 2.

The invention in claim 54 has the STF, wherein "the recess has a depth of 10 μm or less, the width of the recess at the height position of the top of the projection is 20 μm or less, the second layer comprises multiple particles and the particles have an average diameter of 300 nm or less".

Claims 55-60 and 65-76 share the same STF with the STF of claim 54, and are thus classified as the additional invention 3.

Claims 61-64 and 77-89 do not share a same or corresponding STF with the STF of claim 54, and are not inventions that are substantially identical thereto or similarly closely related thereto, and are thus not classified as the additional invention 3.

5. Additional invention 4

Additional invention 4 is identified for claims 61-64 and 77-89 remaining after excluding the inventions in the claims classified as the main invention and the additional inventions 1, 2 and 3.

The invention in claim 61 has the STF wherein "the projection has a height of 10 μm or less, each projection has a base width that is the width of the projection at the height position of the bottom of the recess, the base width of the projection among said multiple projections that has the smallest base width is 20 μm or less, the layer comprises multiple particles and the particles have an average diameter of 300 nm or less".

Claims 62-64 share the same STF with the STF of claim 61 and are thus classified as the additional invention 4.

Claims 77-89 do not share a same or corresponding STF with the STF of claim 61, and are not inventions that are substantially identical thereto or similarly closely related thereto, and are thus not classified as the additional invention 4.

6. Additional invention 5

Additional invention 5 is identified for claims 77-89 remaining after excluding the inventions in the claims classified as the main invention and the additional inventions 1, 2, 3 and 4.

The invention in claim 77 has the STF wherein "the uneven structure has multiple projections and a recess formed between the multiple projections, the brightness controlling layer has a thickness that is smaller than the depth of the recess and the thickness of the brightness controlling layer is uneven".

Claims 78-89 share the same STF with the STF of claim 77 and are thus classified as the additional invention 5.

7. Number of inventions

From the above, the number of additional inventions is five, and thus, the number of inventions included in the claims is six calculated by adding one, the number of main inventions, to the number of additional inventions.

Form PCT/ISA/210 (continuation of first sheet) (January 2015)

142

## INTERNATIONAL SEARCH REPORT

| International application No. |
|---|
| **PCT/JP2023/021434** |

**Box No. III      Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Invention 1: claims 1-5, 12-33 and 39-53**

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

INTERNATIONAL SEARCH REPORT
Information on patent family members

International application No.

**PCT/JP2023/021434**

| Patent document cited in search report | | | Publication date (day/month/year) | Patent family member(s) | | | Publication date (day/month/year) |
|---|---|---|---|---|---|---|---|
| JP | 2001-4839 | A | 12 January 2001 | (Family: none) | | | |
| JP | 2015-114464 | A | 22 June 2015 | (Family: none) | | | |
| JP | 2013-77022 | A | 25 April 2013 | US | 2008/0187012 | A1 | |
| | | | | paragraphs [0100], [0101], [0151]-[0154], fig. 4 | | | |
| JP | 2002-342969 | A | 29 November 2002 | US | 2003/0002175 | A1 | |
| | | | | paragraphs [0016]-[0019], [0031]-[0035], fig. 1, 2 | | | |
| | | | | KR | 10-2002-0087862 | A | |
| | | | | CN | 1385845 | A | |
| JP | 2021-160181 | A | 11 October 2021 | WO | 2021/201008 | A1 | |
| | | | | TW | 202204153 | A | |
| JP | 2010-123878 | A | 03 June 2010 | (Family: none) | | | |
| JP | 2013-525836 | A | 20 June 2013 | US | 2011/0227487 | A1 | |
| | | | | WO | 2011/130720 | A2 | |
| | | | | EP | 2558775 | A2 | |
| | | | | CA | 2796515 | A | |
| | | | | CN | 102918435 | A | |
| | | | | KR | 10-2013-0054263 | A | |
| | | | | MX | 2012012033 | A | |
| | | | | AU | 2012225244 | A | |
| | | | | CA | 2829388 | A | |
| JP | 2016-33659 | A | 10 March 2016 | CN | 105319624 | A | |
| | | | | KR | 10-2016-0015162 | A | |
| | | | | TW | 201612554 | A | |
| WO | 2017/195697 | A1 | 16 November 2017 | US | 2019/0079379 | A1 | |
| | | | | EP | 3457210 | A1 | |
| | | | | CN | 109073964 | A | |
| US | 2019/0331959 | A1 | 31 October 2019 | (Family: none) | | | |
| US | 2020/0408954 | A1 | 31 December 2020 | WO | 2019/169293 | A1 | |
| | | | | EP | 3759530 | A1 | |
| | | | | TW | 201938508 | A | |
| | | | | CN | 111936891 | A | |
| JP | 2023-72971 | A | 25 May 2023 | (Family: none) | | | |

Form PCT/ISA/210 (patent family annex) (January 2015)

**REFERENCES CITED IN THE DESCRIPTION**

**Patent documents cited in the description**

- JP 6774387 B

- JP 2011056675 A